(19) Europäisches Patentamt
European Patent Office
Office européen des brevets

(11) EP 1 511 099 A1

(12) EUROPEAN PATENT APPLICATION

(43) Date of publication:
02.03.2005 Bulletin 2005/09

(51) Int Cl.[7]: H01M 4/38

(21) Application number: 04255126.7

(22) Date of filing: 25.08.2004

(84) Designated Contracting States:
AT BE BG CH CY CZ DE DK EE ES FI FR GB GR HU IE IT LI LU MC NL PL PT RO SE SI SK TR
Designated Extension States:
AL HR LT LV MK

(30) Priority: 26.08.2003 US 497554 P

(71) Applicant: HERA, Hydrogen Storage Systems, Inc.
Longueuil, Québec J4G 1R9 (CA)

(72) Inventors:
- Liang, Guoxian
  Longueuil Quebec J4M 1Y7 (CA)
- Schulz, Robert
  Ste-Julie Quebec J0L 2S0 (CA)

(74) Representative:
Hedley, Nicholas James Matthew et al
Kilburn & Strode
20 Red Lion Street
London WC1R 4PJ (GB)

# (54) Ca, Mg and Ni containing alloys, method for preparing the same and use thereof for gas phase hydrogen storage

(57) Disclosed are new Ca, Mg and Ni-containing alloys of the general formula:

$$(Ca_c\, Mg_d\, M_e)_b\, (Ni_{1-z} T_z)_a$$

where:

M is at least one metal selected from the group consisting of Y, Ce, La, Pr, Nd, Th, Nd, Ti, V, Zr, Ta, Hf, Sr, Ba and Misch metals;
T is at least one element selected from the group consisting of Al, Zn, Cu, Fe, Co, Mn, Cr, Mo, W, Si, Ga, Ge, In, Sn, Ag, C and B;
a is an integer equal to 2 or 5:
z is a number ranging from 0 to 0.5; and
when a is equal to 2, then $0.9 \leq b \leq 1.1$; and
when a is equal to 5, then either $1,75 \leq b \leq 2.25$ or $0.75 \leq b \leq 1.31$.

These alloys which are of the $AB_2$, $A_2B_5$ or $AB_5$ types, may be single phase or multiphase and are useful for reversibly absorbing hydrogen from a gas phase. Also disclosed is a method for preparing the above alloys.

EP 1 511 099 A1

## Description

### Field of the invention

The present invention is directed to Ca, Mg and Ni-containing alloys. It is also. directed to a method for preparing these alloys and to their use for reversibly absorbing hydrogen from a gas phase.

### Background of the Invention

The use of hydrogen gas as a fuel for PEM fuel cells has received considerable attention in recent years because PEM fuel cells using pure hydrogen can provide high efficiency and ultra clean power. Unfortunately, widespread use of hydrogen energy is not currently feasible because of economic and technological barriers. One of the important barriers is the lack of cost effective, safe hydrogen storage method.

Hydrogen gas is very light. It can be compressed under high pressure and stored in pressurized vessels. It can also be liquefied and stored in liquid form. Hydrogen also reacts with metal or non-metals to form hydrides. Some metal hydrides called "low temperature metal hydrides" are reversible at ambient temperature and pressure. The volumetric density of hydrogen storage in metal hydrides is usually high.

The most serious shortcomings of the reversible metal hydrides and more particularly the low temperature metal hydrides are their low gravimetric storage density and the high cost. For stationary and some mobile applications, the weight of the hydrogen storage tank is not a problem. However, the high cost of conventional low temperature metal hydrides results in too expensive storage devices.

Amongst the known hydrogen storage materials, conventional lanthanum or mischmetal-based alloys of the $AB_5$ type like $LaNi_5$ alloys are inherently expensive because they make use of a rare earth metal. $CaNi_5$ is isomorphic to $LaNi_5$ and has higher storage capacity than that of $LaNi_5$ based hydrides. In the Ca-Ni system, there are four stable compounds, $CaNi_2$, $CaNi_3$, $Ca_2Ni_7$ and $CaNi_5$, but only the $CaNi_5$ has been considered to be of practical interest since the plateau pressures of $CaNi_5$ are adequate for applications. The other three compounds do form very stable hydrides. However, hydrogen can not be extracted at temperatures below 100°C under normal pressure.

In a paper published in 1980 (and identified A in the attached list of references), Osterreicher et al disclosed a $Ca_{0.5}Mg_{0.5}Ni_2$ alloy prepared by liquid phase sintering in a Ta tube. They also disclosed that such a $Ca_{0.5}Mg_{0.5}Ni_2$ alloy can absorb hydrogen to form $Ca_{0.5}Mg_{0.5}Ni_2H_{2.6}$ at 300°K (corresponding to 1.7 wt. %). However, this hydride can only desorbs partially (half of the amount absorbed) at 400°K and 1bar. The desorption isotherm is strongly sloped. According to these authors, the low reversibility of this alloy limits practical applications. However, this publication teaches that substitution of Ca by Mg in $CaNi_2$ is possible. The alloys of the type $Ca_xMg_{1-x}Ni_2$ are predominantly of $CaNi_2$ structure (C15 type) when x is larger or equal to 0.5.

In a recent paper (B) Terashita et al. disclosed a $Ca_xMg_{1-x}Ni_2$ system. Moreover, they presented results of tests made on a $Ca_{0.33}Ng_{0.67}Ni_2$ alloy prepared by high frequency induction melting. Once again, the plateau pressure of this alloy $Ca_{0.33}Mg_{0.67}Ni_2$ is still too low for most hydrogen storage applications and it is impossible to raise the plateau pressure by substituting more Mg for Ca using the induction melt casting method because the $MgNi_2$ phase precipitates. That phase is known for not absorbing hydrogen and consequently the properties deteriorate.

Since Ca and Mg have very high evaporation rate, it is very hard to produce a stoichiometric Ca-Mg-Ni alloy in large quantity. For example, if use is made of a melt casting method, the Mg and Ca alloy in liquid form has to be protected by argon or $SF_6$ because of the rapid oxidization and possible explosion. The composition has to be adjusted by trial and error due to evaporation loss of Mg and Ca. The so-cast alloys usually have very high macro-segregation and micro-segregation. Homogenization by long annealing treatments is required but adds costs to the alloys. In paper A, the Ca-Mg-Ni alloys were synthesized by liquid phase sintering in closed Ta tubes starting from elemental Mg, Ca and Ni at a temperature below 1250°C. Such a method also needs high temperature and long sintering time to reach complete reaction.

Mg-Ca-Ni alloys of the $AB_3$ type have also been synthesized by a powder sintering method. In a recent publication (C), Kadir et al disclosed a $CaMg_2Ni_9$ ternary alloy prepared by sintering fine powder mixtures of $MgNi_2$ and $CaNi_5$. This paper states that the sintering process involved raising the temperature stepwise to 600°C, 850°C and 990°C (in 0.6MPa Ar gas), with set temperature holds for 2-3h. Several attempts were necessary until an optimum composition was found. A slight excess of $CaNi_5$ over the stoichiometric composition was necessary in order to compensate for the evaporative loss of Ca.

Mg and Ca are known to react with all type of ceramic crucible at elevated temperatures and Ni is known to react with refractive metals at high temperatures. Therefore, all the sintering of alloys containing Mg, Ca and Ni were performed so far in Mo or Ta crucible, especially when long sintering times were needed. In practice, this means that the use of this technology would be expensive.

### Summary of the invention

The present invention as claimed hereinafter relates to new Ca, Mg and Ni-containing alloys of the general formula:

$$(Ca_cMg_dM_e)_b(Ni_{1-z}T_z)_a$$

where:

M is at least one metal selected from the group consisting of Y, Ce, La, Pr, Nd, Th, Nd, Ti, V, Zr, Ta, Hf, Sr, Ba and mischmetals;
T is at least one element selected from the group consisting of Al, Zn, Cu, Fe, Co, Mn, Cr, Mo, W, Si, Ga, Ge, In, Sn, Ag, C and B;
a is an integer equal to 2 or 5
z is a number ranging from 0 to 0.5, and

when a is equal to 2, then b, c, d, e are numbers selected so that:

$0.9 \leq b \leq 1.1$
c= 0.4-x,
d= 0.6-y, and
e= x + y, with
$-0.4 \leq y \leq 0.5$
$-0.5 \leq x \leq 0.4$, and
x + y >0;

when a is equal to 5, then b, c, d, e, are numbers selected so that
either
$1.75 \leq b \leq 2.25$
c = 0.4-x,
d = 0.6-y, and
e = x+y, with
$-0.4 \leq x \leq 0.2$,
$-0.2 \leq y \leq 0.4$, and
$x+y \geq 0$
or $0.75 \leq b \leq 1.31$,
c = 0.6-y,
d = x+y, and
e = 0.4-x, with
-0.6 <x< 0,4,
-0.4<y<0.6, and
$0<x+y \leq 0.5$

When a is equal to 2, the alloys according to the invention can be said to be of the $AB_2$ type.

When a is equal to 5 and b is ranging between 1.75 and 2.25, the alloys according to the invention can be said to be of the $A_2B_5$ type. In one embodiment, such $A_2B_5$ alloy is one where M is a mischmetal and where T is at least one element selected from the group consisting of Si, Ga, and Ge.

When a is equal to 5 and b is ranging between 0.75 and 1.31, the alloys according to the invention can be said to be of the $AB_5$ type. In one embodiment, such $AB_5$ alloy is one where M is a mischmetal and where T is at least one element selected from the group consisting of Si, Ga, and Ge.

In all cases, the alloys may be single phase or multiphase.

The invention also relates to a method for preparing the above mentioned alloys, comprising the steps of: milling a mixture of elemental powders and/or pre-alloyed combination of elemental powders of Ca, Mg, M, Ni and T annealing and/or sintering the milled mixture at a temperature higher than 600°C. In another embodiment, the temperature is higher than 800°C.

The invention further relates to the use of the above-mentioned alloys for reversibly absorbing hydrogen from a gas phase. In this respect, the above-mentioned alloys are capable of being hydrogenated and dehydrogenated. Hydrogenation is the process whereby hydrogen is absorbed by the hydrogen storage composition. Hydrogenation is not intended to indicate that complete hydrogenation of the hydrogen storage composition has necessarily occurred, and contemplates both a complete hydrogenation and a partial hydrogenation resulting from the absorption of hydrogen by the hydrogen storage composition. Similarly, dehydrogenation is not intended to indicate that complete dehydrogenation has necessarily occurred, and contemplates both a complete dehydrogenation and a partial dehydrogenation resulting from the desorption of at least a part of the hydrogen content of the hydrogen storage composition. Absorption of hydrogen by the metallic substance refers to the association of hydrogen with a metallic substance. Also mechanisms for association include dissolution, covalent bonding, or ionic bonding. Dissolution describes a process where hydrogen atoms is incorporated in the voids of a lattice structure of a metal or intermetallic alloy.

To this end, the present invention provides a process of hydrogenating and dehydrogenating the above-mentioned alloys comprising the steps of:

effecting absorption of hydrogen by the subject alloy and effecting desorption of the subject alloy, wherein the absorption and desorption steps are carried out in any order.

The invention and its advantages will be better understood upon reading the following non-restrictive description and examples made with reference to the accompanying drawings.

**Brief description of the drawings**

With respect to the alloys of the $AB_2$ type:

Fig. 1-1 shows the XRD (x-ray diffraction) spectra of a sample of composition $Ca_{0.4}Mg_{0.6}Ni_2$ made by milling a powder mixture of Ca, Mg and Ni powders as a function of milling time;

Fig. 1-2 shows the XRD spectra of a series of $Ca_xMg_{1-x}Ni_2$ samples for x=0, 0.2, 0.4, 0.5, 0.7 and 1 obtained after 20h of milling;

Fig. 1-3 shows the XRD spectra of a mechanically alloyed $Ca_{0.3}Mg_{0.7}Ni_2$ sample annealed for 1 hour at different temperature 600°C, 800°C and 1000°C;

Fig. 1-4 shows the XRD spectra of mechanically alloyed $Ca_xMg_{1-x}Ni_2$ for x=0, 0.2, 0.3, 0.4 and 0,8 after 1h annealing at 1000°C;

Fig. 1-5 shows PCT (pressure-concentration isotherm) of $Ca_xMg_{1-x}Ni_2$ alloys measured at 30°C;

Fig. 1-6 shows the XRD spectra of Zn (on the B site) and Mm (on the A site) substituted $Ca_{0.4}Mg_{0.6}Ni_2$ alloy after annealing at 1000°C for 1h;

Fig. 1-7 shows the XRD spectra of Cu and Fe (on the B site) and Mm (on the A site) substituted $Ca_{0.3}Mg_{0.7}Ni_2$ alloy after annealing at 1000°C for 1h;

Fig. 1-8 shows the PCT of various $(Ca_{0.4-x}Mg_{0.6-y}Mm_{x+y})Ni_2$ substituted alloys; and

Fig. 1-9 shows the position of the plateau pressures versus the lattice parameters for various $Ca_xMg_{1-x}Ni_2$ alloys and $(Ca_xMg_{0.7}Mm_y)Ni_2$. The substitution of Ca by Mm does not change much the lattice parameter but increases significantly the plateau pressures.

<u>With respect to the alloys of the $A_2B_5$ type:</u>

Fig. 2-1 shows the XRD spectra of $(Ca_{0.41}Mg_{0.6})_2Ni_5$ after ball milling for various durations (i.e. starting with a mixture of intermetallics and elemental powders).

Fig. 2-2 shows the XRD spectra of $(Ca_{0.4}Mg_{0.6})_bNi_5$ for various A/B=b/5 ratios after annealing at 1000°C;

Fig. 2-3 shows the XRD spectra of $(Ca_{0.375}Mg_{0.625})_2Ni_5$ made by by milling elemental powder of Ca, Mg and Ni and annealed 1 h at various temperature;

Fig. 2-4 shows the PCT curves measured at 30°C of $(Ca_{0.375}Mg_{0.625})_2Ni_5$ annealed at various temperatures;

Fig. 2-5 shows the PCT curves of $(Ca_{0.375}Mg_{0.625})_2Ni_5$ annealed at 1000°C and measured at various temperatures;

Fig. 2-6 shows the XRD spectra of various $(Ca_xMg_y)_2Ni_5$ with various Mg/Ca ratios;

Fig. 2-7 shows the PCT curves measured at 30°C of the various samples shown in Fig. 2-5;

Fig. 2-8 shows the XRD spectra of various Mm substituted $(Ca_{0.375-x}Mg_{0.625-y}Mm_{x+y})_2Ni_5$ alloys with various Mm substitutions on the A site;

Fig. 2-9 shows the PCT curves of the various substituted alloys shown in Fig. 2-8;

Fig. 2-10 shows the XRD spectra of $(Ca_{0.5}Mg_{0.375}Mm_{0.125})_2Ni_5$ and its hydride;

Fig. 2-11 shows the XRD spectra of various $A_2B_5$ type alloys with substitution on the B site;

Fig. 2-12 shows the PCT curves of various substituted alloys shown in Fig. 2-11;

Fig. 2-13 illustrates the XRD spectra of various Mm-substituted alloys;

Fig. 2-14 illustrates the PCT curve of Example 2-14 Mm-substitutions;

Fig. 2-15 illustrates the PCT curves of one of the Mm-substituted alloys of example 2-14, after cycles of hydrogen absorption/desorption;

Fig. 2-16 illustrates a comparison between the cycling stability of a non-substituted alloy and Mm-substituted alloy of example 2-14 and;

Fig. 2-17 illustrates the XRD spectra of an Mm-substituted alloy of example 2-14, before and after cycling;

Fig. 2-18 illustrates a typical PCT curve for purposes of demonstrating calculation of maximum hydrogen storage capacity, reversible hydrogen storage capacity and hysteresis;

Fig. 2-19 illustrates the XRD spectra of an alloy of example 2-15, substituted on the B-site by Si;

Fig. 2-20 illustrates PCT curves of the alloy of example 2-15 (see Figure 2-19);

Fig. 2-21 illustrates an XRD spectra of an alloy of example 2-16, substituted on the B-site by Ga;

Fig. 2-22 illustrates a PCT curves of the alloy of example 2-16 (see Figure 2-21);

Fig. 2-23 to Fig. 2-25 illustrates the XRD spectra of the various alloys of example 2-17, substituted on the B-site by Si;

Fig. 2-26 to Fig. 2-28 illustrates the corresponding PCT curves of various alloys of example 2-17 (see Figures 2-23 to Figure 2-25);

Fig. 2-29 illustrates the maximum and reversible storage capacities for $Mg_{1.25}Ca_{0.625}Mm_{0.125}Ni_{4.875}Si_{0.125}$ and $Mg_{1.25}Ca_{0.625}Mm_{0.125}Ni_5$.

Fig. 2-30 illustrates an SEM photograph of particles of an alloy composition of example 2-17, before and after 400 hydrogen absorption/desorption cycles;

Fig. 2-31 illustrates the XRD curve for $Mg_{1.25}Ca_{0.625}Mm_{0.125}Ni_{4.875}Ge_{0.125}$ after various cycles;

Fig. 2-32 illustrates the PCT curves for $Mg_{1.25}Ca_{0.625}Mm_{0.125}Ni_{4.875}Ge_{0.125}$ after various cycles;

Fig. 2-33 illustrates the PCT curves for each of $Mg_{1.25}Ca_{0.625}Mm_{0.125}Ni_{4.875}Ge_{0.125}$ and $Mg_{1.25}Ca_{0.625}Mm_{0.125}Ni_{4.75}Ge_{0.25}$;

Fig. 2-34 illustrates the maximum hydrogen storage capacity as a function of degree of Si and Ge substitution;

Fig. 2-35 illustrates the hydrogen desorption curve of the alloy of Fig. 2-15;

Fig. 2-36 illustrates the normalized maximum and reversible storage capacity as a function of Si content, for example 2-17;

Fig. 2-37 illustrates first hydrogen absorption kinetics for $Mg_{0.5}Ca_{0.25}Mm_{0.05}Ni_{2-x}Si_x$, for example 2-17;

Fig. 2-38 illustrates the PCT curves of $Mg_{1.25}Ca_{0.625}Mm_{0.125}Ni_{5-x}Si_x$ alloys with different Si content; and

Fig. 2-39 illustrates the XRD spectra of the $Mg_{1.25}Ca_{0.625}Mm_{0.125}Ni_{5-x}Si_x$ alloys shown in Fig. 2-38

With respect to the alloys of the $AB_5$ type:

Fig. 3-1 shows the XRD spectra of $Ca_xMm_{1-x}Ni_5$ alloys made by mechanical alloying followed by annealing.

Fig. 3-2 shows the lattice parameters of the $Ca_xMm_{1-x}Ni_5$ alloys shown in Fig.3-1;

Fig. 3-3 shows representative PCT curves of some of the ternary $Ca_xMm_{1-x}Ni_5$ alloys shown in Fig. 3-1;

Fig. 3-4 a&b show XRD spectra of ball milled Ca-Mg-Ni ternary alloys before and after annealing treatment and demonstrate that the solubility of Mg in $CaNi_5$ is very low;

Fig. 3-5 a&b show XRD spectra of ball milled Mm-Mg-Ni ternary alloys before and after annealing treatment and demonstrate that the solubility of Mg in $MmNi_5$ is also very low;

Fig. 3-6 shows XRD spectra of various mechanically alloyed Mm-Ca-Mg-Ni quaternary alloys before annealing treatment;

Fig. 3-7 shows XRD spectra of various mechanically alloyed Mm-Ca-Mg-Ni quaternary alloys after annealing treatment;

Fig. 3-8 shows the PCT curves of the quaternary alloys shown in Fig. 3-7;

Fig. 3-9 a&b shows the XRD spectra of various Mm-rich quaternary Mm-Ca-Mg-Ni alloys (a) and the corresponding PCT curves (b);

Fig. 3-10 a&b show the XRD spectra of various Mm-poor quaternary Mm-Ca-Mg-Ni alloys (a) and the corresponding PCT curves (b);

Fig. 3-11 shows the relationship between the plateau pressure and the c/a parameter of various $(Mm\text{-}Ca\text{-}Mg)_bNi_5$ alloys;

Fig. 3-12 is a curve giving the hydrogen storage capacity of an alloy of formula $(Ca_{0.64}Mm_{0.36})_{1.1}Ni_5$ as a function of the pressure after 3 cycles and 250 cycles;

Fig. 3-13 is a curve similar to the one of Fig. 3-12, but with an alloy of formula $(Ca_{0.64}Mm_{0.36})_{1.1}Ni_{4.9}Si_{0.1}$;

Fig. 3-14 is a curve similar to the one of Fig. 3-12, but with an alloy of formula $(Ca_{0.64}Mm_{0.36})_{1.1}Ni_{4.8}Si_{0.2}$;

Fig. 3-15 is a X-ray analysis of the alloy of formula $(Ca_{0.64}Mm_{0.36})_{1.1}Ni_{4.8}Si_{0.2}$ mentioned hereinabove (see Fig. 3-14);

Fig. 3-16 is an X-ray analysis of the alloy of formula $(Ca_{0.64}Mm_{0.36})_{1.1}Ni_5$ mentioned hereinabove (see Fig. 3-12); and

Fig. 3-17 is a curve similar to the one of Fig. 3-12, but with an alloy of formula $(Ca_{0.64}Mm_{0.36})_{1.1}Ni_{4.85}Ge_{0.15}$.

## Detailed description of the invention

### 1. ALLOYS OF THE $AB_2$ TYPE

In one aspect, the present invention provides an $AB_2$ type alloy according to the formula:

$$(Ca_{0.4-x}Mg_{0.6-y}M_{x+y})_b(Ni_{1-z}T_z)_2$$

where
M is at least one metal selected from the group consisting of Y, Ce, La, Pr, Nd, Th, Nd, Ti, V, Zr, Ta, Hf, Sr, Ba and mischmetals;
T is at least one element selected from the group consisting of Al, Zn, Cu, Fe, Co, Mn, Cr, Mo, W, Si, Ga, Ge, In, Sn, Ag, C and B;
$0.9 \leq b \leq 1.1$,
$-0.5 \leq x \leq 0.4$,
$-0.4 < y \leq 0.5$,
$x+y>0$; and
$0 \leq z \leq 0.5$.

Preferably:
$-0.1 \leq x \leq 0.25$; and
$-0.1 \leq y \leq 0.15$.

A suitable mischmetal is one of the composition 51wt% Ce, 26.4wt% La, 16.4wt% Nd and 5.3wt% Pr. A further suitable mischmetal is one of the composition 62wt% La, 21wt% Ce, 3wt% Pr, and 14wt% Nd. Many further compositions are suitable, and differ in the properties of the constituent elements La, Ce, Pr, and Nd.

These alloys are single or multiphase hydrogen storage compounds of the $AB_2$ type, which are capable of absorbing and desorbing hydrogen from a gas phase at ambient temperature with a flat plateau pressure and a storage capacity larger than 1.2 wt %.

These alloys may be prepared by a method comprising the following two steps. The first one consists of preparing a powder by milling a mixture of elemental powders and/or pre-alloyed combination of the elemental powders (ex.: Ca, Mg, Ni, Mm, $CaNi_2$, $MgNi_2$, $MmNi_5$, when M=Mm) in respective amounts selected to obtain the requested alloy. The milling can be a conventional ball milling or a more intensive mechanical alloying (by a high energy ball mill) that can be carried out at room temperature or at high temperatures with or without antisticking agents and in various kinds of atmosphere.

The second step consists of annealing and/or sintering the milled powder at elevated temperatures in a crucible made of, for example, stainless steel, for a short period of time in an inert or reactive atmosphere. This is an essential step to achieve a high reversible absorption capacity and a flat plateau. The annealing temperature should be higher than 800°C but not higher than 1050°C.

The invention is based on the discovery that the mechanical alloying of elemental powders (such as powders of Ca, Mg, Ni) and/or of mixtures of intermetallic compounds (such as powders of $CaNi_5$, $MgNi_2$ ) corresponding to the composition of the formula:

$$Ca_xMg_{1-x}Ni_2$$

leads to a nanocrystalline ternary intermetallic compound with the $CaNi_2$ structure (C15-type)for $x \geq 0.3$. This so-milled nanocrystalline alloy can reversibly absorb and desorb hydrogen at room temperature. However, the reversible absorption capacity is small and the slope of the PCT curves is very big like in the case of conventional large-grain polycrystalline $Ca_xMg_{1-x}Ni_2$ alloys already reported in the art (see reference B).

The invention is also based on the discovery that, when a thermal treatment of the present invention is applied to this mechanically alloyed powder, a substantial improvement in properties is achieved. Indeed, the hydrogen storage properties of the mechanically alloyed Mg-Ca-Ni are substantially improved by annealing the powder at temperatures higher than 800°C for short period of time, typically at 1000°C or slightly higher, for 0.5h to 1h. Annealing at temperatures lower than 800°C does not improve the hydrogen storage properties very much.

The ball milling time can vary from a few minutes to several hours. When the milling time is of about 10 hours, then a true alloy is formed between the components (see Fig. 1-1), i.e. a nanocrystalline ternary intermetallic compound with the $CaNi_2$ structure (C15-type). Thus, in that case, the ball milling step is a mechanical alloying. Under these conditions, the post-thermal step becomes an annealing treatment which could be as short as 0.5 to 1 hour as indicated above.

On the other hand, when the ball milling step is only carried out for a few minutes, the powder particles are then only agglomerates of the various constituents. In that case, the post-thermal step is a sintering treatment which could take a few hours to produce the final alloy product.

Further improvements to these alloys may be achieved by adding other elements to Ca, Mg and Ni or their combinations. Such an addition may raise the plateau pressure and improve hydrogen storage properties such as plateau slope and the long-term stability while keeping the $AB_2$ (C15-type) structure as the main phase.

Example 1-1: Compound according to the prior art made by the method according to the invention

$Ca_{0.3}Mg_{0.7}Ni_2$ (b = 1, x= 0.1, y= -0.1, z= 0) was synthesized in a SPEX® high energy ball mill under the protection of argon. A Mg powder (>99%, + 100mesh), Ca granules (>99.5, ~2mm in size) and a Ni powder (<99.9%, - 325mesh) were used as starting materials.

Isothermal annealing was performed in a tubular furnace under the protection of argon. The mechanically alloyed powder was sealed in a stainless steel crucible before annealing. The powder was heated to 1000°C at a heating rate of 30C/min, and held at 1000°C for 1 hour, then cooled down to room temperature in the furnace.

Hydrogen absorption/desorption properties were measured by using an automated Sievert's type apparatus. The annealed powder normally needs mild activation treatment, such as heated to 200°C under vacuum and then cooled down. EDX analysis shows that the Fe content in the end product less than 0.2 at. %. The composition of the end product was close to the nominal composition. The activated alloy exhibited a relatively flat plateau and a high capacity.

<u>Example 1-2:</u> Compound according to the invention made by the method according to the invention

$Ca_{0.15}Mg_{0.7}Mm_{0.15}Ni_2$ (x= 0.25, y= -0.1, M= Mm, x+y= 0.15, b= 1, z= 0) was synthesized by mechanical alloying of elemental powder blends. The alloy was annealed in the same manner as in Example 1-1. This alloy had a hydrogen storage capacity of 1.25wt.%. The plateau pressure was drastically raised, and the plateau slope was much less than that of $Ca_{0.3}$ $Mg_{0.7}Ni_2$ of the Example 1-1

<u>Examples 1-3 and subsequent</u>

Other examples similar to Example 1-2 were carried out. The results of these other examples are reported in the accompanying drawings (see Figs. 1-1 to 1-9).

## 2. <u>ALLOYS OF THE $A_2B_5$ TYPE</u>

In another aspect, the present invention provides an $A_2B_5$ type alloy according to the formula:

$$(Ca_{0.4-x}Mg_{0.6-y}M_{x+y})_b(Ni_{1-z}T_z)_5$$

where

M is at least one metal selected from the group consisting of Y, Ce, La, Pr, Nd, Th, Nd, Ti, V, Zr, Ta, Hf, Sr, Ba and mischmetals;

T is at least one element selected from the group consisting of Al, Zn, Cu, Fe, Co, Mn, Cr, Mo, W, Si, Ga, Ge, In, Sn, Ag, C and B;

1.75≤b<≤2.25,

-0.4≤x≤0.2,

-0.2≤y≤0.4,

x+y≥0, and

0≤z≤0.5.

Preferably:

-0.1≤x≤0.1, and

-0.1≤y≤0.2.

Preferably also, Mg and Ca are present in a Mg/Ca ratio ranging from 0.5 to 2 and more preferably from 1.5 to 1.75.

### (a) Ca-Mg-Ni alloys of the $A_2B_5$ type

As mentioned before, in a Ca-Ni system, there are four stable compounds $CaNi_2$, $CaNi_3$, $Ca_2Ni_7$ and $CaNi_5$.The $CaNi_2$ -type system (also called $AB_2$) has been the subject of PART I hereinabove. This system has a cubic C15 structure and Mg can substitute Ca up to x=0.3 in the $Ca_xMg_{1-x}Ni_2$ alloys while maintaining a cubic structure. The unit cell volume decreases and the plateau pressure increases with increasing the Mg content.

In accordance with the invention, it has been found that the replacement of Ca and/or Mg by Mm in a quaternary $AB_2$ type Ca-Mg-Mm-Ni system improves the hydrogen storage properties significantly

$CaNi_3$ type alloys have been investigated in great details. The intermetallic compound $CaNi_3$ can absorb hydrogen readily to form $CaNi_3H_{4.6}$ but cannot release hydrogen under ambient conditions (see reference A). Oesterreicher et al. have investigated the pseudo-binary $Ca_xMg_{1-x}Ni_3$ and found that Mg can substitute Ca up to x= 0.7(see again reference A). Recently, Kadir et al. reported a series of $AB_3$ alloys of the type $AB_2C_9$ identified as $RMg_2Ni_9$ where (R= La, Ce, Pr, Nd, Sm and Gd) (reference D) and a $CaMg_2Ni_9$ alloy (reference C) synthesized by sintering a mixture of elemental powders or intermetallic compounds. They found that these $AB_2C_9$ type compounds have the $PuNi_3$ structure (reference D). The unit cell volume and hydrogen storage properties can be altered by different substitutions for the A, B and C elements.

In between $CaNi_2$ and $CaNi_3$, a metastable $Ca_2Ni_5$ compound with an hexagonal P63/m structure (space group 176) has previously been reported (see reference E). This material was prepared from the melt by a peritectic reaction at 1035°C. The present inventors have not been able to synthesize this compound by using the method of preparation described in this document but have discovered that when one substitutes some Ca by Mg in the virtual $Ca_2Ni_5$ compound, a new phase having a structure different from those of $AB_2$ ($MgCu_2$ - cubic), $AB_3$ ($PuNi_3$ - hexagonal) and $Ca_2Ni_5$ (BaC6 - hexagonal) is formed when the compound is prepared by the method of the present invention. This new phase has a large hydrogen storage capacity and an adequate plateau pressure for reversibly storing hydrogen gas at room temperature.

Therefore, the second range of composition encompassed by the present invention is the range where the A/B ratio is between 0.45 and 0.35. As mentioned previously, A means $(Ca_{0.4-x}Mg_{0.6-y}M_{x+y})$ and B means $(Ni_{1-z}T_z)$. This range corresponds to alloys of the $A_2B_5$ type.

As discussed hereinabove, an $AB_2$ phase with a cubic C15 structure is formed when the A/B ratio is bigger than 0.45. When the A/B ratio is less than 0.35, an $AB_3$ phase with the $PuNi_3$ structure is formed. However, when the A/B ratio is in the range of 0.35-0.45, a new $A_2B_5$-type phase with a crystallographic structure which has not yet been identified, is obtained. This new alloy is made by the same method as the one discussed previously, which comprises first preparing a powder by milling a mixture of elemental powders and/or pre-alloyed combinations of elemental powders (ex.: Ca, Mg, Ni, $CaNi_5$, $MgNi_2$ ...) in amounts sufficient to achieve the requested composition, and then annealing and/or sintering the so milled mixture at an elevated temperature of about 1000°C to form the requested hydrogen storage alloy.

Thus, the invention is based on the discovery of new hydrogen storage alloys of the $A_2B_5$ type which contains Ca, Mg, Ni and other optional elements. These new alloys are capable of absorbing and desorbing hydrogen from the gas phase at ambient temperature with a flat plateau pressure and a storage capacity larger than 1.5 wt%.

These alloys may be prepared by a method comprising two steps.

The first step consists of preparing a powder by milling a mixture of elemental powders and/or pre-alloyed combinations of the elemental powders (ex.: Ca, Mg, Ni, Mm, $CaNi_5$, $MgNi_2$, $MmNi_5$, when M=Mm) in respective amounts selected to obtain the desired alloy. The milling can be a conventional ball milling or a more intensive mechanical alloying by a high energy ball mill. It can be carried out at room temperature or at high temperatures with or without antisticking agents and in various kinds of atmosphere.

The second step consists of annealing and/or sintering the milled powder at elevated temperatures in a crucible made of, for example, stainless steel, for a short period of time in an inert or reactive atmosphere. This is an essential step to achieve high reversible capacity and a flat plateau. The annealing temperature should be higher than 900°C but not higher than 1080°C.

Once again, the invention is based on the discovery that mechanical alloying of elemental powders (such as Ca, Mg, Ni) and/or mixtures of intermetallic compounds (such as $CaNi_5$, $MgNi_2$) corresponding to the requested composition $(Ca_xMg_{1-x})_2Ni_5$ leads to a highly disordered structure when the Mg/Ca ratio is between 0.33 and 1.67. The so-milled alloy can reversibly absorb and desorb hydrogen at room temperature. However, the reversible capacity is small and the slope of the PCT curves is very big.

The invention is also based on the discovery that a new $A_2B_5$ type phase is formed when the mechanically alloyed $(Ca_xMg_{1-x})_2Ni_5$ is annealed at temperature above 600°C. The formation range of this new phase depends on the Mg/Ca ratio and the (Ca+Mg)/Ni ratio. For a stoichiometric $A_2B_5$ composition, the new phase no longer forms when the Mg/Ca ratio is lower than 0.3. If the Mg/Ca ratio is higher than 1.75, a large amount of $MgNi_2$ phase is formed and, as a result, the storage capacity is reduced. When the Mg/Ca ratio is set at 1.5, the new phase is formed when the (Mg+Ca)/Ni ratio is between 0.35 and 0.45.

The invention is further based on the discovery that when a thermal treatment is applied to this mechanically alloyed powder, substantial improvement in properties is achieved. Indeed, the hydrogen storage properties of the ball milled Ca-Mg-Ni are significantly improved by annealing the powder at temperatures higher than 900°C preferably around 1000°C or slightly higher for a short period of time, preferably 0.5 to 1 hour. Annealing at temperatures lower than 900°C does not improve the hydrogen storage properties very much.

Example 2-1

$(Ca_{0.375}Mg_{0.625})_2Ni_5$ (x=0.025, y= -0.025, b=2, z=0) was synthesized in a SPEX high energy ball mill under an argon protective atmosphere. A Mg powder (> 99%, +100mesh), Ca granules (>99.5%, 2mm in size) and a Ni powder (>99.9%, -325mesh) were used as starting materials.

isothermal annealing was performed in a tubular furnace under argon. The mechanically alloyed powder was sealed in a stainless steel crucible before annealing. The powder was heated to 1000°C at a heating rate of 30°C/min, held at 1000°C for 1 hour and then cooled down to room temperature in the furnace.

Hydrogen absorption/desorption properties were measured by using an automatic Sievert's type apparatus. The annealed powder was subjected to a mild activation treatment, such as a heating treatment to 200°C under vacuum followed by a cooling. EDX analysis showed that the Fe content in the end product is less than 0.2 at.%. The composition of the end product was close to the nominal composition. The activated alloy exhibited a relatively flat plateau and a high capacity

Example 2-2 to 2-13

Other examples similar to examples 2-1 were carried out. The results of these other examples are reported in the accompanying drawings (see Figs. 2-1 to 2-7).

It has also been discovered that further improvements are achieved by adding other elements to the basic elements used for preparing the alloys. Such an addition raises the plateau pressure and improves other hydrogen storage properties such as plateau slope, long term stability, and resistance to decrepitation (see Fig. 2-8 to Fig. 2-12).

**(b) Mm substitutions for Mg/Ca on the "A" site of the $A_2B_5$ type alloy.**

Mg and/or Ca can be substituted for by mischmetal ("Mm") in any of the above-described Ca-Mg-Ni alloys of the $A_2B_5$type. In this respect, with reference to the above-described formula, $(Ca_{0.4-x}Mg_{0.6-y}M_{x-y})_b(Ni_{1-z}T_z)_5$, the present invention also provides such an $A_2B_5$ type alloy where M is Mm.

A suitable mischmetal is one of the composition 51wt% Ce, 26.4wt% La, 16.4wt% Nd and 5.3wt% Pr. A further suitable mischmetal is one of the composition 62wt% La, 21wt% Ce, 3wt% Pr, and 14wt% Nd. Many further compositions are suitable, and differ in the properties of the constituent elements La, Ce, Pr, and Nd.

The embodiment of $A_2B_5$ type alloys with Mm substitutions for Mg/Ca on the "A" site will be described in further detail with reference to the following non-limitative examples.

Example 2-14

Commercial grade calcium particles (1-2mm in diameter, >99% pure) from Timminco Inc., nickel, aluminum, silicon, germanium and other powders (>99.5% pure) purchased from Alfa were used as raw materials. Mg powders were +100 mesh, >99% pure. Mm powders were made inside a glove-box by pulverizing the ingots (from Aldrich) under the protection of argon. The mischmetal Mm contains 51% Ce, 26.4% La, 16.4% Nd and 5.3% Pr (in weight percent).

Mechanical alloying was performed in a Spex 8000 ball mill at room temperature (25°C). The powders were mixed in the desired composition and mechanically milled in a steel milling vial filled with argon. Three steel balls of a diameter of 11mm were used. The ball to powder mass ratio was 10:1. All the handling was performed in a glove-box.

The as-milled powder was sealed in a stainless steel tube inside the glove-box and then placed in a tubular furnace for isothermal annealing treatment under the protection of argon. in this respect, the powder was heated to 1000°C at a heating rate of 30°C/min., held at 1000°C for 1 hour, and then cooled to room temperature in the furnace. The composition was then activated by heating 200°C under vacuum, and then cooled to room temperature.

The hydrogen storage properties were evaluated by using an automated Sievert's apparatus. The X-ray powder diffraction was performed on a Siemens D500 apparatus with CuK $\alpha$ radiation.

The hydrogen absorption/desorption cycling experiment was performed at 30°C under an absorption pressure of 3.5MPa and a desorption pressure of 0.01MPa. The absorption and desorption time was 12 minutes respectively. Under these conditions, the alloys could be cycled between fully hydrided and dehydrided conditions. The hydrogen purity was 99.999%.

The XRD spectra of various Mm-substituted alloys being compared to a non-substituted $A_2B_5$ type alloy are illustrated in Fig. 2-13. In all cases, an $A_2B_5$ main phase is obtained for (Mg+Ca)/Ni=0.4, no matter which element (Mg or Ca) is substituted by Mm. The substitution leads to an obvious change of diffraction peak position, indicating a significant change of lattice parameters and unit cell volume.

Mm substitution for Mg leads to a larger unit cell volume and a lower plateau pressure as shown in Fig. 2-14. Mm substitution for Ca does not lead to a significant change of the unit cell volume, however, the plateau pressure is substantially increased. In the case of $Ca_{0.5}Mg_{1.25}Mm_{0.25}Ni_5$ alloy, full storage capacity has not been reached as the PCT apparatus has reached its pressure limit.

Fig. 2-15 illustrates the PCT curves of the $Mg_{1.25}Ca_{0.625}Mm_{1.25}Ni_5$ alloy after various cycles of hydrogen absorption/desorption. A clear decrease in both maximum and reversible hydrogen storage capacity is observed with cycling. Further, the plateau slope is observed to increase with cycling. The hydrogen desorption curves are illustrated in Fig. 2-35. The hydrogen desorption capacity drops 43% after 400 cycles. The reason is probably that Mm does not form an alloy with Ca, and the quaternary Ca-Mm-Mg-Ni alloy may have a strong tendency to decompose upon hydrogenation.

Fig. 2-16 illustrates a comparison between the cycling stability of the maximum and reversible hydrogen storage capacities of the $Mg_{1.25}Ca_{0.625}Mm_{0.125}Ni_5$ and the $Mg_{1.25}Ca_{0.75}Ni_5$ alloy. There is no significant difference in the long term stability of both alloys with or without Mm substitution. The reason is probably that Mm does not form an alloy with Ca. Without wishing to be bound by theory, it is believed that the quaternary Ca-Mm-Mg-Ni alloy has a strong tendency to decompose upon hydrogenation. Also there is a significant decrease in hydrogen capacity upon cycling for both alloys.

Fig. 2-17 illustrates the XRD spectra of the $Mg_{1.25}Ca_{0.625}Mm_{0.125}Ni_5$ alloy before and after cycling. The diffraction peaks become broader and shift to lower angles with increasing cycling number. Annealing treatment of the hydrogen cycled sample at 600°C for 1 h restores the structure and recovers the hydrogen storage properties similar to those for Ca-Mg-Ni alloy without Mm. As shown on the XRD spectra, the diffraction peaks shift back to their original positions and the peak width decrease after annealing treatment.

**(c) Si/Ge/Ga substitutions for Ni on the "B" site**

Ni can be substituted for by at least one of Si, Ge, and Ga in any of the above-described Ca-Mg-Ni al-

loys of the $A_2B_5$ type. In this respect, with reference to the above-described formula, $(Ca_{0.4-x}\ Mg_{0.6-y})_b (Ni_{1-z}T_z)_5$, the present invention also provides such an $A_2B_5$ type alloy where T is at least one of Si, Ge and Ga (including any combination of these elements).

Substitution on the "B" site of the $A_2B_5$ type alloy by at least one of Si, Ga and Ge improves cycling stability and hysteresis characteristics of the $A_2B_5$ type alloy.

Changes to each of the "maximum storage capacity" and "reversible storage capacity" during cycling are measures of cycling stability of a hydrogen storage composition, such as the $A_2B_5$ type alloys described above. Maximum hydrogen storage capacity, under the highest pressure experimentally applied at a given temperature, can be experimentally determined using an automated Sievert's apparatus. With reference to a typical PCT curve illustrated in Fig. 2-18, maximum storage capacity is identified on the x-axis by the indication "Capacity (H/M)max". Reversible storage capacity can also be determined from the typical PCT curve illustrated in Fig. 2-18. In this respect, reversible storage capacity is the maximum storage capacity (i.e. Capacity (H/M)max) less the hydrogen content which cannot be desorbed from the hydrogen storage composition (indicated by "Capacity (H/M)min)".

In a preferred embodiment, after 400 cycles, the percentage change in maximum storage capacity of the Si/Ge/Ga substituted $A_2B_5$ alloy is no more than 5%. In another preferred embodiment, after 400 cycles, the percentage change in reversible storage capacity of the Si/Ge/Ga-substituted $A_2B_5$ alloy is no more than 10%.

Hysteresis is evaluated based on relative behaviour of absorption and desorption isotherms of a PCT curve, and particularly the corresponding equilibrium plateau pressure for each of the absorption and desorption isotherms. Equilibrium plateau pressure "$P_P$" for each of the absorption and desorption isotherms (hereinafter, "$P_{PA}$" and "$P_{PD}$") is estimated at the midpoint of the corresponding absorption and desorption plateaus. In this respect, hysteresis is calculated by the following formula:

$$\text{Hysteresis} = \ln (P_{PA}/P_{PD})$$

Values for each of $P_{PA}$ and $P_{PD}$ are taken from PCT curves as illustrated in the typical PCT curve in Fig. 2-18.

In a preferred embodiment, after 400 cycles, the hysteresis of the Si/Ge/Ga substituted $A_2B_5$ alloy is less than 0.1.

Substitution on the "B" site of the $A_2B_5$ type alloy by at least one of Si, Ga, and Ge also mitigates decrepitation of the subject $A_2B_5$ type alloy. In this respect, such substituted $A_2B_5$ type alloys do not suffer from appreciable particle size decrease upon repeated cycling. Preferably, after 400 cycles, the percentage change in the average particle size in such substituted $A_2B_5$ type alloys is less than 10%. Average particle size can be determined from SEM photographs of the particles (see, for example Fig. 2-30). In this respect, an average is taken of the maximum diameter of a random selection of 40 particles appearing in the photograph before and after repeated cycling (400 absorption/desorption cycles).

The embodiment of $A_2B_5$ type alloys with Si/Ge/Ga substitutions for Ni on the "B" site will be described in further detail with reference to the following non-limitative examples.

<u>Example 2-15</u>

$A_2B_5$ alloys having Si substituted on the "B" site were prepared in a similar manner as the alloy in Example 2-14.

The hydrogen storage properties were evaluated by using an automated Sievert's apparatus. The X-ray powder diffraction was performed on a Siemens D500 apparatus with CuK $\alpha$ radiation.

The hydrogen absorption/desorption cycling experiment was performed at 30°C under an absorption pressure of 3.5MPa and a desorption pressure of 0.01MPa. The absorption and desorption time was 12 minutes respectively. Under these conditions, the alloys could be cycled between fully hydrided and dehydrided conditions. The hydrogen purity was 99.999%.

The XRD of $Mg_{1.25}Ca_{0.75}Ni_{4.875}Si_{0.125}$ is illustrated in Fig. 2-19. The PCT curves of this alloy during cycling is illustrated in Fig. 2-20. Clearly, the Si substitution has a beneficial effect on cycling stability. The maximum storage capacity does not noticeably change with cycling. The reversible storage capacity, however, decreases with increased cycling, but less significantly in comparison with unsubstituted $A_2B_5$ type alloys.

<u>Example 2-16</u>

$A_2B_5$ alloys having Ga substituted on the "B" site were prepared in a similar manner as the alloy in Example 2-14.

The hydrogen storage properties were evaluated by using an automated Sievert's apparatus. The X-ray powder diffraction was performed on a Siemens D500 apparatus with CuK $\alpha$ radiation.

The hydrogen absorption/desorption cycling experiment was performed at 30°C under an absorption pressure of 3.5MPa and a desorption pressure of 0.01MPa. The absorption and desorption time was 12 minutes respectively. Under these conditions, the alloys could be cycled between fully hydrided and dehydrided conditions. The hydrogen purity was 99.999%.

The XRD of $Mg_{1.25}Ca_{0.75}Ni_{4.875}Ga_{0.125}$ is illustrated in 2-21. The PCT curves of this alloy during cycling is illustrated in Fig. 2-22. Clearly, the Ga substitution has a beneficial effect on cycling stability. The maximum storage capacity does not noticeably change with cycling. The reversible storage capacity, however, decreases with increased cycling, but less significantly in comparison with unsubstituted $A_2B_5$ type alloys.

**(d) Concomitant substitution of Mm on "A" site and Si/Ge/Ga on "B" site of the $A_2B_5$ type alloy**

Substitution of at least one of Si, Ge and Ga for Ni on the "B" site of the $A_2B_5$ type alloy improves cycling stability. However, such substitution also lowers the plateau pressure. In order to raise the plateau pressure of the Si/Ge/Ga - substituted alloys, Mm is substituted on the "A" site.

Mg or Ca can be substituted on the "A" site for by Mm, and Ni can be substituted on the "B" site by at least one of Si, Ge and Ga (including any combination of these elements), in any of the above-described Ca/Mg/Ni alloys of the $A_2B_5$ type. In this respect, with reference to the above-described formula, $( Ca_c Mg_d M_e )_b ( Ni_{1-z}T_z )_a$, or $(Ca_{0.4-x}Mg_{0.6-y}M_{x+y})_b(Ni_{1-z}T_z)_5$, the present invention also provides such an $A_2B_5$ type alloy where M is Mm and T is at least one of Si, Ge and Ga.

In the preferred embodiment, z is greater than 0.025. For a z less than 0.025, reversible storage capacity of the subject $A_2B_5$ composition is less stable during repeated cycling.

The embodiment of the $A_2B_5$ type alloys with Mm substitutions for Mg/Ca on the "A" site and with Si and/or Ge and/or Ga substitutions for Ni on the "B" site will be described in further detail with reference to the following non-limitative examples.

<u>Example 2-17</u>

$A_2B_5$ alloys were prepared having Mm substituted on the "A" site and having Si substituted on the "B" site, with varying degrees of Si substitution. These were prepared in a similar manner as the alloy in Example 2-14.

The hydrogen storage properties were evaluated by using an automated Sievert's apparatus. The X-ray powder diffraction was performed on a Siemens D500 apparatus with CuK $\alpha$ radiation.

The hydrogen absorption/desorption cycling experiment was performed at 30°C under an absorption pressure of 3.5MPa and a desorption pressure of 0.01MPa. The absorption and desorption time was 12 minutes respectively. Under these conditions, the alloys could be cycled between fully hydrided and dehydrided conditions. The hydrogen purity was 99.999%.

The XRDs for $Mg_{1.25}Ca_{0.625}Mm_{0.125}Ni_{4.875}Si_{0.125}$, and $Mg_{1.25}Ca_{0.625}Mm_{0.125}Ni_{4.75}Si_{0.25}$, and $Mg_{1.25}Ca_{0.625}Mm_{0.125}N_{4.9375}Si_{0.0625}$ are illustrated in Figures 2-23, 2-24, and 2-25, respectively. The corresponding PCT curves of these alloys during cycling is illustrated in Figs. 2-26, 2-27, and 2-28, respectively. The maximum and reversible capacities for each of $Mg_{1.25}Ca_{0.625}Mm_{0.125}Ni_{4.875}Si_{0.125}$ and $Mg_{1.25}Ca_{0.625}Mm_{0.125}Ni_5$ is illustrated in Figure 2-29. Fig. 2-36 illustrates the normalized maximum and reversible storage capacity as a function of Si content.

For $Mg_{1.25}Ca_{0.625}Mm_{0.125}Ni_{4.875}Si_{0.125}$ maximum hydrogen storage capacity does not change with cycling, as reported for the $Mg_{1.25}Ca_{0.75}Ni_{4.875}Si_{0.125}$ alloy. The reversible storage capacity decreases slightly in the first 30 cycles and then remains almost unchanged up to 400 cycles.

Clearly, increasing the Si substitution has a beneficial effect on cycling stability (see Fig. 2-27). Further, hysteresis is relatively not significant, maximum hydrogen capacity increases slightly, and reversible storage capacity and plateau slope remain unchanged. (see Fig. 2-27). Additionally, Si substitution improves resistance to decrepitation (decrepitation can result in volume expansion and increased stress on the container), see Fig. 2-30. SEM analyses show that the particle size of $Mg_{1.25}Ca_{0.625}MM_{0.125}Ni_{4.875}Si_{0.125}$ does not significantly change after 400 cycles of hydrogen absorption/desorption. The powders show irregular shape. The average particle size is about 30µm

A SEM photograph of the $Mg_{1.25}Ca_{0.625}Mm_{0.125}Ni_{4.675}Si_{0.125}$ alloy after 400 cycles of hydrogen absorption/desorption is illustrated in Fig. 2-30, to illustrate the alloy in particulate form.

The negative effect of substituting Si for Ni is the reduction of initial storage capacity. As shown in Fig. 2-37, the maximum hydrogen storage capacity decreases with increasing Si content. Also, the alloys become more and more difficult to activate. Fig. 2-38 shows the first hydrogen absorption curves of the $Mg_{1.25}Ca_{0.625}Mm_{0.125}Ni_{5-x}Si_x$ alloys with different Si content. Before doing the first hydrogen absorption, all the alloys have been treated at 300°C under vacuum for 10 minutes.

The XRD spectra of the $Mg_{1.25}Ca_{0.625}Mm_{0.125}Ni_{5-x}Si_x$ alloys are shown in Fig. 2-39. There is no clear difference in the structure of various alloys with different Si contents. The lattice parameters do not change much with increasing Si content.

Reduced Si content still provides a beneficial effect on cycling stability (see Figure 2-28). The maximum storage capacity even appears to increase upon cycling. However, stabilization of the reversible storage capacity is not observed.

Referring to Fig. 2-29 and 2-36, Si substitution for Ni results in a significant decrease in hydrogen storage capacity.

<u>Example 2-18</u>

An $A_2B_5$ alloy was prepared by having Mm substituted on the "A" site and having Ge substituted on the "B" site, of the formula, $Mg_{1.25}Ca_{0.625}Mm_{0.125}Ni_{4.875}Ge_{0.125}$. This alloy was prepared in a similar manner as the alloy in example 2-14.

The hydrogen storage properties were evaluated by using an automated Sievert's apparatus. The X-ray powder diffraction was performed on a Siemens D500 apparatus with CuK $\alpha$ radiation.

The hydrogen absorption/desorption cycling experiment was performed at 30°C under an absorption pressure of 3.5MPa and a desorption pressure of 0.01MPa. The absorption and desorption time was 12 minutes respectively. Under these conditions, the alloys could be cycled between fully hydrided and dehydrided conditions. The hydrogen purity was 99.999%.

The XRD for the alloy, before and after cycling, is shown in figure 2-31. The corresponding PCT curve of this alloy after cycling is illustrated in figure 2-32. Ge substitution for Ni appears to cause a reduction in the maximum hydrogen storage capacity. The maximum storage capacity increases slightly with cycling. This is similar to what was observed in the Si-substituted alloys. Figure 2-33 illustrates PCT curves for each of $Mg_{1.25}Ca_{0.625}Mm_{0.125}Ni_{4.75}Ge_{0.25}$ and $Mg_{1.25}Ca_{0.625}Mm_{0.125}Ni_{4.875}Ge_{0.125}$, for purposes of comparison. Hydrogen storage capacity decreases with increasing Ge content.

Figure 2-34 illustrates the comparison of the effect of Si and Ge substitution on the maximum hydrogen storage capacity of the alloy. It appears that Ge substitution is superior to Si substitution in retaining higher hydrogen storage capacity. Both types of substitutions improve cycling stability.

## 3. ALLOYS OF THE $AB_5$ TYPE

In another aspect, the present invention provides an $AB_5$ type alloy according to the formula:

$$(Ca_{0.6-y}Mg_{x+y}M_{0.4-x})_b(Ni_{1-z}T_z)_5$$

when M is at least one metal selected from the group consisting of Y, Ce, La, Pr, Nd, Th, Nd, Ti, V, Zr, Ta, Hf, Sr, Ba and Misch metals;

T is at least one element selected from the group consisting of Al, Zn, Cu, Fe, Co, Mn, Cr, Mo, W, Si, Ga, Ge, In, Sn, Ag, C and B;

$0.75 \le b \le 1.31$,

$-0.6 < x < 0.4$,

$-0.4 < y < 0.6$,

$0 < x+y \le 0.5$, and

$0 \le z \le 0.5$.

Preferably:

$-0.2 \le x \le 0.2$,

$-0.2 \le y \le 0.2$, and

$0.1 \le x+y \le 0.4$

In one embodiment, M is a mischmetal, and T is at least one of Si, Ga and Ge (including any combination of these elements).

A suitable mischmetal is one of the composition 51wt% Ce, 26.4wt% La, 16.4wt% Nd and 5.3wt% Pr. A further suitable mischmetal is one of the composition 62wt% La, 21wt% Ce, 3wt% Pr, and 14wt% Nd. Many further compositions are suitable, and differ in the properties of the constituent elements La, Ce, Pr, and Nd.

Alloys of the $AB_3$ type have already been studied in great detail (see references C, D, F, G, H). Some of them have even been recently patented for battery applications (see references I and J). For example, the patent identified as reference I discloses alloys of the formula $(Mg_{1-a-b}R1_aM1_b)Ni_z$ where $3 \le z \le 3.8$. Such corresponds to alloys AB where the ratio A/B is ranging between 0.263 and 0.33.

The alloys according to the invention as defined hereinabove are of the $AB_5$ type. $LaNi_5$- and $MmNi_5$- based $AB_5$ type alloys have been widely investigated as hydrogen storage materials (see reference 1 and 2). The La, Mm and Ni atoms can be substituted by many other elements to tailor the hydrogen storage properties for different applications (see reference 3). However, substitution of La by Mg in $LaNi_5$ has not been successful. A second phase with an approximate composition of $LaMg_{1.85}Ni_{9.26}$ was found with a nickel-rich $LaNi_{5+x}$ main phase in a melt casting $Mg_{0.1}La_{0.9}Ni_5$ sample (see reference 4). The hydrogen storage capacity was reduced due to the formation of this second phase.

$CaNi_5$ intermetallic compound represents a category of low cost hydrogen storage materials with a storage capacity up to 1.9wt.% (see references 5 to 7). However, little attention has been paid so far to such a system, probably due to its well-known bad cycling stability (see reference 8). Improvement of the hydrogen storage properties of $CaNi_5$ by substitution of Ca or Ni with other elements has been tried (see references 5 to 8; A and K). Ternary $Ca_xMm_{1-x}Ni_5$ alloys were produced by melt casting and were also investigated (see reference 5). Mm substitution for Ca can raise the plateau pressure of $CaNi_5$. However, the plateau slope is big for the as-cast ternary alloys due to segregation.

Annealing at elevated temperatures (>1000°C) can reduce the slope to some extent. Previous works made by the present inventors have shown that $CaNi_5$ and Mm or Zn-substituted $CaNi_5$ type alloys with relatively flat plateau can be produced by mechanical alloying followed by an annealing treatment at low temperatures (640C) (see reference L).

Substitution of Mg for Ca in a $CaNi_5$ structure has also been investigated. The reported results show that the $Ca_{1-x}Mg_xNi_5$ does not extend homogeneously beyond x=0.06 (see reference A).

The invention is based on the discovery that slight substitution of Mg in the $CaNi_5$ destroys the $AB_5$ structure, and a mixture of $AB_3$ and free nickel is formed. The hydrogen storage capacity is also reduced. However, when the alloy of the $AB_5$ type containing Mg comprises more than 3 elements, the solubility limit can be extended and the plateau can be tailored by the Mg content. The plateau slope is also small and the reversible hydrogen storage capacity is bigger in comparison to ternary Ca-Mm-Ni $AB_5$ type alloys.

Thus, the present invention provides new hydrogen storage alloys of the $AB_5$ type, which contains Ca, Mg, Ni and M. These alloys are capable of absorbing and desorbing hydrogen from a gas phase at ambient temperature with a flat plateau pressure and a storage capacity larger than 1.3wt.%.

These new alloys may be prepared by a method similar to those already disclosed, which comprises two steps.

The first step consists of preparing a powder by milling a mixture of elemental powders and/or pre-alloyed combination of the elemental powders (ex.: Ca, Mg, Ni, Mm, $CaNi_2$, $MgNi_2$, $MmNi_5$, when M=Mm) in respective amounts selected to obtain the requested composition. The milling can be a conventional ball milling or a more intensive or mechanical alloying by a high energy ball mill which can be carried out at room temperature or at high temperatures with or without antisticking agents and in various kinds of atmosphere.

The second step consists of annealing and/or sintering the mechanically alloyed powder at elevated temperatures in a crucible made of, for example, stainless steel for a short period of time in an inert or reactive atmosphere. This is an essential step to achieve high reversible capacity and a flat plateau. The annealing temperature should be higher than 800°C but not higher than 1100°C.

Once again, the invention is based on the discovery that mechanical alloying of elemental powders (such as Ca, Mm, Ni) and/or mixtures of intermetallic compounds (such as $CaNi_5$, $MmNi_5$) corresponding to the requested composition $Ca_xMm_{1-x}Ni_5$ leads to a nanocrystalline $AB_5$ type structure. The so-milled alloy can reversibly absorb and desorb hydrogen at room temperature. However, the reversible capacity is small and the slope of the PCT curves is very big.

The invention is also based on the discovery that when a thermal treatment is applied to this mechanically alloyed powder, substantial improvement in properties is achieved. Indeed, the hydrogen storage properties of the mechanically alloyed Mg-Ca-Ni are substantially improved when the powder is annealed at temperatures higher than 800°C typically at 1000°C or slightly higher, for short period of time, preferably 0.5h-1 h. Annealing at temperatures lower than 800°C does not improve the hydrogen storage properties very much.

It has also been discovered that further improvements are achieved by adding other elements (M) to the basic elements used for preparing the alloys. Such an addition raises the plateau pressure and improves other hydrogen storage properties such as plateau slope and the long-term stability while keeping predominantly the $AB_5$-type structure.

<u>Example 3-1:</u> Compound according to the prior art made by the method according to the invention.

$Mm_{0.4}Ca_{0.6}Ni_5$ (x=0, y=0, b=1, z=0) was synthesized in a SPEX high energy ball mill under an argon protective atmosphere. A Mm powder (>99%, + 100mesh), Ca granules (>99.5, ~2mm in size) and a Ni powder (<99.9%, -325mesh) were used as starting materials.

Isothermal annealing was performed in a tubular furnace under argon. The mechanically alloyed powder was sealed in a stainless steel crucible before annealing. The powder was heated to 1000°C at a heating rate of 30°C/min, held at 1000°C for 1 hour and then cooled down to room temperature in the furnace.

Hydrogen absorption/desorption properties were measured by using an automatic Sievert's type apparatus. The annealed powder normally needs mild activation treatment, such as a heating treatment to 200°C under vacuum followed by a cooling. EDX analysis shows that the Fe content in the end product is less than 0.3 at.%. The composition of the end product was close to the nominal composition. The activated $Mm_{0.4}Ca_{0.6}Ni_5$ alloy exhibited a relatively flat plateau and a high capacity.

<u>Example 3-2:</u> Compound according to the invention made by the method according to the invention

$(Mm_{0.333}Ca_{0.5}Mg_{0.167})_{1.2}Ni_5$ (M=Mm, x=0.067, y=0.1, x+y= 0.167, b=1.2 and b/5=0.24, z=0) was synthesized by mechanical alloying of elemental powder blends. The alloy was annealed in the same manner as in Example 3-1. This alloy had a hydrogen storage capacity of 1.45wt.%. The plateau pressure and reversible hydrogen storage capacity were significantly improved in comparison to those of the prior art alloy $Ca_{0.6}Mm_{0.4}Ni_5$.

<u>Example 3-3:</u> Compound according to the invention made by the method according to the invention:

$(Mm_{0.333}Ca_{0.417}Mg_{0.25})_{1.2}Ni_5$ (M=Mm, x=0.067, y=0.183, x+y=0.25, b=1.2 and b/5=0.24, z=0) was synthesized by mechanical alloying of elemental powder blends. The alloy was annealed in the same manner as in Example 3-1. This alloy had a hydrogen storage capacity of 1.4wt. %. The plateau pressure was flat and even higher than the one of Example 3-2.

<u>Example 3-4 to 3-15</u>

Other examples similar to those of Examples 3-2 and 3-3 were carried out. The results of these other examples are reported in the accompanying drawings (see Figs. 3-1 to 3-11).

Other Substituted $AB_5$ Type Alloys

It has also been found that substitution of Si, Ge and some other metalloid elements (also called "semi-metals") for Ni in a ternary Ca-Mm-Ni alloy of the $AB_5$ type can substantially improve the long term stability of such an alloy without causing much reduction of the storage capacity. Essentially, no capacity loss has been observed after 500 hydrogen absorption and desorption cycles.

Such Ca-Mm-Ni based alloys of the $AB_5$ type, which are capable of absorbing and desorbing hydrogen from a gas phase at ambient temperature with a relative flat plateau pressure and a storage capacity larger than 1.2wt.%. These new alloys are of the formula (I):

$$(Ca_xM_{1-x})_t(Ni_{1-y}T_y)_5 \qquad (I)$$

where M can be any mischmetal or any rare earth metal. M can also be an homogeneous or an inhomogeneous combination of any of: (i) at least two mischmetals, (ii) at least two rare earth metals, or (iii) at least one mischmetal and at least one rare earth metal;
T can be a metalloid. T can also be an homogeneous or an inhomogeneous combination of at least two metalloids;
$0<x\leq 1$ ($x\neq 0$), preferably $0.4\leq x\leq 1$;
$0< y\leq 0.5$ ($y\neq 0$), preferably $0<y\leq 0.3$; and
$0.8\leq t \leq 1.2$.

A process for the preparation of the above mentioned alloys of formula (I), comprises the following steps:

a) preparing a powder by milling a mixture of elemental powders and/or pre-alloyed substances of the elemental ingredients of the alloy to be prepared (such as, for example, Ca, Ni, Mm, $CaNi_2$, $CaNi_5$, $MmNi_5$ and so on) in adequate proportions to obtain the required alloy; and

b) annealing and/or sintering the so prepared powder at elevated temperatures in a crucible for a short period of time in an inert or reactive atmosphere.

In use, step a) may consist of a ball milling or of a mechanical alloying and can be carried out at room temperature or at high temperatures with or without antisticking agents.

Step b) is essential to the above process. This step must actually be carried out to achieve high reversible capacity and a flat plateau. In use, the annealing can be carried in a crucible made of stainless steel at a temperature higher than 600°C but not higher than 1100°C.

Alternatively, these compounds can be produced by conventional melt casting methods or powder sintering methods.

These compounds can be useful for hydrogen storage.

A suitable mischmetal is one of the composition 51 wt% Ce, 26.4 wt% La, 16.4 wt% Nd and 5.3 wt%Pr. A further suitable mischmetal is one of the composition 62 wt% La, 21 wt%Ce, 3 wt% Pr, and 14 wt% Nd. Many further compositions are suitable, and differ in the properties of the constituent elements La, Ce, Pr, and Nd.

Examples of rare earth metals are Y, La, Ce, Pr, Nd, Sm, Dy, Gd, Ho, Th, U, Pm, Tb, Er, and Lu. Preferably, the rare earth metal is any of La, Ce, Pr, Nd, Dy, Th, and Y. Suitable metalloids include Si, Ge, and Ga.

In one embodiment, M is a mischmetal, and T is any of Si, Ge and Ga.

Significant improvements have been achieved by substituting Si, Ge and/or other metalloids for Ni in the above mentioned Ca-Mm-Ni alloy of the $AB_5$ type (see the definition of T in the formula given hereinabove). This substitution has significant effect of improving the long-term stability while keeping predominantly the $AB_5$ structure and hydrogen storage capacity that are particularly useful.

The substutited Ca-Mm-Ni alloys of the $AB_5$ type with improved properties can be made by mechanical alloying of elemental powders (such as Ca, Mm, $Ni_5$) and/or mixtures of intermetallic compounds (such as $CaNi_5$, $MmNi_5$) corresponding to the required composition, followed by an thermal annealing treatment at temperatures higher than 600°C for short period of time, typically at 1000°C or slightly higher for 0.5h-lh in a steel crucible. Annealing at temperatures lower than 600C does not improve the hydrogen storage properties very much.

The following non-limitative examples are illustrative of the substituted ternary Ca-Mm-Ni alloys of the $AB_5$ type.

## EXAMPLE 3-16

$(Ca_{0.64}Mm_{0.36})_{1.1}Ni_5$ was synthesized by mechanical alloys in a SPEX high energy ball mill under argon. A $MmNi_5$ powder (>99%, + 100mesh), Ca granules (>99.5, ~2mm in size) and Ni powders (<99.9%,-325mesh) were used as starting materials.

After alloying, an isothermal annealing was performed in a tubular furnace under argon. The mechanically alloyed powder was sealed in a stainless steel crucible before annealing. The powder was heated to 1050°C at a heating rate of 30°C/min, and held at 1050°C for 1 hour, then cooled down to room temperature in the furnace.

The hydrogen absorption/desorption properties were measured by using an automatic Sievert's type apparatus. The annealed powder normally needs mild activation treatment, such as heated to 200°C under vacuum and then cooled down. The activated

$(Ca_{0.64}Mm_{0.36})_{1.1}Ni_5$ alloy exhibits a relative flat plateau and a maximum storage capacity of 1.44 wt.% under 4.0MPa of charging pressure.

A hydrogen absorption/desorption cycling experiment was performed at 30°C under an absorption pressure of 3.5MPa and a desorption pressure of 0.01MPa. The absorption and desorption time was 12 minutes respectively. Under these conditions, the alloys could be fully hydrided and dehydrided. The hydrogen purity was 99.999%. As shown in Fig. 3-12, the maximum storage capacity was reduced to 1.23 wt. % after 250 cycles (20% loss). The reduction of the effective reversible storage capacity is even bigger.

**EXAMPLE 3-17**

$(Ca_{0.64}Mm_{0.36})_{1.1}Ni_{4.9}Si_{0.1}$ was synthesized by mechanical alloying of elemental Ca, Si and $MmNi_5$ powder blends. The alloy was annealed in the same manner as in Example 3-16. This alloy had a maximum hydrogen storage capacity of 1.4wt.%. The maximum hydrogen storage capacity are slightly reduced by 8% after 250 cycles as shown in Fig.3-13 in contrast to the 20% loss in the $(Ca_{0.64}Mm_{0.36})_{1.1}Ni_5$.

**EXAMPLE 3-18**

$(Ca_{0.64}Mm_{0.36})_{1.1}Ni_{4.8}Si_{0.2}$ was synthesized by mechanical alloying of elemental Ca, Si and $MmNi_5$ powder blends. The alloy was annealed in the same manner as in Example 3-16. This alloy had a hydrogen storage capacity of 1.3wt.%. The maximum and reversible hydrogen storage capacities are slightly improved upon hydrogen absorption and desorption cycling as shown in Fig.3-14.

X-ray analyses show that Si-substituted alloys have very high resistance to peak broadening upon cycling as shown in Fig.3-15. While the $(Ca_{0.64}Mm_{0.3})_{1.1}Ni_5$ alloy without Si substitution shows obvious peak broadening after cycling as shown in Fig. 3-16. It was believed that hydrogen absorption/desorption cycling introduces defects, such as microstrain, chemical disorders and grain boundaries (reduced grain size), therefore leads to reduced storage capacity. The peak broadening reflects the defects introduced during cycling experiments.

**EXAMPLE 3-19**

$Ca_{0.7}Mm_{0.4}Ni_{4.85}Ge_{0.15}$ was synthesized by mechanical alloying of elemental powder blends. The alloy was annealed in the same manner as in Example 3-16. This alloy had a maximum hydrogen storage capacity of 1.3wt.% in the as-synthesized state. Substantial improvement in the maximum and reversibly storage capacity is observed after 500 cycles as shown in Fig. 3-17.

Although the disclosure describes and illustrates preferred embodiments of the invention, it is to be understood that the invention is not limited to these particular embodiments. Many variations and modifications may occur to those skilled in the art within the scope of the invention. For definition of the invention, reference is to be made to the appended claims.

REFERENCES

(A) "Hydriding Behavior of Ca-Mg-Ni-B" by H. Oesterreicher, K. Ensslen, A. Kerlin and E. Bucher, Mat. Res. Bull., 15 (1980) 275

(B) "Structural and Hydriding Properties of $(Ca_xMg_{1-x})Ni_2$ Laves phases alloys" by N. Terashita, K. Kobayashi, T. Sasai, E. Akiba, J. of Alloys and Compounds 327 (2001) 275

(C) "Structural investigation and hydrogen capacity of $CaMg_2Ni_9$ : a new phase in the AB2C9 system isostructural with LaMg2Ni9" by K. Kadir, N. Kuriyama, T. Sakai, I. Uehara, L. Ericksson, J. of Alloys and Compounds 284 (1999) 145

(D) "Synthesis and structure determination of a series of hydrogen storage alloys; $RMg_2Ni_9$ (R=La, Ce, Pr, Nd, Sm, and Gd) built from $MgNi_2$ Laves-type layers alternating with $AB_5$ layers", by K. Kadir, T. Sakai, I. Uehara, J. of Alloys and Compounds 257 (1997) 115

(E) International Centre for Diffraction Data, JCPDS File # 19-0243 on $Ca_2Ni_5$

(F) "Structural investigation and hydrogen storage capacity of $LaMg_2Ni_9$ and $(La_{0.65}Ca_{0.35})(Mg_{1.35}Ca_{0.68})Ni_9$ of the $AB_2C_9$ type structure" by K. Kadir, T. Sakai and I. Uehara, J. of Alloys and Compounds 302 (2000) 112

(G) "Hydriding properties of $LaNi_3$ and $CaNi_3$ and their substitutes with $PuNi_3$-type structure" by J. Chen, H.T. Takeshita, H. Tanaka, N. Kuriyama, T. Sakai, I. Uehara, M. Haruta, J. of Alloys and Compounds 302 (2000) 304

(H) "Hydrogen storage properties of new ternary system alloys: $La_2MgNi_9$, $La_5Mg_2Ni_{23}$, $La_3MgNi_{14}$" by T. Kohno, H. Yoshida, F. Kawashima, T. Sakai, M. Yamamoto and M. Kanda, J. of Alloys and Compounds 311 (2000) L5

(I) "Hydrogen-Absorbing Alloy" US Patent No. 6,130,006 (2000)

(J) Japanese Patent JP 11-217643 (1999)

(K) J.O. Jensen, N.J. Bjerrum, J. of Alloys and Compounds, 293 (1999) 185

(L) G. Liang, J. Huot and R. Schulz, J. of Alloys and Compounds 321 (2001)146

(1) K.H. Buschow, in Handbook on the Physics and Chemistry of Rare Earths, vol.6, edited by K.A. Gschneider, Jr. and L. Eyring, Elsevier Science Publishers, B.V. (1984) chap 47

(2) T. Sakai, in Handbook on the Physics and Chemistry of Rare Earths, vol. 21, edited by K.A. Gschneider, Jr. and L. Eyring, Elsevier Science Publishers, B.V. (1995) chap 142
(3) G. D. Sandrock and G. Thomas, IEA technical report, compilation of IEA/DOE/SNL hydride database, (1997)
(4) P.D. Goodell, G. D. Sandrock and E.L. Huston, Pept. SAND 79-7095, Sandia N.L. Albuquerque, NM 87185 (1980) pp 1-176
(5) G.D. Sandrock, proc. 12th intersociety energy conversion engineering conference, Am. Nuclear Soc., 1 (1977) 951
(6) G.D. Sandrock, in A.F. Andersen, A.J. Mealand (eds.) Proc. Int. Symp. on Hydrides for Energy Storage 9, Pergamon, Oxford (1979), 1625
(7) G.D. Sandrock, J.J. Murray, M.L. Post and J.B. Taylor, Mat. Res. Bull., 17 (1982) 887
(8) P.D. Goodell, J. Less-Common Met., 99 (1984) 1

## Claims

**1.** An alloy of the formula:

$$(Ca_cMg_dM_e)_b(Ni_{1-z}T_z)_a$$

where:

M is at least one metal selected from the group consisting of Y, Ce, La, Pr, Nd, Th, Nd, Ti, V, Zr, Ta, Hf, Sr, Ba and mischmetals;
T is at least one element selected from the group consisting of Al. Zn, Cu, Fe, Co, Mn, Cr, Mo, W, Si, Ga, Ge, In, Sn, Ag, C and B;
a is an integer equal to 2 or 5;
z is a number ranging from 0 to 0.5, and

when a is equal to 2, then b, c, d, e are numbers selected so that:

$4.9 \leq b \leq 1.1$
$c = 0.4-x$,
$d = 0.6-y$, and
$e = x+y$, with
$-0.5 \leq x < 0.4$
$-0.4 < y \leq 0.5$ and
$x+y > 0$;

when a is equal to 5, then b, c, d, e are numbers selected so that
<u>either</u>
$1.75 \leq b \leq 2.25$
$c = 0.4-x$,
$d = 0.6-y$, and
$e = x+y$, with
$-0.4 \leq x \leq 0.2$,
$-0.2 \leq y \leq 0.4$, and
$x+y \geq 0$
<u>or</u>
$0.75 \leq b \leq 1.31$,
$c = 0.6-y$,
$d = x+y$, and
$e = 0.4-x$, with
$-0.6 < x < 0,4$,
$-0.4 < y < 0.6$, and
$0 < x+y \leq 0.5$.

**2.** An alloy as claimed in claim 1, wherein said alloy is of the formula:

$$(Ca_{0.4-x}Mg_{0.6-y}M_{x+y})_b(Ni_{1-z}T_z)_2$$

where M and T are defined as in claim 1 and
$0.9 \leq b \leq 1.1$,
$-0.5 \leq x < 0.4$,
$-0.4 < y \leq 0.5$,
$x+y > 0$, and
$0 \leq z \leq 0.5$.

**3.** An alloy as claimed in claim 2, wherein:

$-0.1 \leq x \leq 0.25$ and
$-0.1 \leq y \leq 0.15$.

**4.** An alloy as claimed in claim 1, wherein said alloy is of the formula:

$$(Ca_{0.4-x}Mg_{0.6-y}M_{x+y})_b(Ni_{1-z}T_z)_5$$

where M and T are defined as claimed in claim 1 and
$1.75 \leq b \leq 2.25$,
$-0.4 \leq x \leq < 0.2$,
$-0.2 \leq y \leq 0.4$,
$x+y \geq 0$, and
$0 \leq z \leq 0.5$.

**5.** An alloy as claimed in claim 4, wherein:

$-0.1 \leq x \leq 0.1$, and
$-0.1 \leq y \leq 0.2$.

**6.** An alloy as claimed in claim 4 or 5, wherein Mg and Ca are present in a Mg/Ca ratio ranging between 0.5 and 2.

**7.** An alloy as claimed in claim 6, wherein the Mg/Ca ratio is ranging between 1.5 and 1.75.

**8.** An alloy as claimed in claim 1, wherein said alloy is of the formula:

$$(Ca_{0.6-y}Mg_{x+y}M_{0.4-x})_b(Ni_{1-z}T_z)_5$$

where M and T are defined as in claim 1 and
$0.75 \leq b \leq 1.31$,
$-0.6 < x < 0.4$,
$-0.4 < y < 0.6$,
$o < x+y \leq 0.5$, and
$0 \leq z \leq 0.5$.

**9.** An alloy as claimed in claim 8, wherein:

$-0.2 \leq x \leq 0.2$.
$-0.2 \leq y \leq 0.2$, and
$0.1 \leq x+y \leq 0.4$.

**10.** An alloy as claimed in any one of claims 1 to 9, wherein said alloy is a single phase alloy.

**11.** An alloy as claimed in any one of claims 1 to 9, wherein said alloy is a multiphase alloy.

**12.** A method for preparing an alloy as claimed in any one of claims 1 to 11, comprising the step of:

milling a mixture of elemental powders and/or pre-alloyed combination of elemental powders of Ca, Mg, M, Ni and T, and

annealing and/or sintering the milled mixture at a temperature higher than 600°C.

**13.** Use of an alloy as claimed in any one of claims 1 to 11 or prepared as claimed in claim 12 for reversibly absorbing hydrogen from a gas phase.

**14.** A composition of the formula:

$$(Ca_{0.4-x}Mg_{0.6-y}M_{x+y})_b(Ni_{1-z}T_z)_5$$

where
M is a mischmetal;
T is at least one element selected from the group consisting of Si, Ga, and Ge;
$1.75 \leq b \leq 2.25$,
$-0.4 \leq x \leq 0.2$.
$-0.2 \leq y \leq 0.4$,
$x+y \geq 0$, and
$0 < z \leq 0.5$.

**15.** An alloy as claimed in claim 14, wherein:

$-0.1 \leq x \leq 0.1$, and
$-0.1 \leq y \leq 0.2$.

**16.** An alloy as claimed in claim 14 or 15, wherein Mg and Ca are present in a Mg/Ca ratio ranging between 0.5 and 2.

**17.** An alloy as claimed in claim 16, wherein the Mg/Ca ratio is ranging between 1.5 and 1.75.

**18.** The composition as claimed in claim 14, wherein z is greater than 0.0625.

**19.** The composition as claimed in claims 14 or 18, wherein (x+y) is greater than 0.

**20.** The composition as claimed in claim 18, wherein T is Si.

**21.** The composition as claimed in claim 18, wherein T is Ge.

**22.** The composition as claimed in claim 14, wherein the change in the maximum storage capacity after 400 hydrogen absorption/desorption cycles is less than 5%.

**23.** The composition as claimed in claim 14, wherein the change in the reversible storage capacity after 400 hydrogen absorption/desorption cycles is less than 10%.

**24.** The composition as claimed in claim 14, wherein the change in average particle size after 400 hydrogen absorption/desorption cycles is less than 10%.

**25.** A hydride of an alloy of the formula:

$$(Ca_{0.4-x}Mg_{0.6-y}M_{x+y})_b(Ni_{1-z}T_z)_5$$

where
M is a mischmetal;
T is at least one element selected from the group consisting of Si, Ga, and
Ge;
$1.75 \leq b \leq 2.25$,
$-0.4 \leq x < 0.2$,
$-0.2 \leq y \leq 0.4$,
$x+y \geq 0$, and
$0 < z \leq 0.5$.

**26.** An alloy as claimed in claim 25, wherein:

$-0.1 \leq x \leq 0.1$, and
$-0.1 \leq y \leq 0.2$.

**27.** An alloy as claimed in claim 25 or 26, wherein Mg and Ca are present in a Mg/Ca ratio ranging between 0.5 and 2.

**28.** An alloy as claimed in claim 27, wherein the Mg/Ca ratio is ranging between 1.5 and 1.75.

**29.** The hydride as claimed in claim 25, wherein z is greater than 0.0625.

**30.** The hydride as claimed in claims 25 or 29, wherein (x+y) is greater than 0.

**31.** The hydride as claimed in claim 29, wherein T is Si.

**32.** The hydride as claimed in claim 29, wherein T is Ge.

**33.** A process of hydrogenating and dehydrogenating a composition of the formula:

$$(Ca_{0.4-x}Mg_{0.6-y}M_{x+y})_b(Ni_{1-z}T_z)_5$$

where
M is a mischmetal;
T is at least one element selected from the group consisting of Si, Ga, and Ge;
$1.75 \leq b \leq 2.25$,
$-0.4 \leq x \leq 0.2$.
$-0.2 \leq y \leq 0.4$,
$x+y \geq 0$, and
$0 < z \leq 0.5$,
comprising the steps of:

effecting absorption of hydrogen by the composition; and
effecting desorption of hydrogen by the composition;

wherein the absorption and desorption steps are carried out in any order.

**34.** An alloy as claimed in claim 33, wherein:

$-0.1 \leq x \leq 0.1$, and
$-0.1 \leq y \leq 0.2$.

**35.** An alloy as claimed in claim 33 or 34, wherein Mg and Ca are present in a Mg/Ca ratio ranging between 0.5 and 2.

**36.** An alloy as claimed in claim 35, wherein the Mg/Ca ratio is ranging between 1.5 and 1.75.

**37.** The process as claimed in claim 33, wherein z of the composition is greater than 0.0625.

**38.** The process as claimed in claims 33 or 37, wherein (x+y) of the composition is greater than 0.

**39.** The process as claimed in claim 37, wherein T of the composition is Si.

**40.** The process as claimed in claim 37, wherein T of the composition is Ge.

**41.** The process as claimed in claim 33, wherein the change in the maximum storage capacity of the composition after 400 hydrogen absorption/desorption cycles is less than 5%.

**42.** The process as claimed in claim 33, wherein the change in the reversible storage capacity of the composition after 400 hydrogen absorption/desorption cycles is less than 10%.

**43.** The process as claimed in claim 33, wherein the change in average particle size of the composition after 400 hydrogen absorption/desorption cycles is less than 10%.

**44.** An alloy of the formula

$$(Ca_{0.6-y}Mg_{x+y}M_{0.4-x})_b(Ni_{1-z}T_z)_5$$

where
M is a mischmetal;
T is at least one element selected from the group consisting of Si, Ge and Ga;
$0.75 \leq b \leq 1.31$,
$-0.6 < x < 0.4$,
$-0.4 < y < 0.6$,
$o < x+y \leq 0.5$, and
$0 \leq z \leq 0.5$.

Fig. I-1

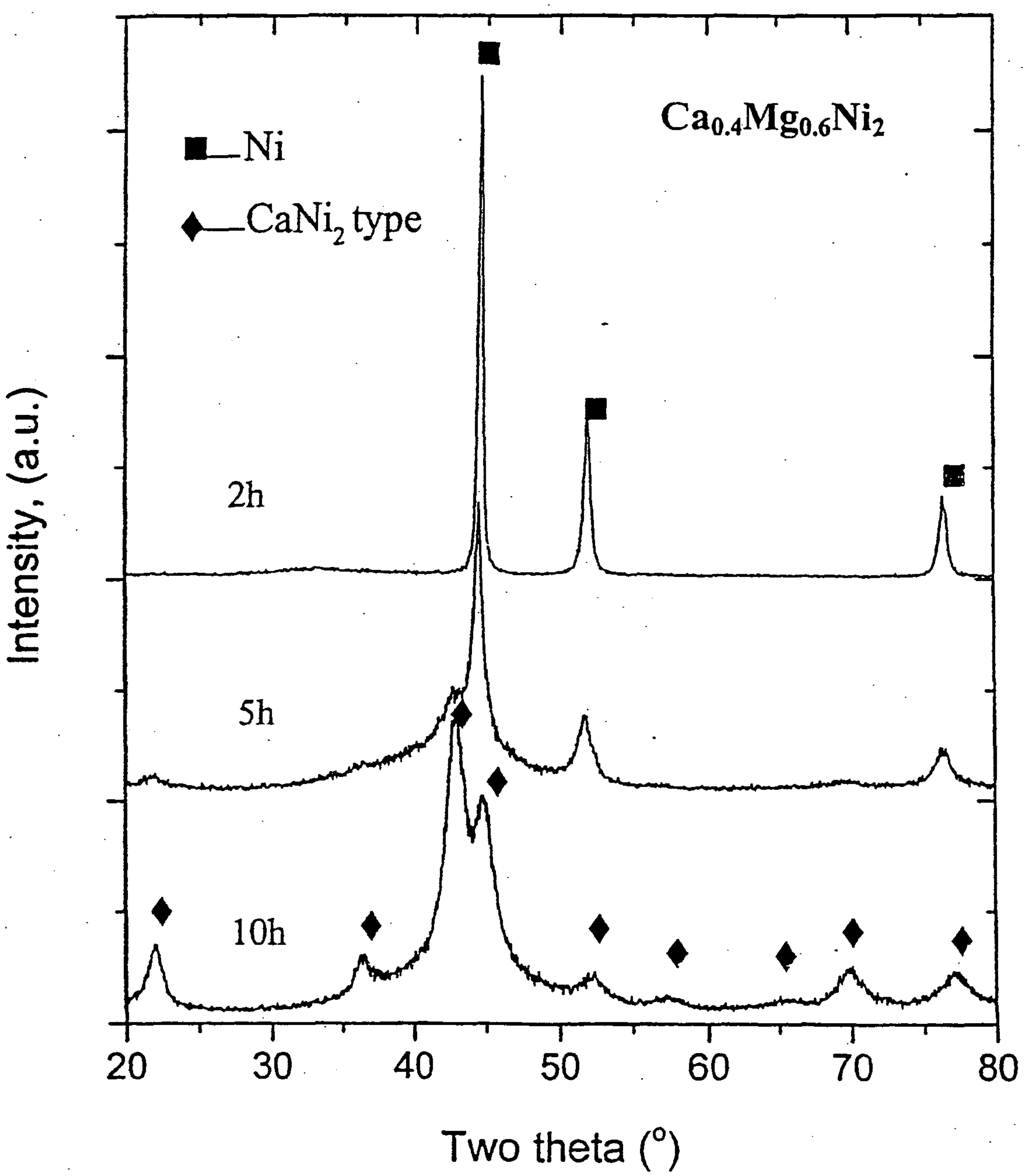
Ca0.4Mg0.6Ni2
Ni
CaNi2 type
2h
5h
10h
Intensity, (a.u.)
20
30
40
50
60
70
80
Two theta (°)

Fig.I-2

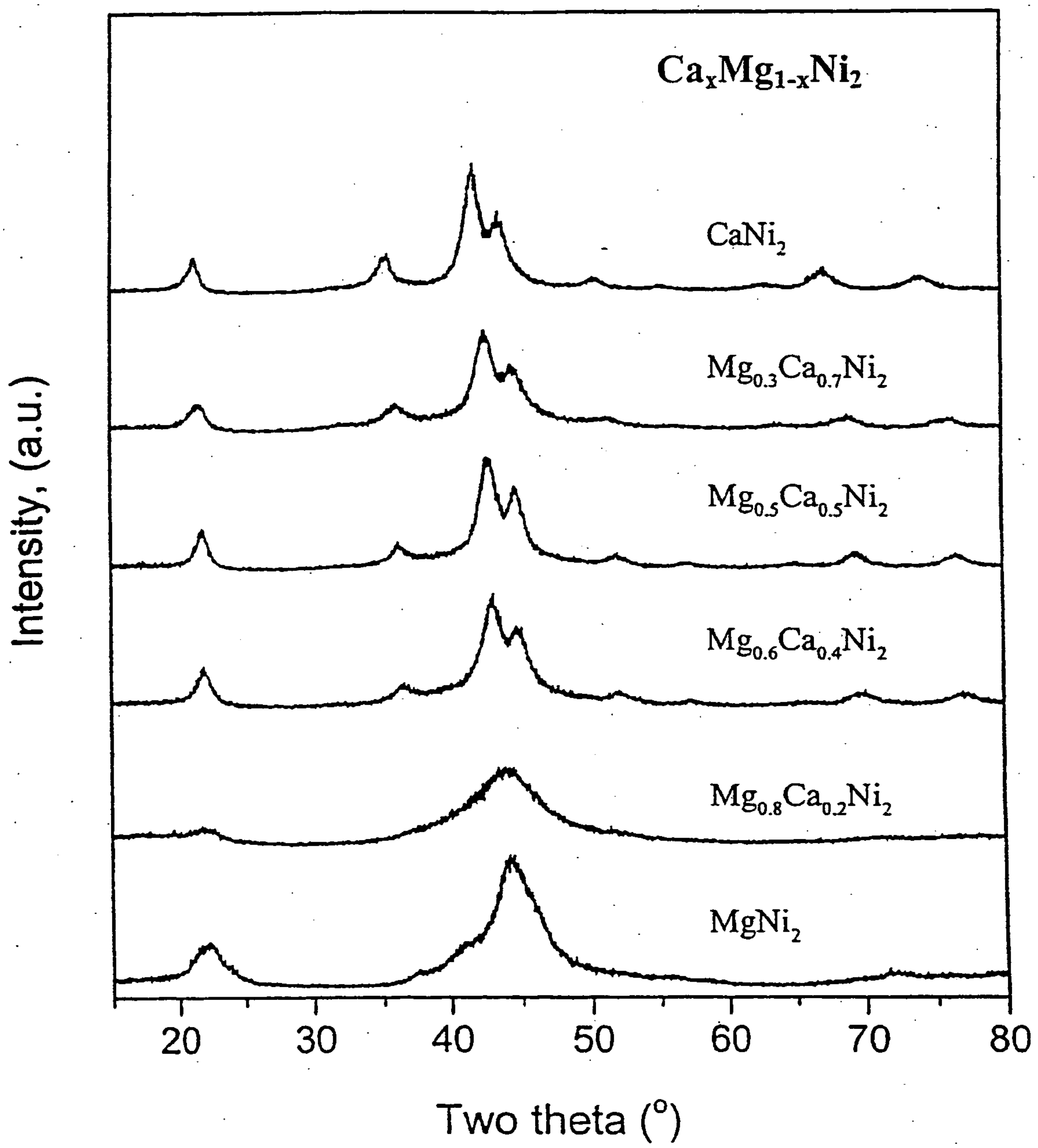

$Ca_xMg_{1-x}Ni_2$
$CaNi_2$
$Mg_{0.3}Ca_{0.7}Ni_2$
$Mg_{0.5}Ca_{0.5}Ni_2$
$Mg_{0.6}Ca_{0.4}Ni_2$
$Mg_{0.8}Ca_{0.2}Ni_2$
$MgNi_2$
Intensity, (a.u.)
20
30
40
50
60
70
80
Two theta (°)

Fig.I-3

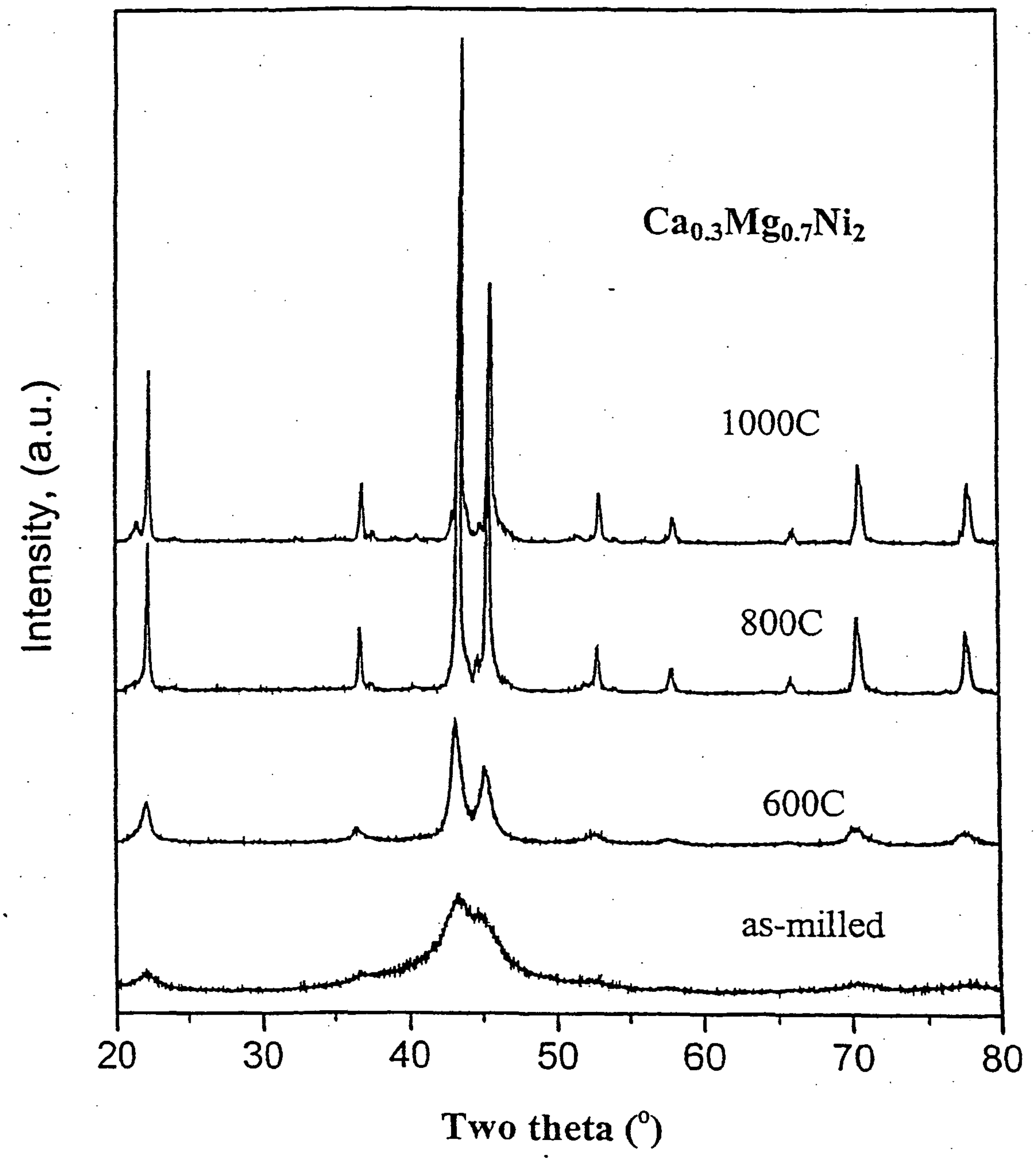
Ca0.3Mg0.7Ni2
1000C
800C
600C
as-milled
Intensity, (a.u.)
20
30
40
50
60
70
80
Two theta (°)

Fig.I-4

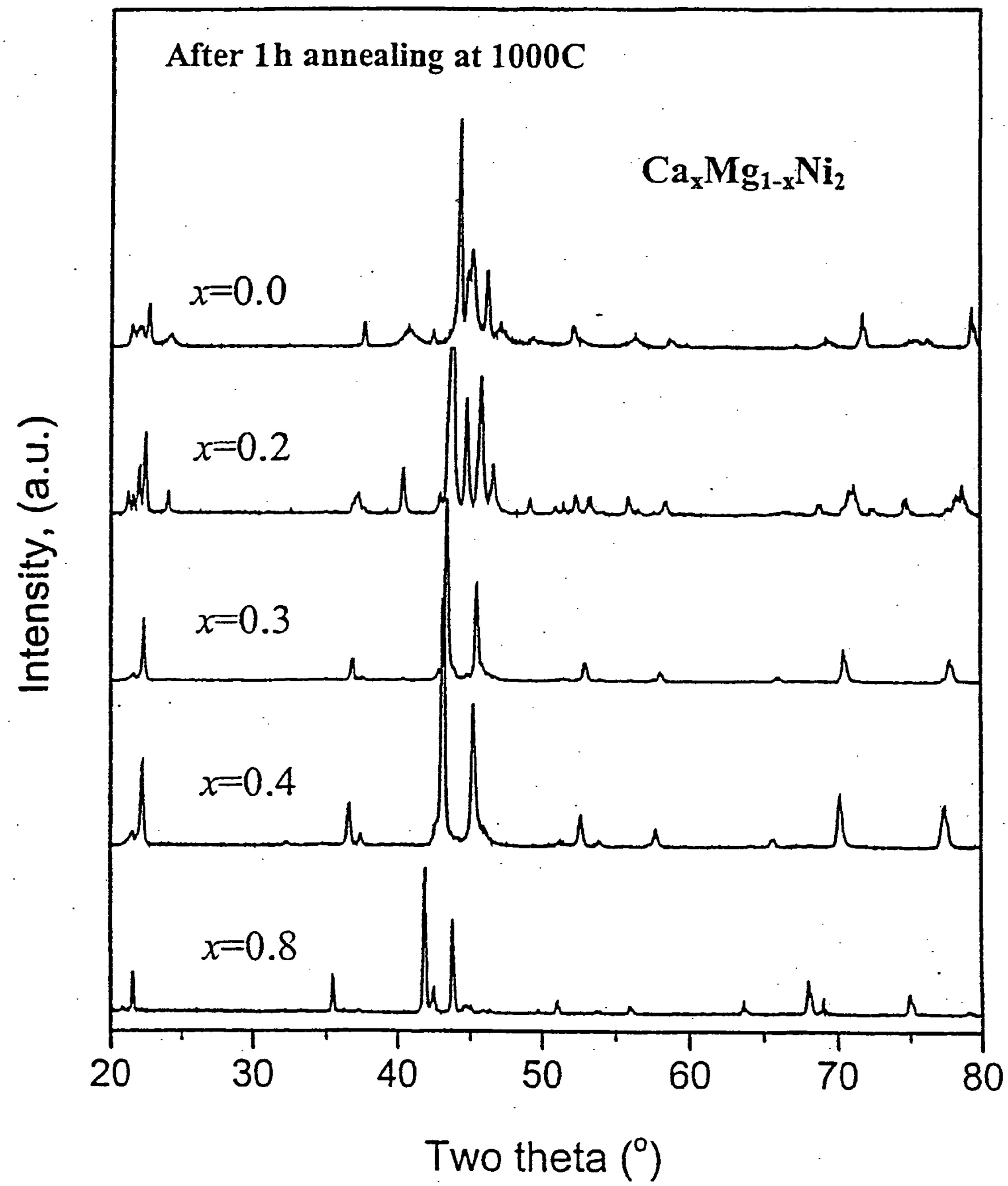
After 1h annealing at 1000C
$Ca_xMg_{1-x}Ni_2$
x=0.0
x=0.2
x=0.3
x=0.4
x=0.8
Intensity, (a.u.)
20
30
40
50
60
70
80
Two theta (°)

Fig.I-5

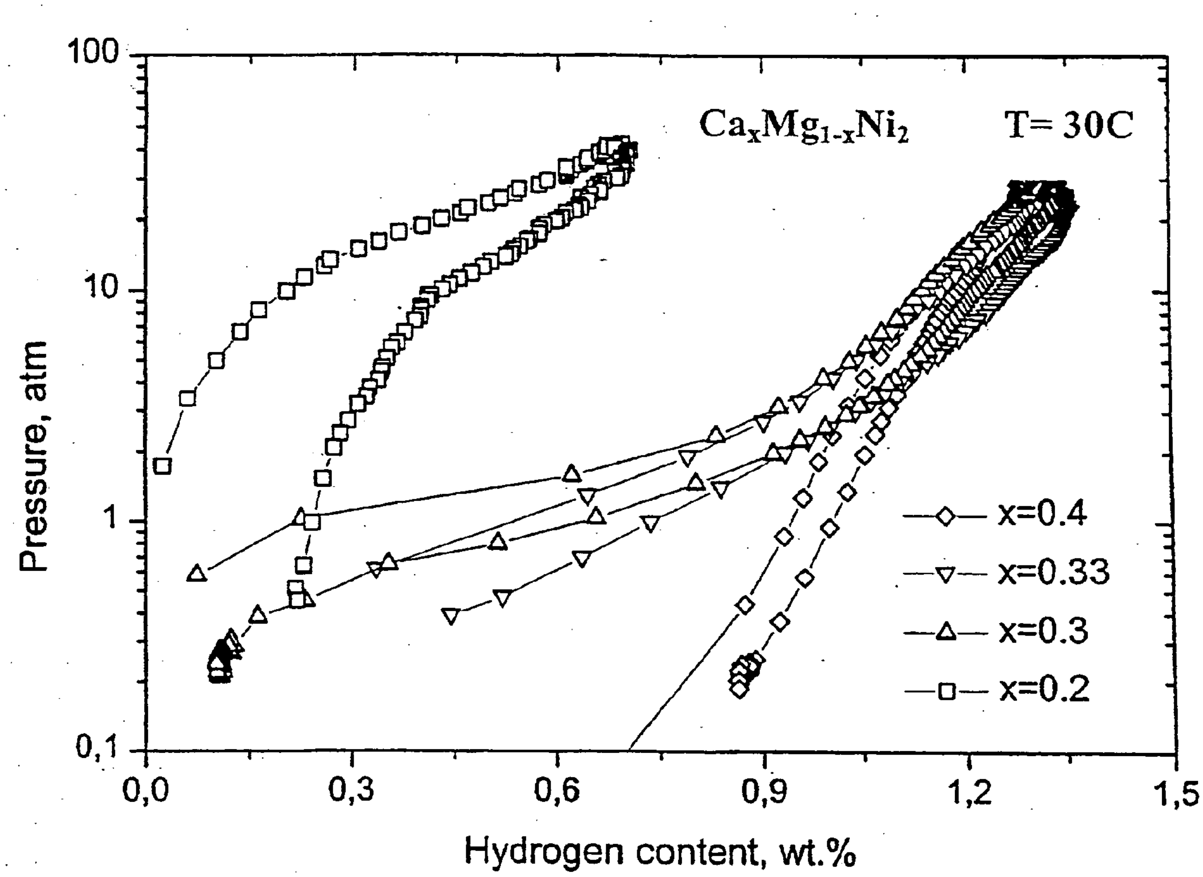
$Ca_xMg_{1-x}Ni_2$
T= 30C
Pressure, atm
100
10
1
0,1
0,0
0,3
0,6
0,9
1,2
1,5
Hydrogen content, wt.%
x=0.4
x=0.33
x=0.3
x=0.2

Fig.I-6

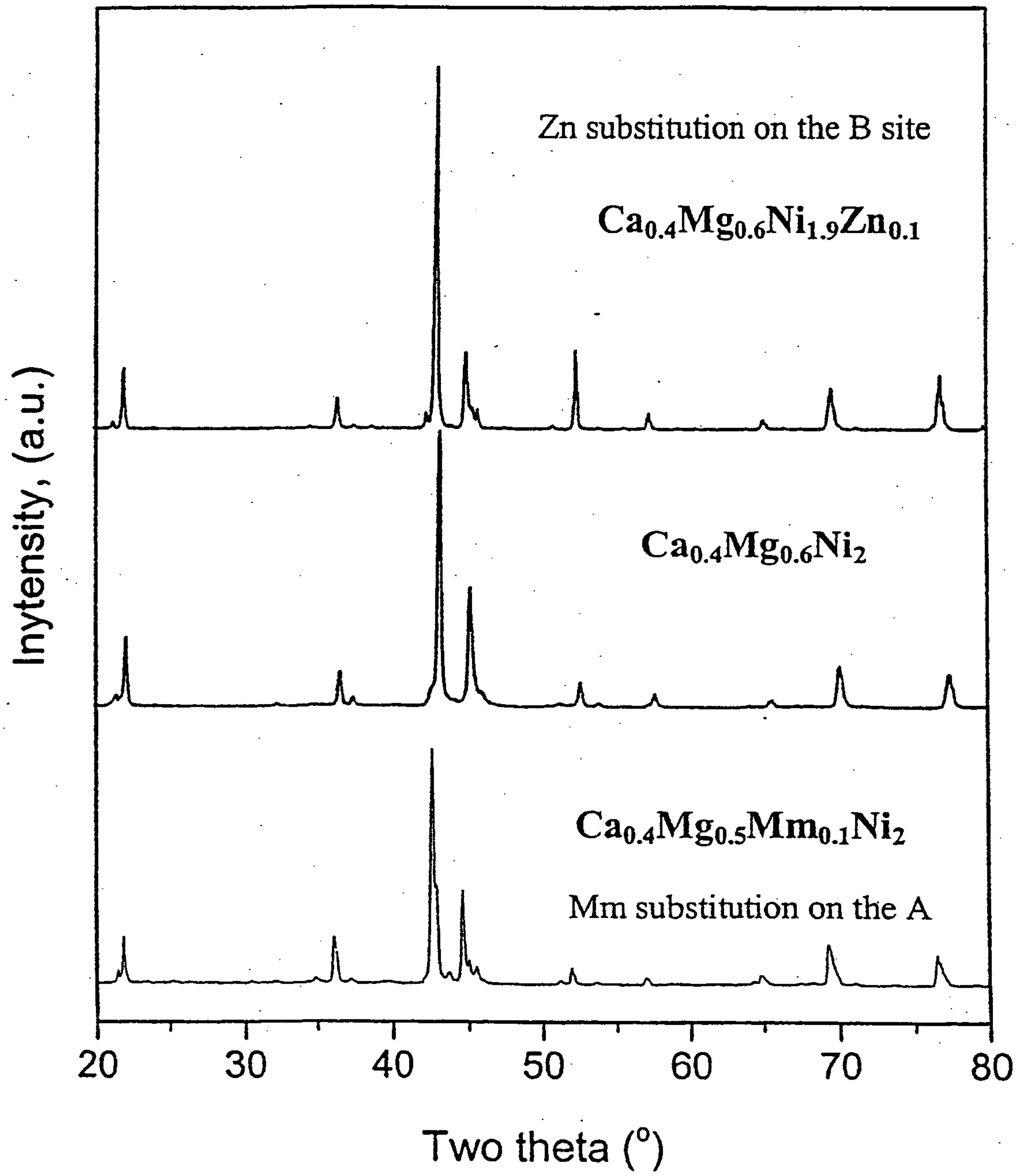
Zn substitution on the B site
Ca0.4Mg0.6Ni1.9Zn0.1
Ca0.4Mg0.6Ni2
Ca0.4Mg0.5Mm0.1Ni2
Mm substitution on the A
Inytensity, (a.u.)
20
30
40
50
60
70
80
Two theta (°)

Fig.I-7

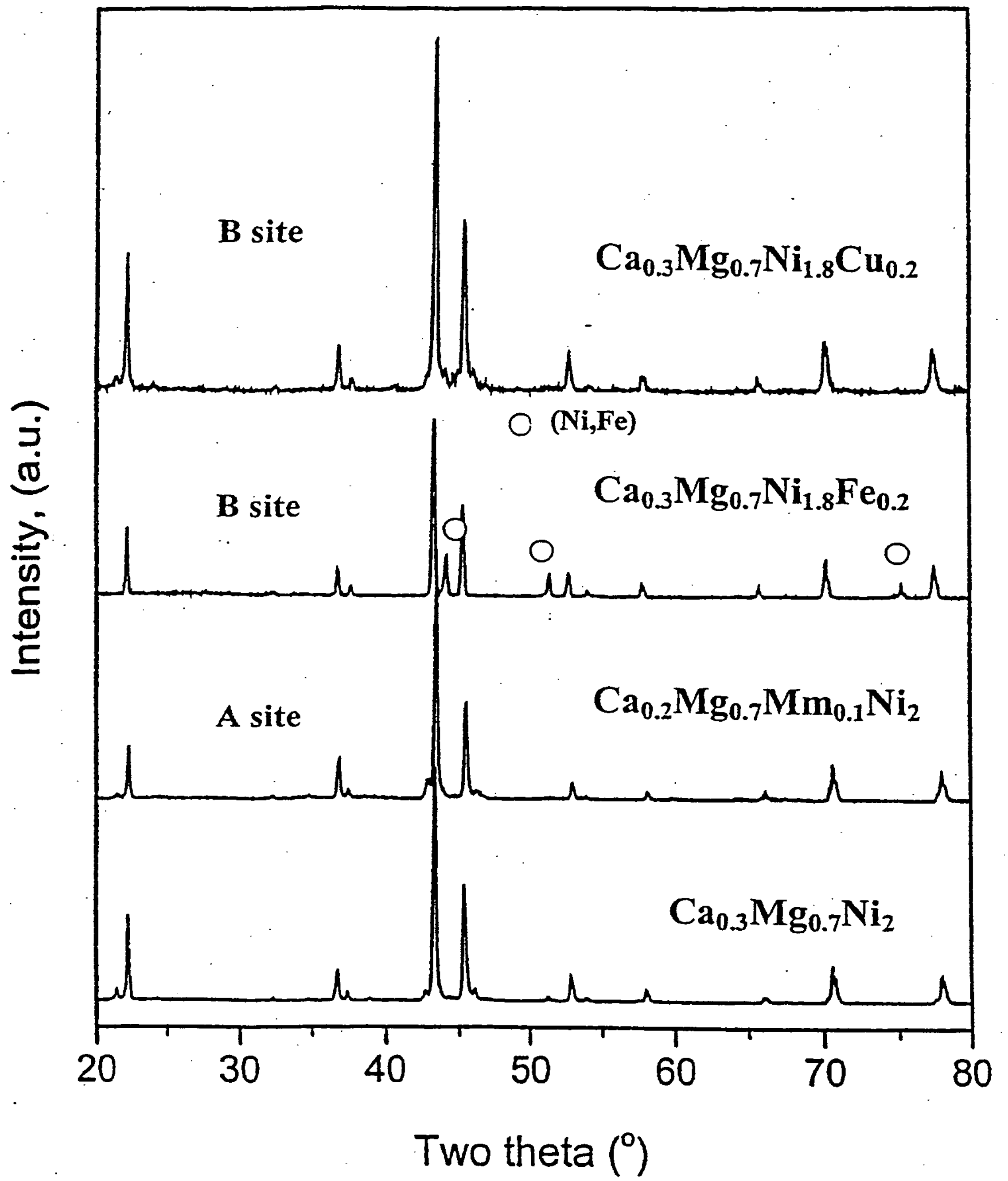
B site
$Ca_{0.3}Mg_{0.7}Ni_{1.8}Cu_{0.2}$
○ (Ni,Fe)
B site
$Ca_{0.3}Mg_{0.7}Ni_{1.8}Fe_{0.2}$
A site
$Ca_{0.2}Mg_{0.7}Mm_{0.1}Ni_2$
$Ca_{0.3}Mg_{0.7}Ni_2$
Intensity, (a.u.)
20
30
40
50
60
70
80
Two theta (°)

Fig.I-8

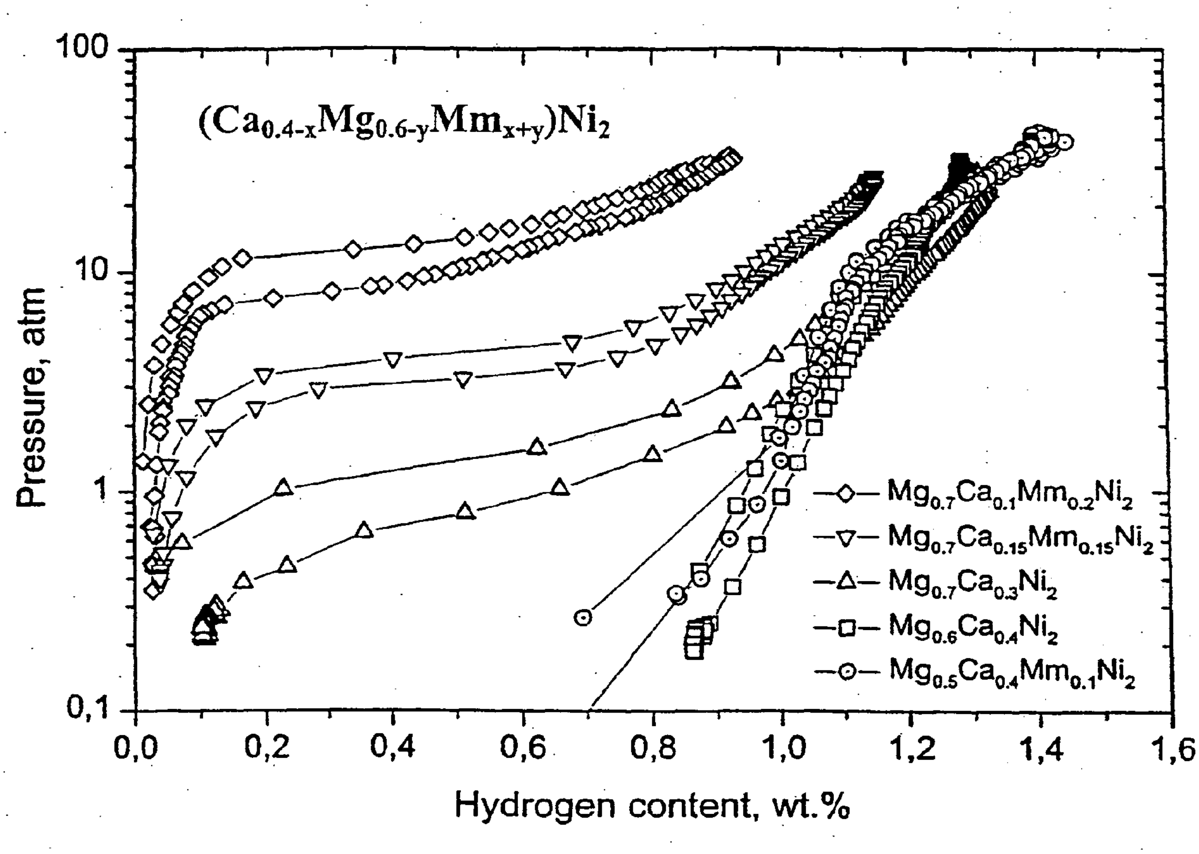
100
10
1
0,1
Pressure, atm
$(Ca_{0.4-x}Mg_{0.6-y}Mm_{x+y})Ni_2$
$Mg_{0.7}Ca_{0.1}Mm_{0.2}Ni_2$
$Mg_{0.7}Ca_{0.15}Mm_{0.15}Ni_2$
$Mg_{0.7}Ca_{0.3}Ni_2$
$Mg_{0.6}Ca_{0.4}Ni_2$
$Mg_{0.5}Ca_{0.4}Mm_{0.1}Ni_2$
0,0
0,2
0,4
0,6
0,8
1,0
1,2
1,4
1,6
Hydrogen content, wt.%

Fig.I-9

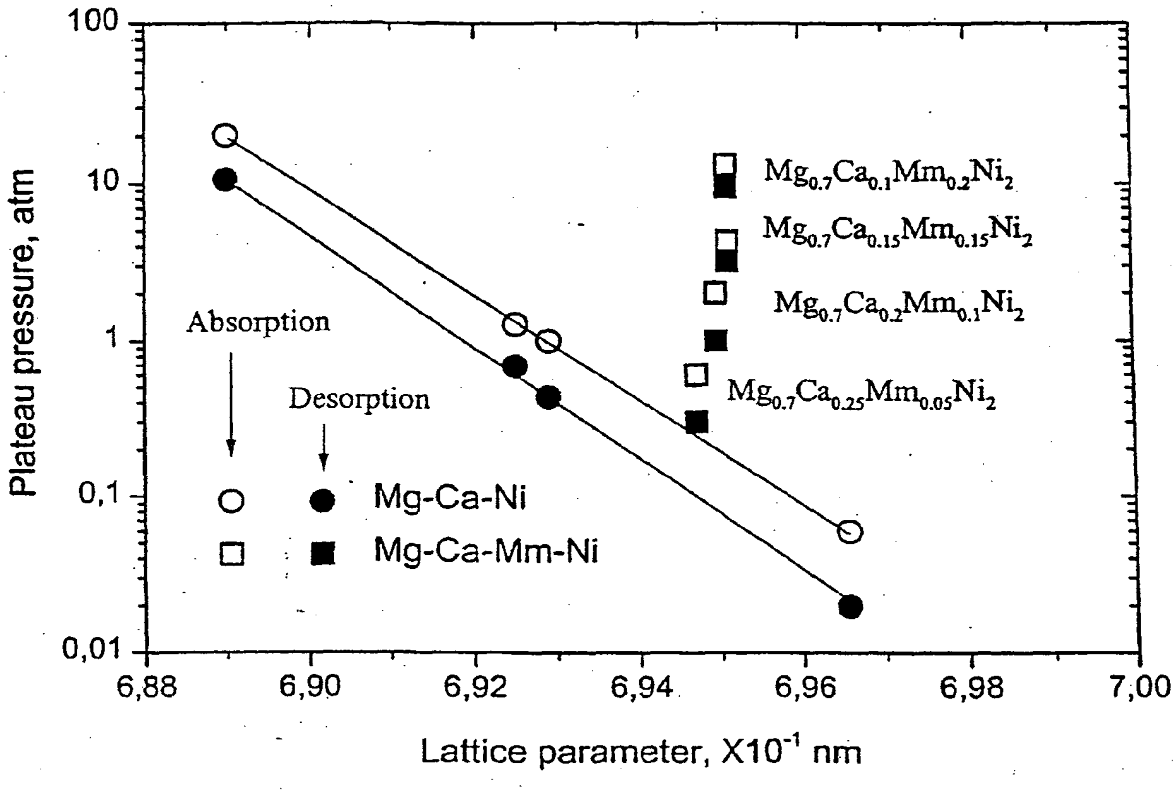
100
10
1
0,1
0,01
Plateau pressure, atm
6,88
6,90
6,92
6,94
6,96
6,98
7,00
Lattice parameter, X10-1 nm
Absorption
Desorption
Mg-Ca-Ni
Mg-Ca-Mm-Ni
Mg0.7Ca0.1Mm0.2Ni2
Mg0.7Ca0.15Mm0.15Ni2
Mg0.7Ca0.2Mm0.1Ni2
Mg0.7Ca0.25Mm0.05Ni2

Fig. 2-1

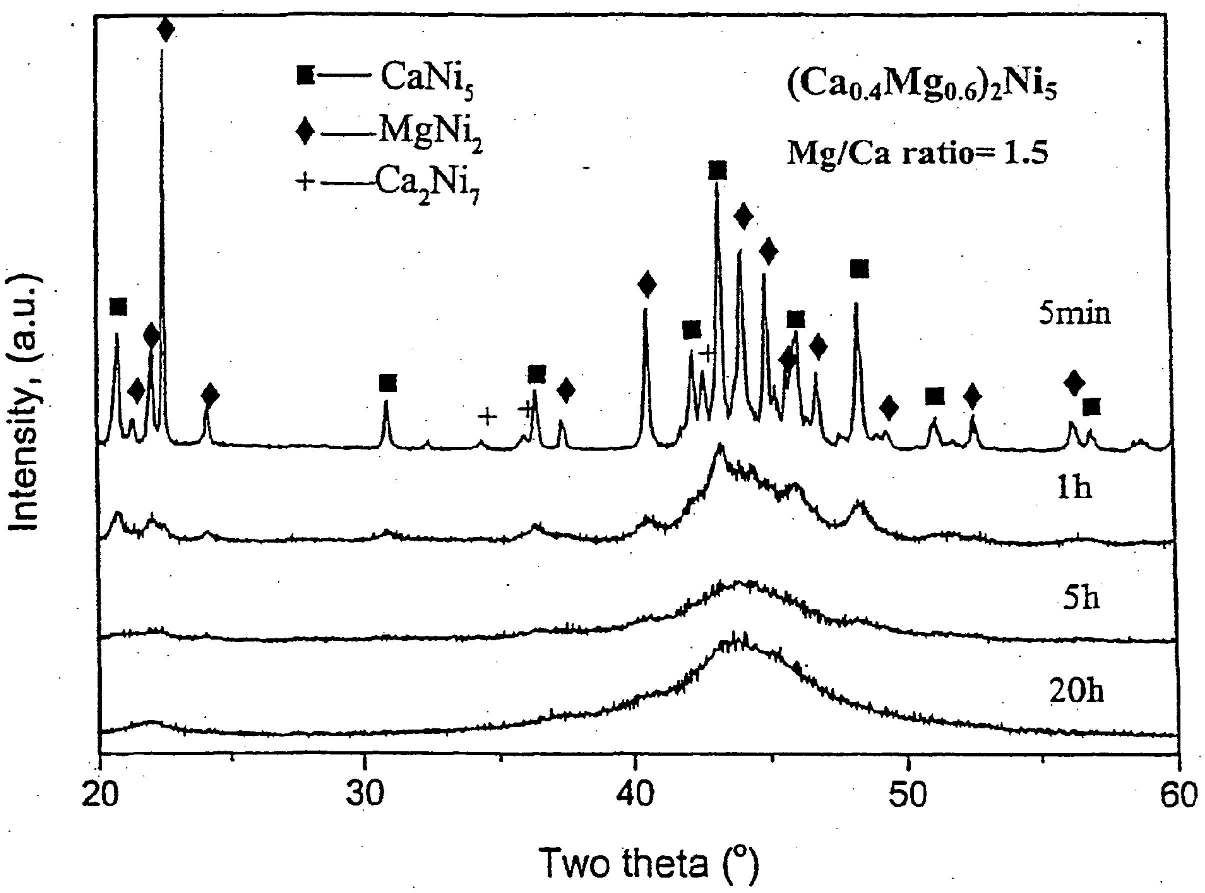
■— CaNi5
♦—MgNi2
+—Ca2Ni7
(Ca0.4Mg0.6)2Ni5
Mg/Ca ratio= 1.5
5min
1h
5h
20h
Intensity, (a.u.)
20
30
40
50
60
Two theta (°)

Fig. 2-2

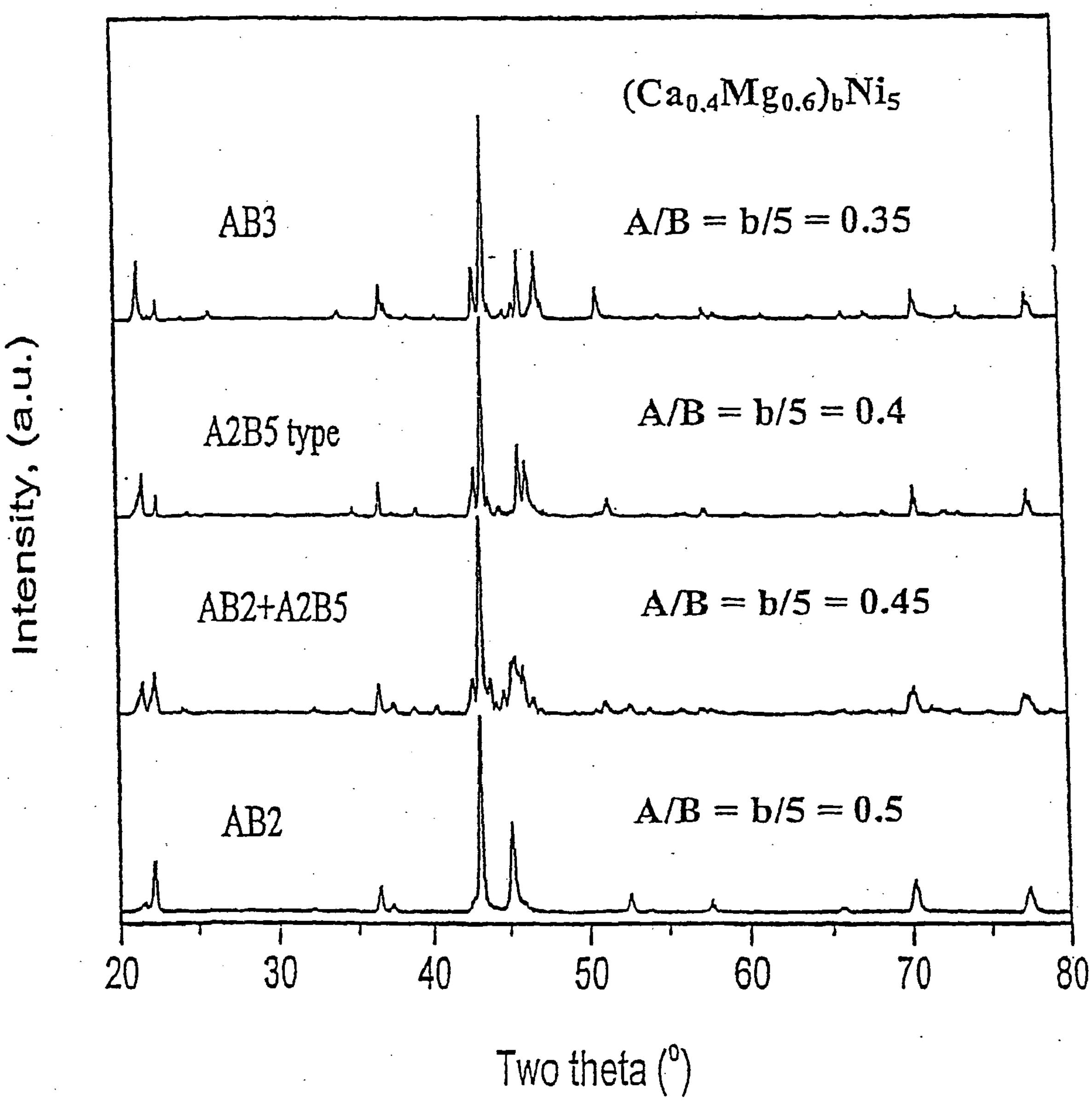
$(Ca_{0.4}Mg_{0.6})_bNi_5$
AB3
A/B = b/5 = 0.35
A2B5 type
A/B = b/5 = 0.4
AB2+A2B5
A/B = b/5 = 0.45
AB2
A/B = b/5 = 0.5
Intensity, (a.u.)
20
30
40
50
60
70
80
Two theta (°)

Fig. 2-3

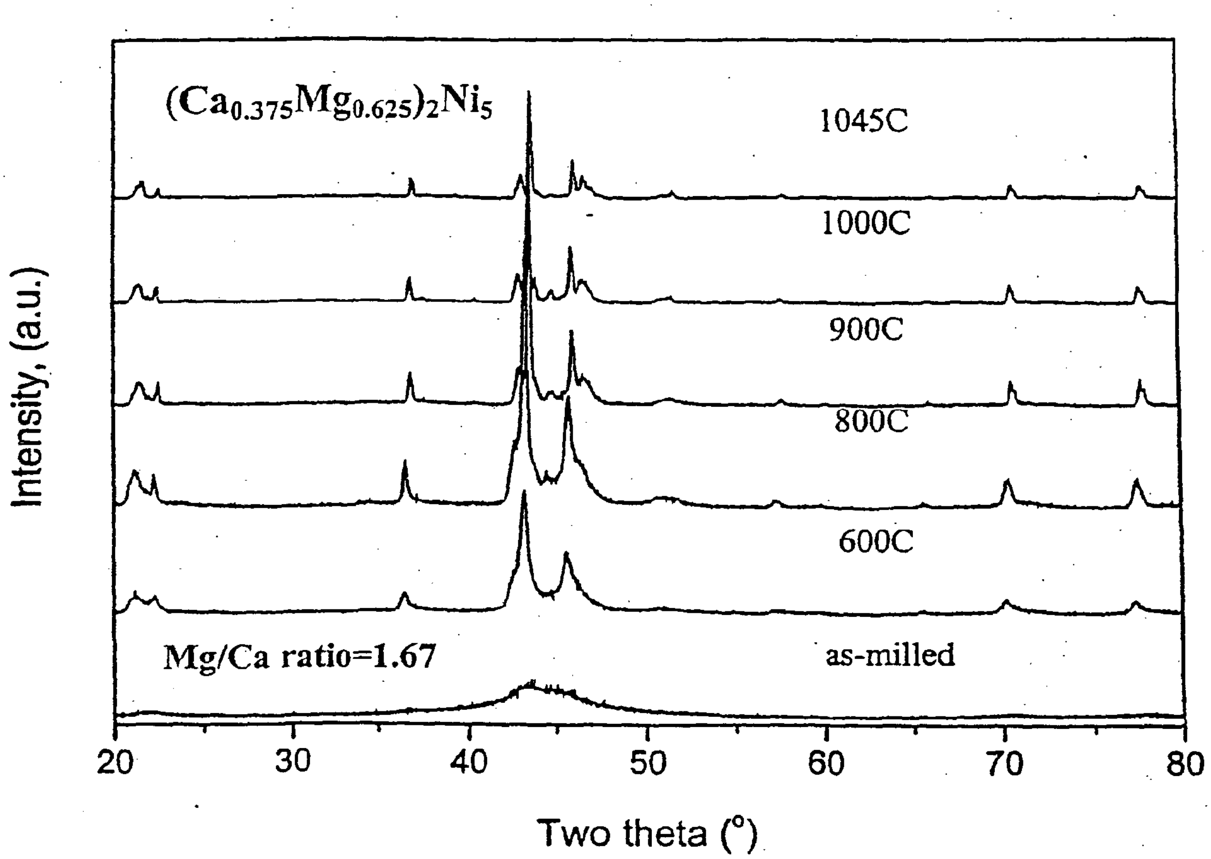
(Ca0.375Mg0.625)2Ni5
1045C
1000C
900C
800C
600C
Mg/Ca ratio=1.67
as-milled
Intensity, (a.u.)
20
30
40
50
60
70
80
Two theta (°)

Fig. 2-4

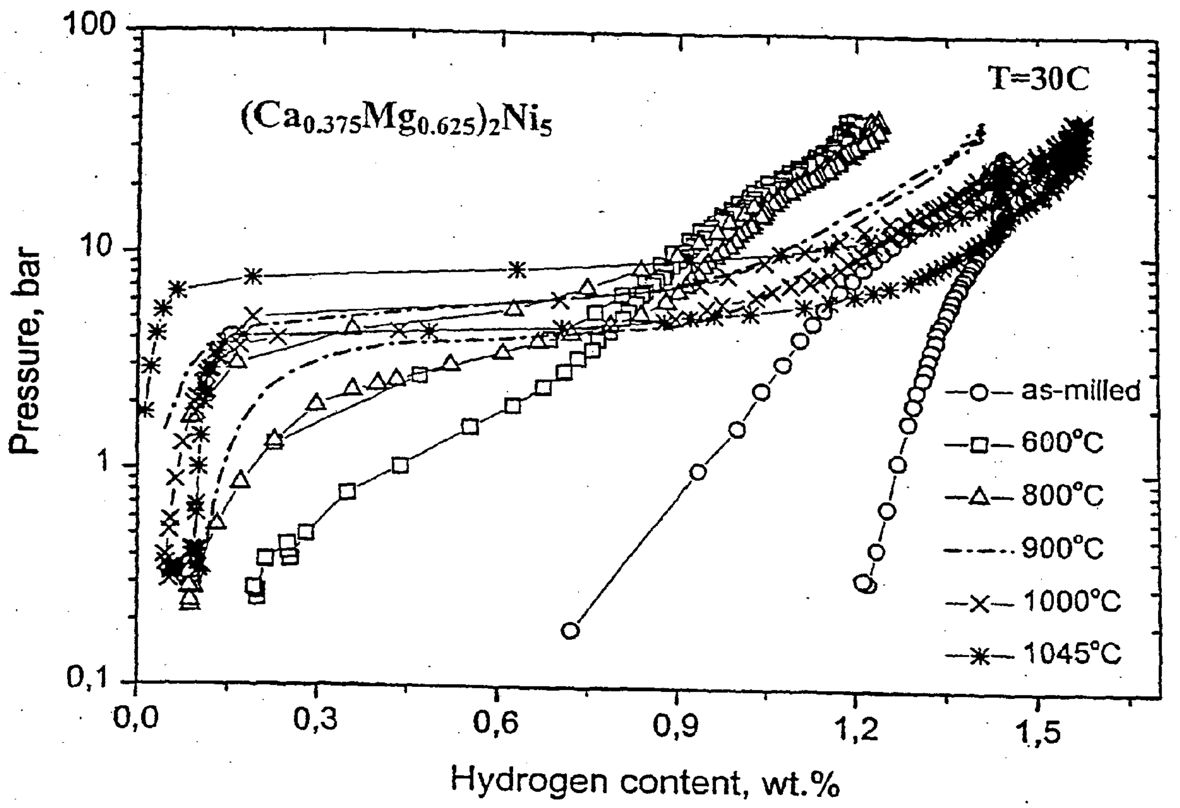
$(Ca_{0.375}Mg_{0.625})_2Ni_5$
T=30C
Pressure, bar
Hydrogen content, wt.%
100
10
1
0,1
0,0
0,3
0,6
0,9
1,2
1,5
as-milled
600°C
800°C
900°C
1000°C
1045°C

Fig. 2-5

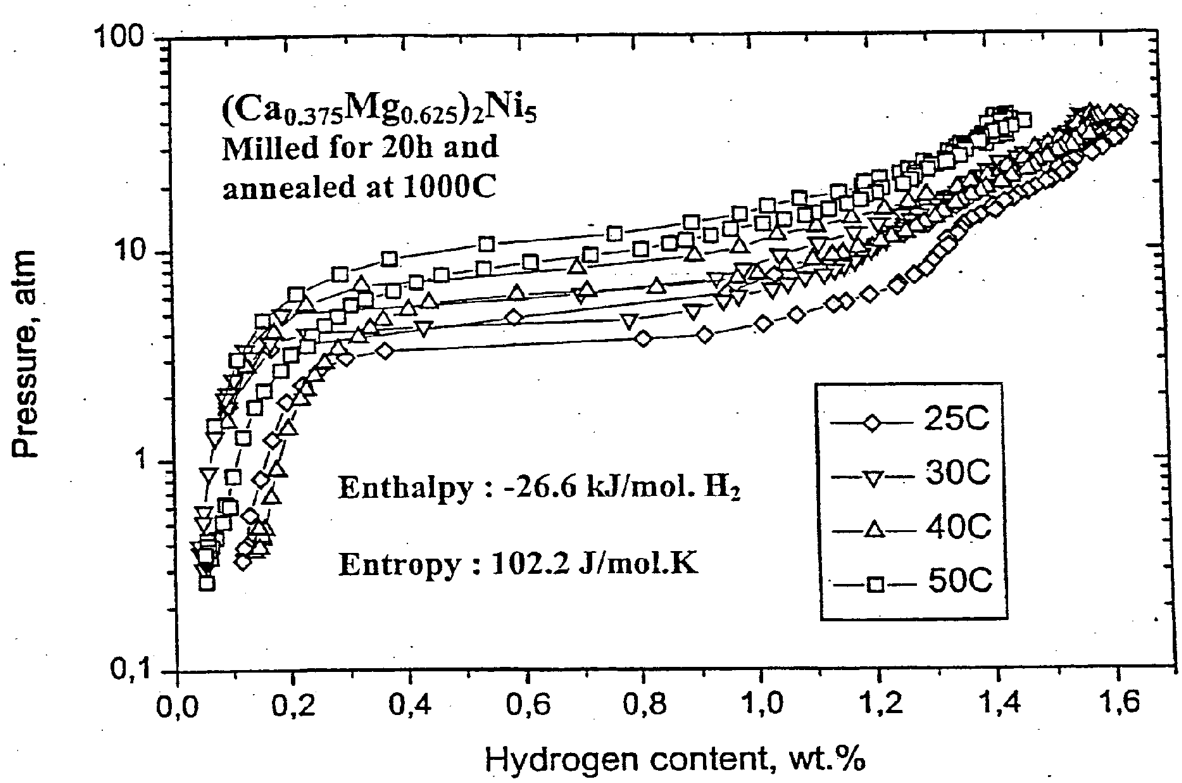

100
10
1
0,1
Pressure, atm
0,0
0,2
0,4
0,6
0,8
1,0
1,2
1,4
1,6
Hydrogen content, wt.%
$(Ca_{0.375}Mg_{0.625})_2Ni_5$
Milled for 20h and
annealed at 1000C
Enthalpy : -26.6 kJ/mol. $H_2$
Entropy : 102.2 J/mol.K
25C
30C
40C
50C

Fig. 2-6

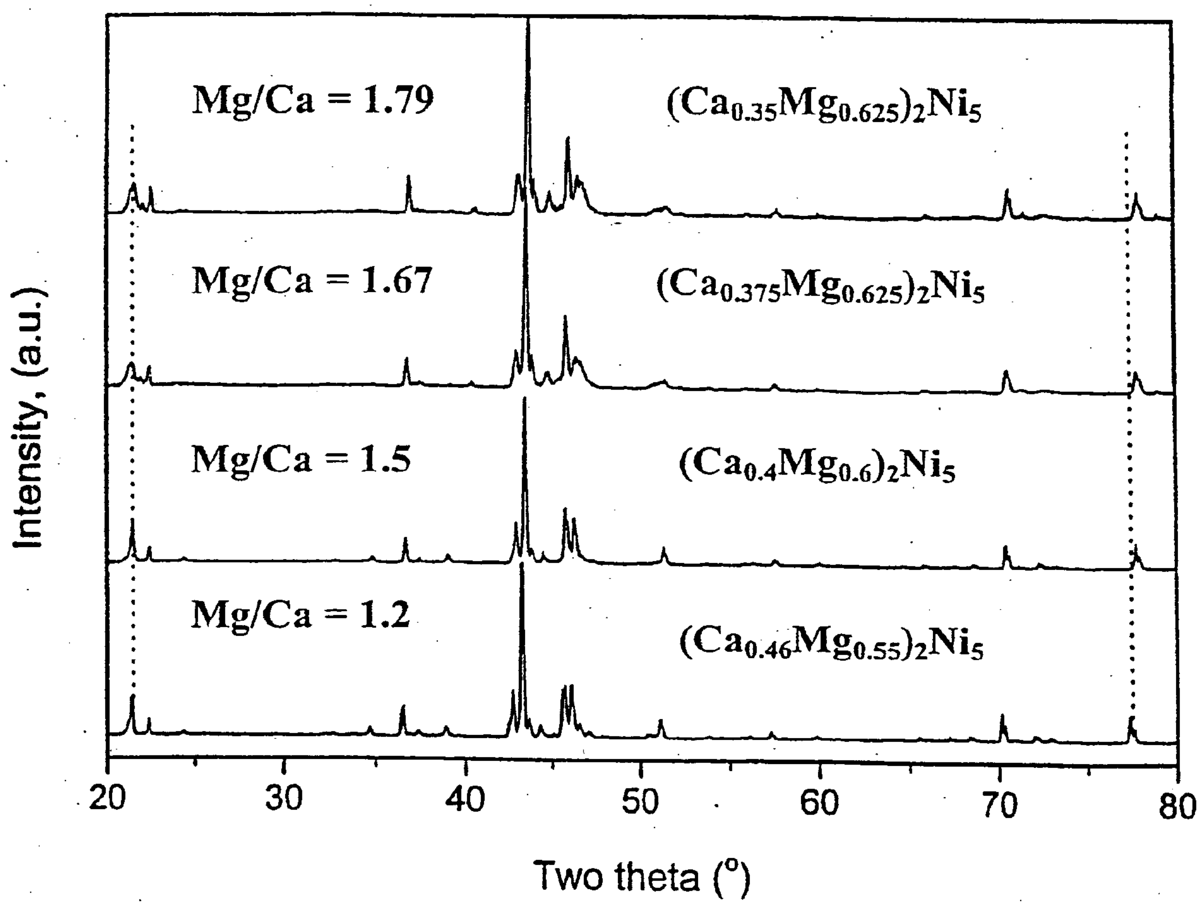
Mg/Ca = 1.79
(Ca0.35Mg0.625)2Ni5
Mg/Ca = 1.67
(Ca0.375Mg0.625)2Ni5
Mg/Ca = 1.5
(Ca0.4Mg0.6)2Ni5
Mg/Ca = 1.2
(Ca0.46Mg0.55)2Ni5
Intensity, (a.u.)
20
30
40
50
60
70
80
Two theta (°)

Fig. 2-7

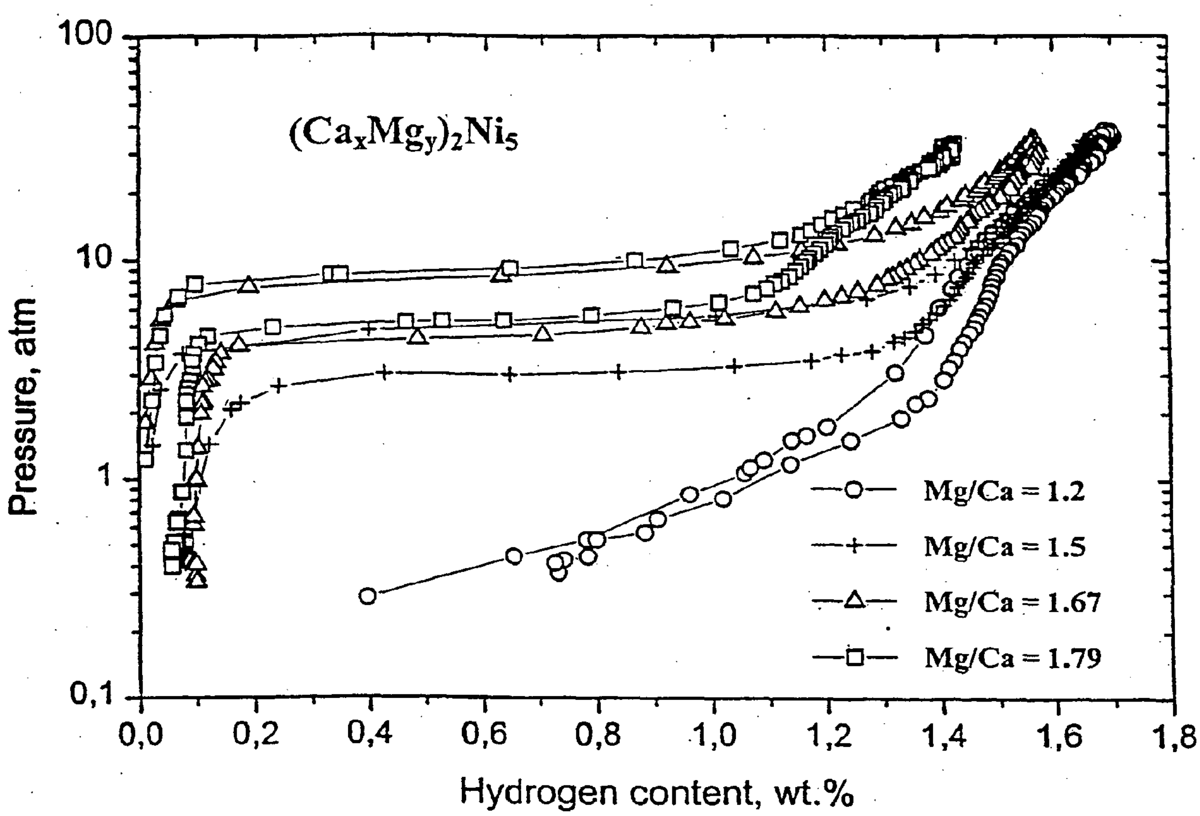

(Ca$_x$Mg$_y$)$_2$Ni$_5$
Pressure, atm
100
10
1
0,1
0,0
0,2
0,4
0,6
0,8
1,0
1,2
1,4
1,6
1,8
Hydrogen content, wt.%
Mg/Ca = 1.2
Mg/Ca = 1.5
Mg/Ca = 1.67
Mg/Ca = 1.79

Fig. 2-8 - Substitution on the A site

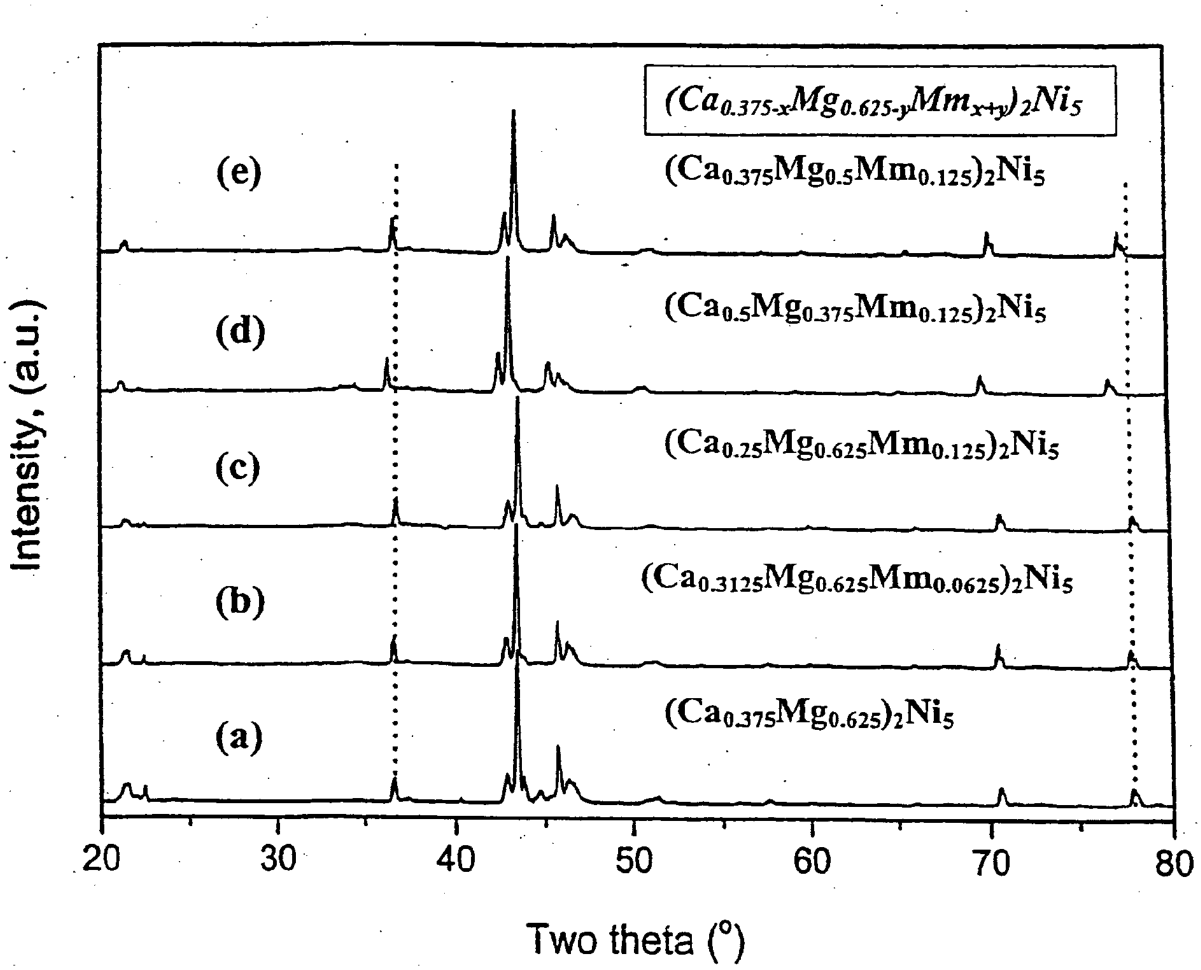

Fig. 2-9

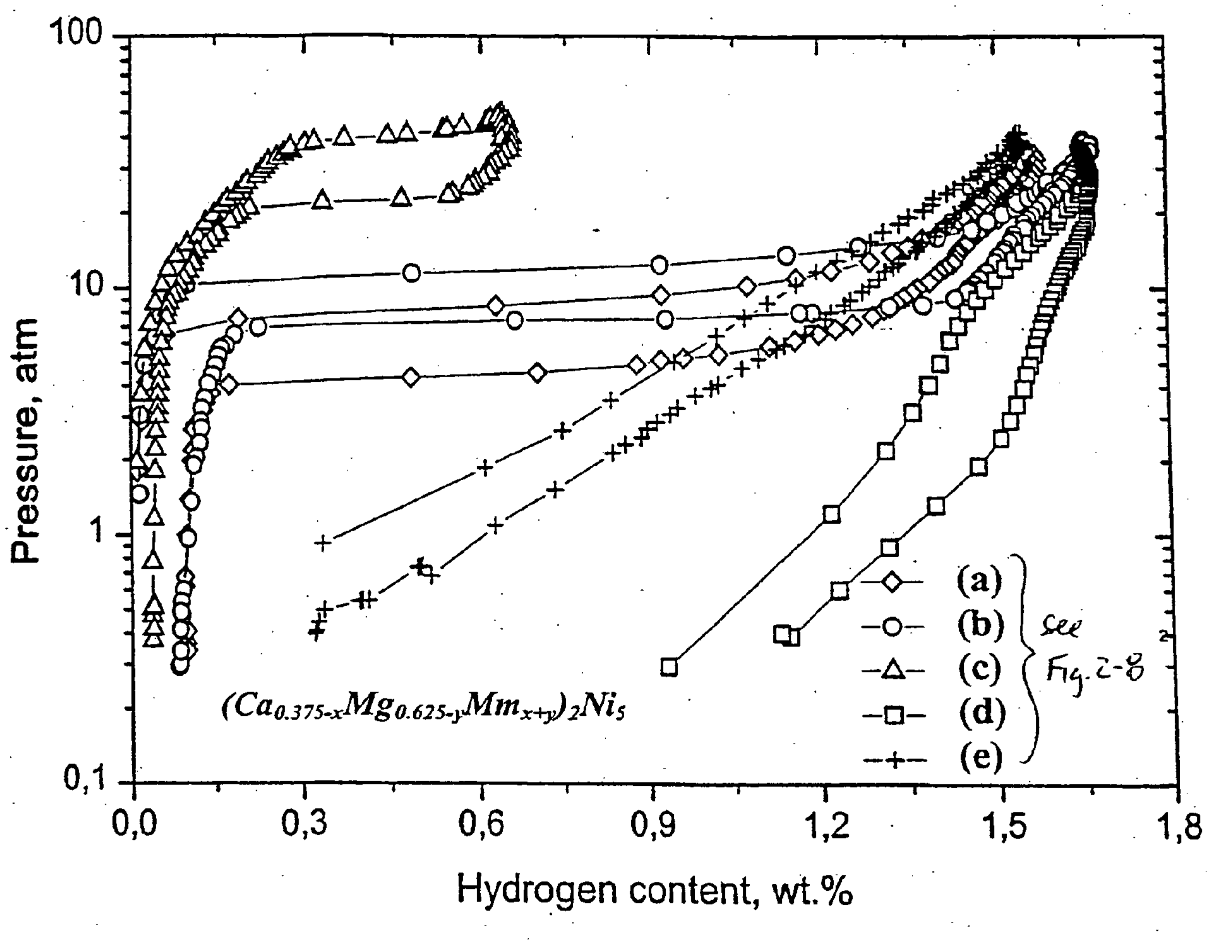
100
10
1
0,1
Pressure, atm
0,0
0,3
0,6
0,9
1,2
1,5
1,8
Hydrogen content, wt.%
$(Ca_{0.375-x}Mg_{0.625-y}Mm_{x+y})_2Ni_5$
(a)
(b)
(c)
(d)
(e)
see Fig. 2-8

Fig. 2-10

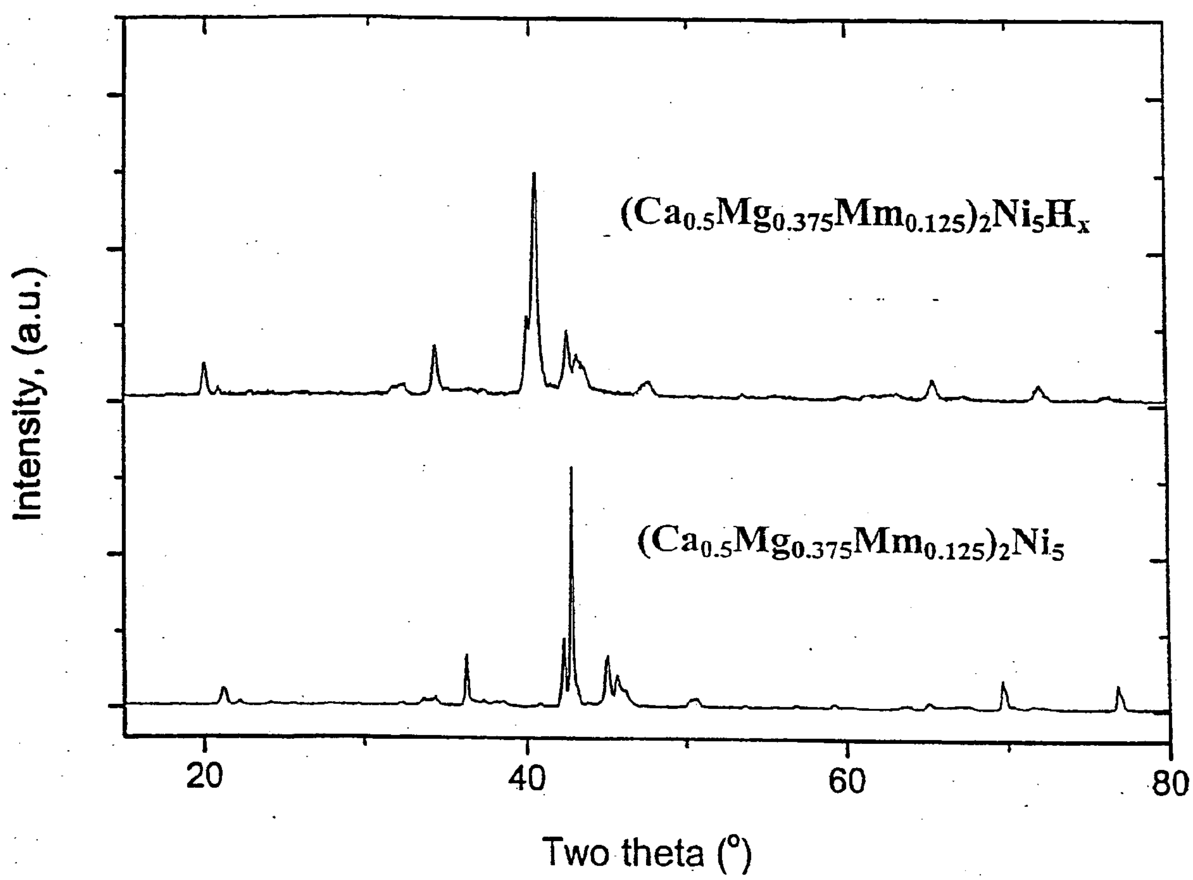
(Ca0.5Mg0.375Mm0.125)2Ni5Hx
(Ca0.5Mg0.375Mm0.125)2Ni5
Intensity, (a.u.)
20
40
60
80
Two theta (°)

Fig. 2-11 - Substitution on the B site

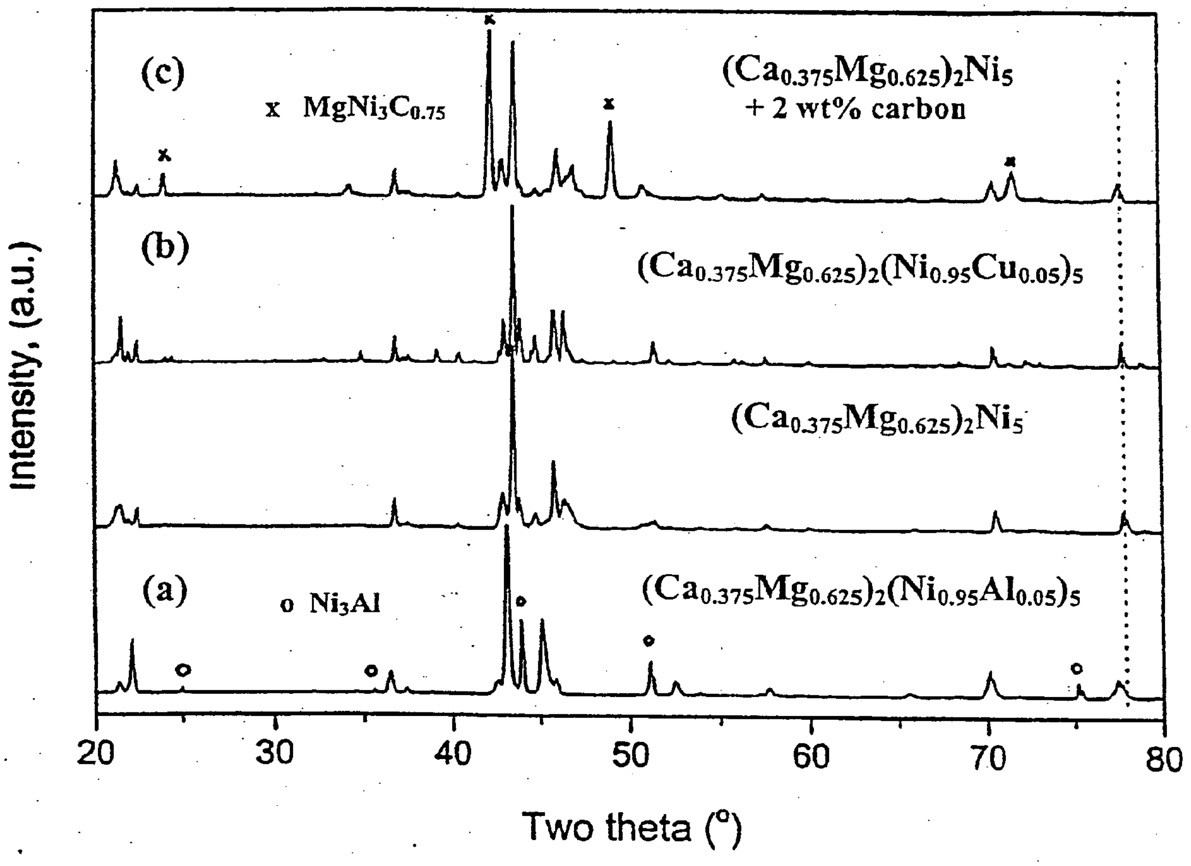

Fig. 2-12

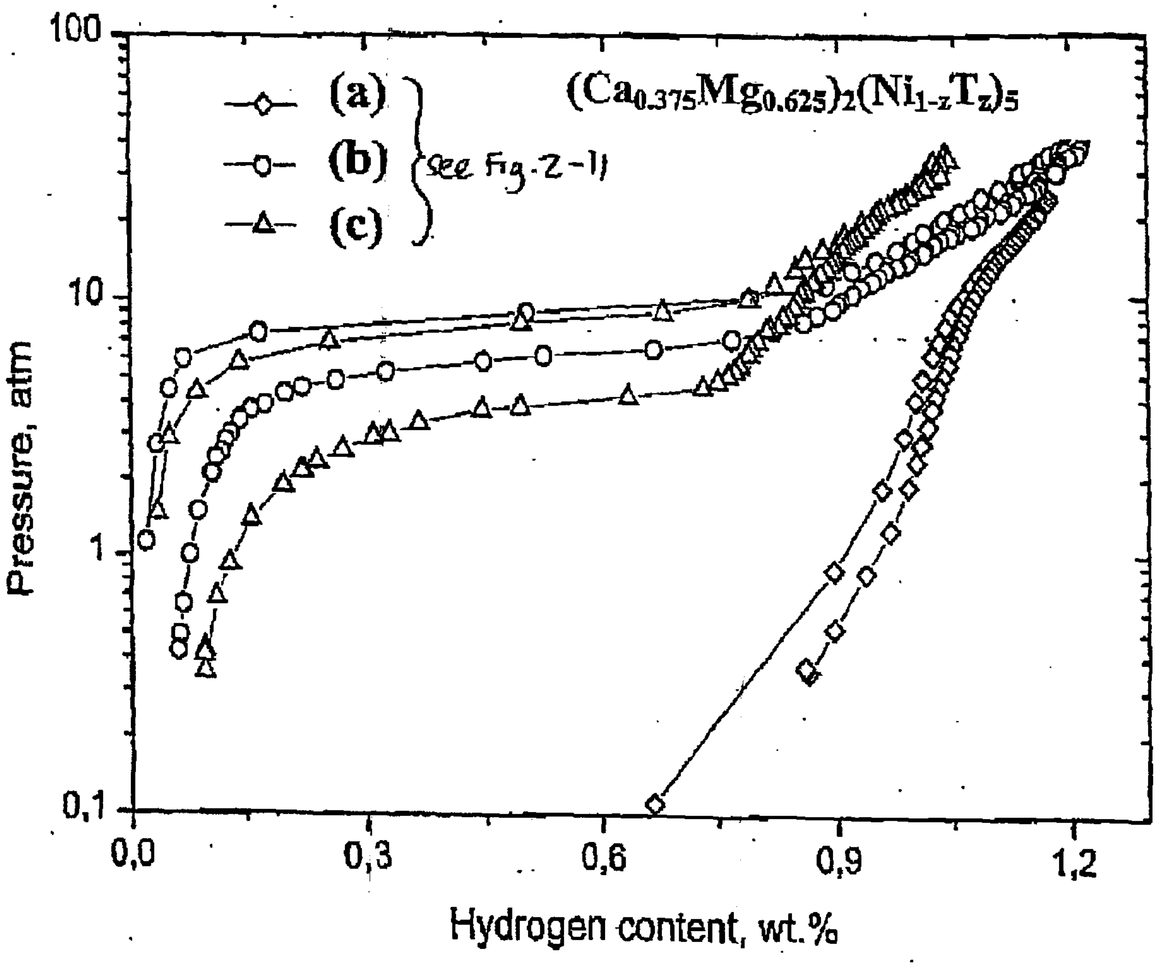


(a) is $(Ca_{0.375}Mg_{0.625})_2(Ni_{0.95}Al_{0.05})_5$

(b) is $(Ca_{0.375}Mg_{0.625})_2(Ni_{0.95}Cu_{0.05})_5$

(c) is $(Ca_{0.375}Mg_{0.625})_2Ni_5$ + 2wt% carbon

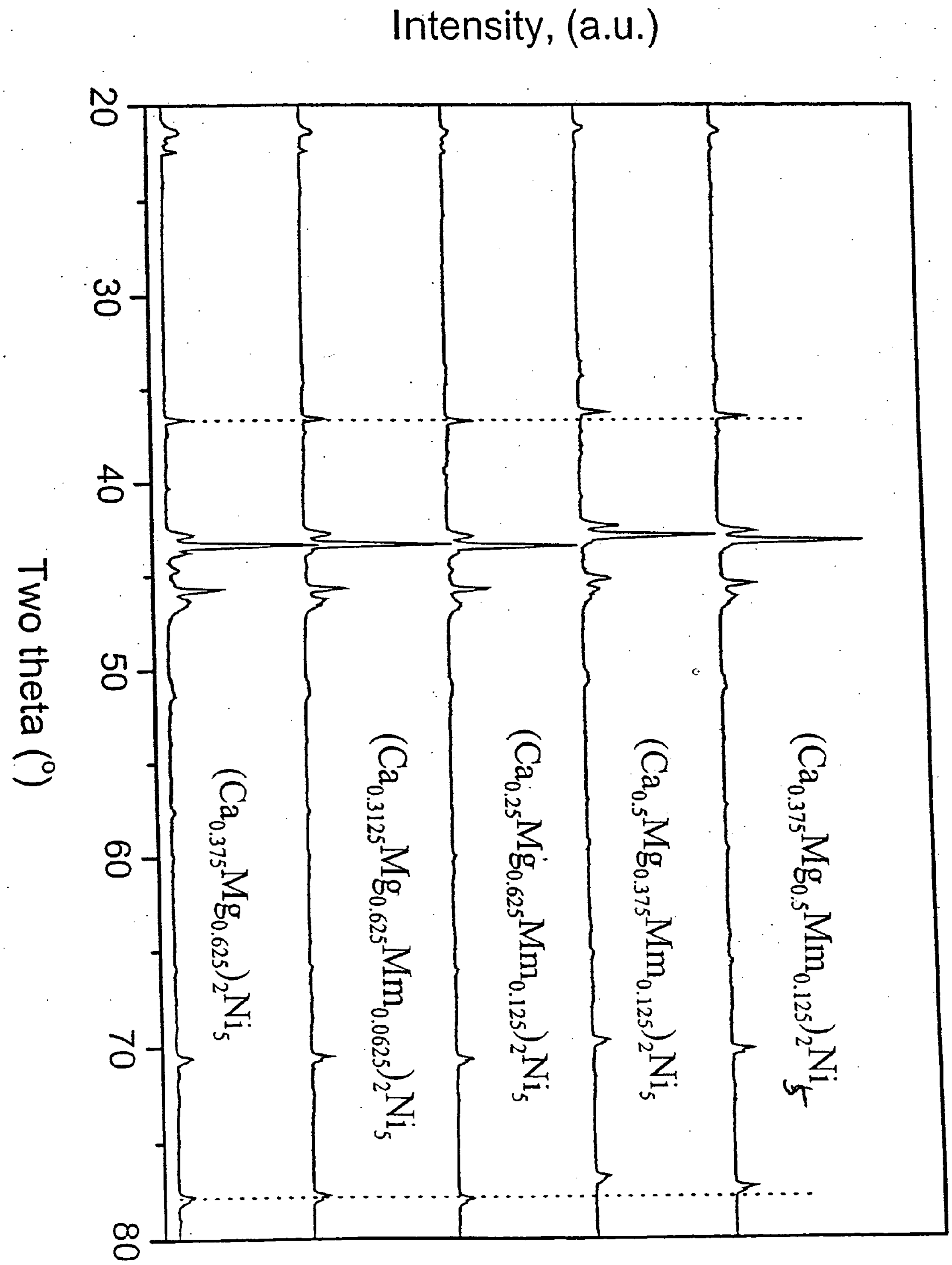
Intensity, (a.u.)
Two theta (°)
20
30
40
50
60
70
80
$(Ca_{0.375}Mg_{0.5}Mm_{0.125})_2Ni_5$
$(Ca_{0.5}Mg_{0.375}Mm_{0.125})_2Ni_5$
$(Ca_{0.25}Mg_{0.625}Mm_{0.125})_2Ni_5$
$(Ca_{0.3125}Mg_{0.625}Mm_{0.0625})_2Ni_5$
$(Ca_{0.375}Mg_{0.625})_2Ni_5$

FIG. 2-13

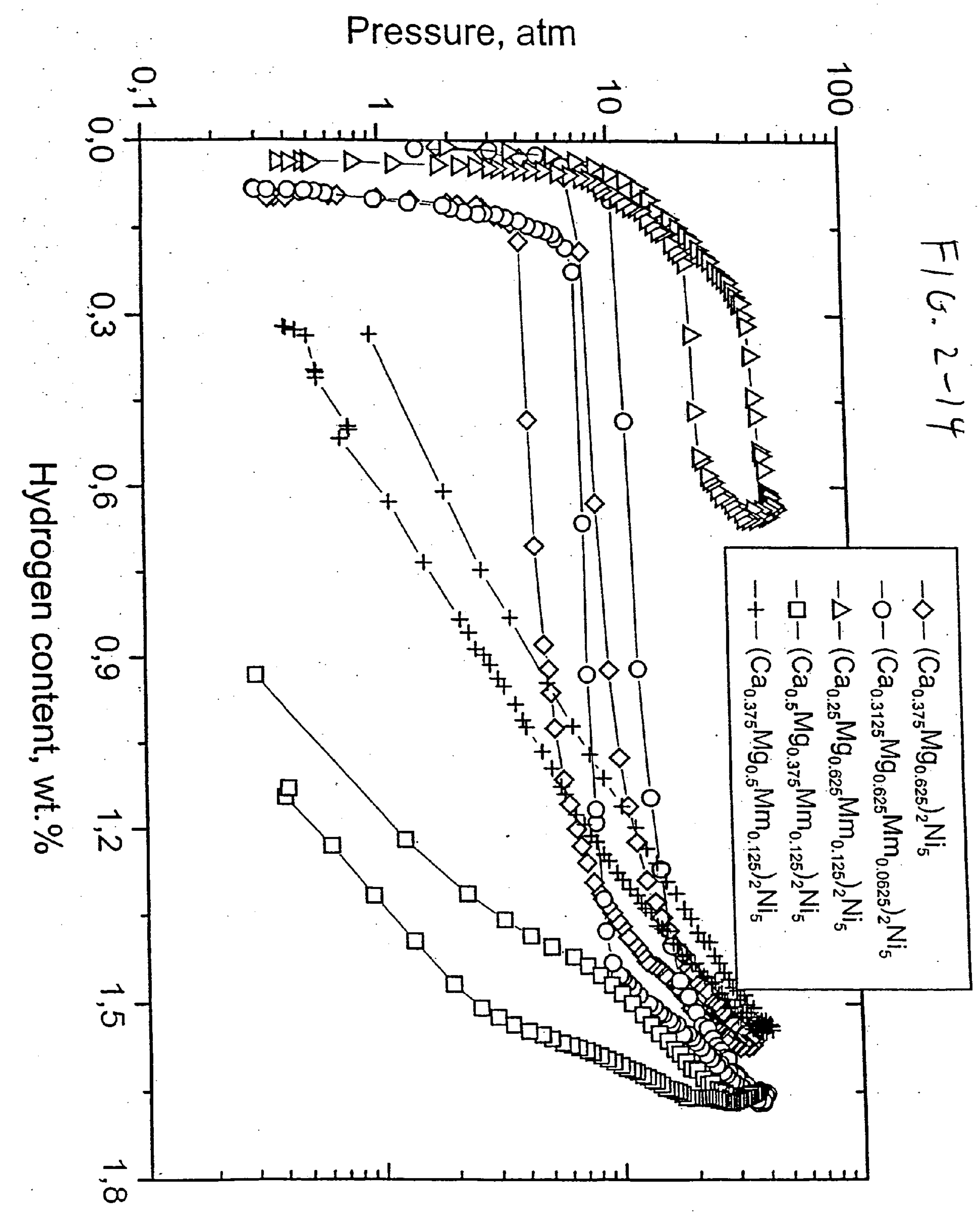
Pressure, atm
0,1
1
10
100
Hydrogen content, wt.%
0,0
0,3
0,6
0,9
1,2
1,5
1,8
$(Ca_{0.375}Mg_{0.625})_2Ni_5$
$(Ca_{0.3125}Mg_{0.625}Mm_{0.0625})_2Ni_5$
$(Ca_{0.25}Mg_{0.625}Mm_{0.125})_2Ni_5$
$(Ca_{0.5}Mg_{0.375}Mm_{0.125})_2Ni_5$
$(Ca_{0.375}Mg_{0.5}Mm_{0.125})_2Ni_5$

FIG. 2-14

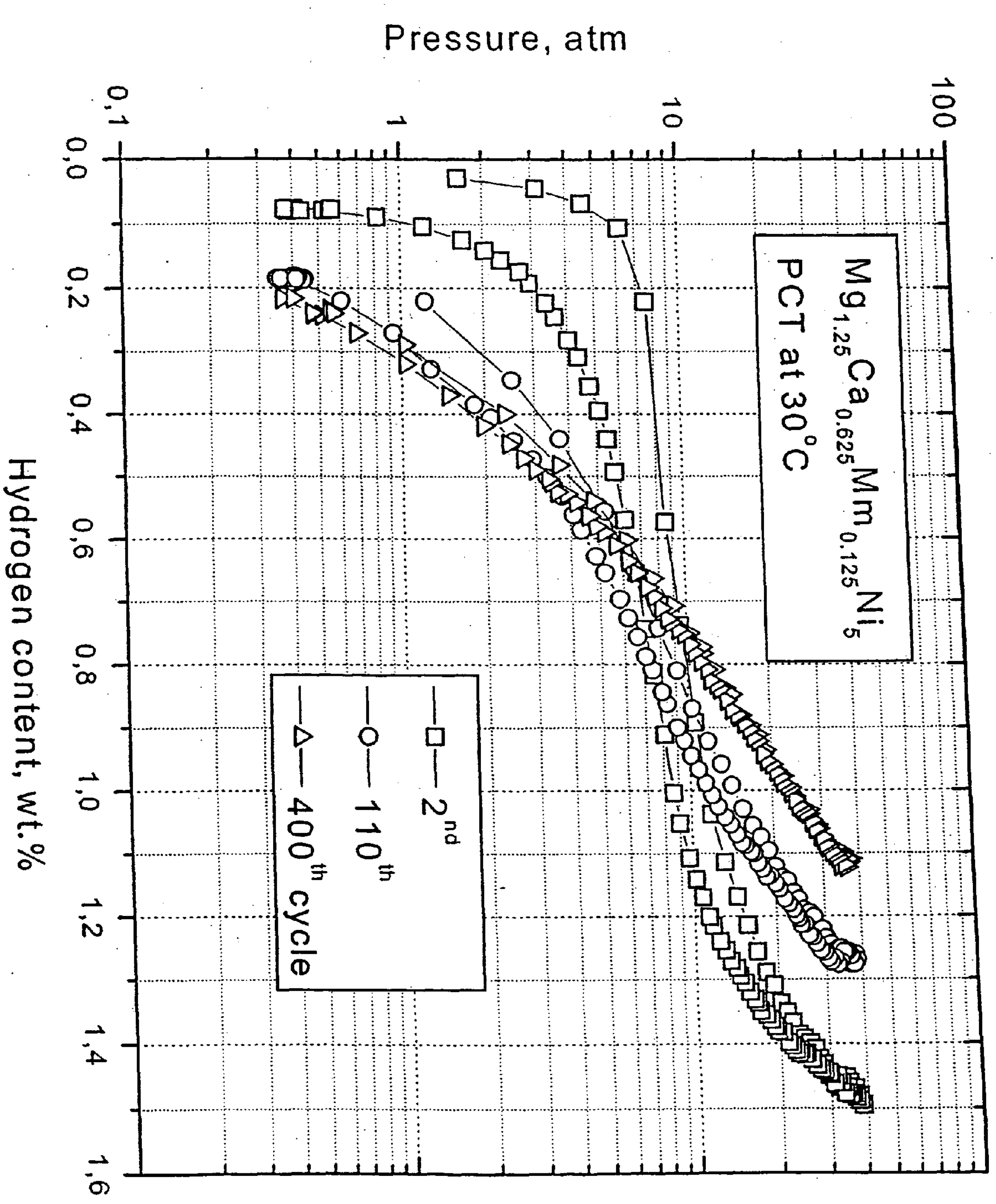
Pressure, atm
0,1
1
10
100
0,0
0,2
0,4
0,6
0,8
1,0
1,2
1,4
1,6
Hydrogen content, wt.%
$Mg_{1,25}Ca_{0,625}Mm_{0,125}Ni_5$
PCT at 30°C
2nd
110th
400th cycle

FIG. 2-15

FIG. 2-16

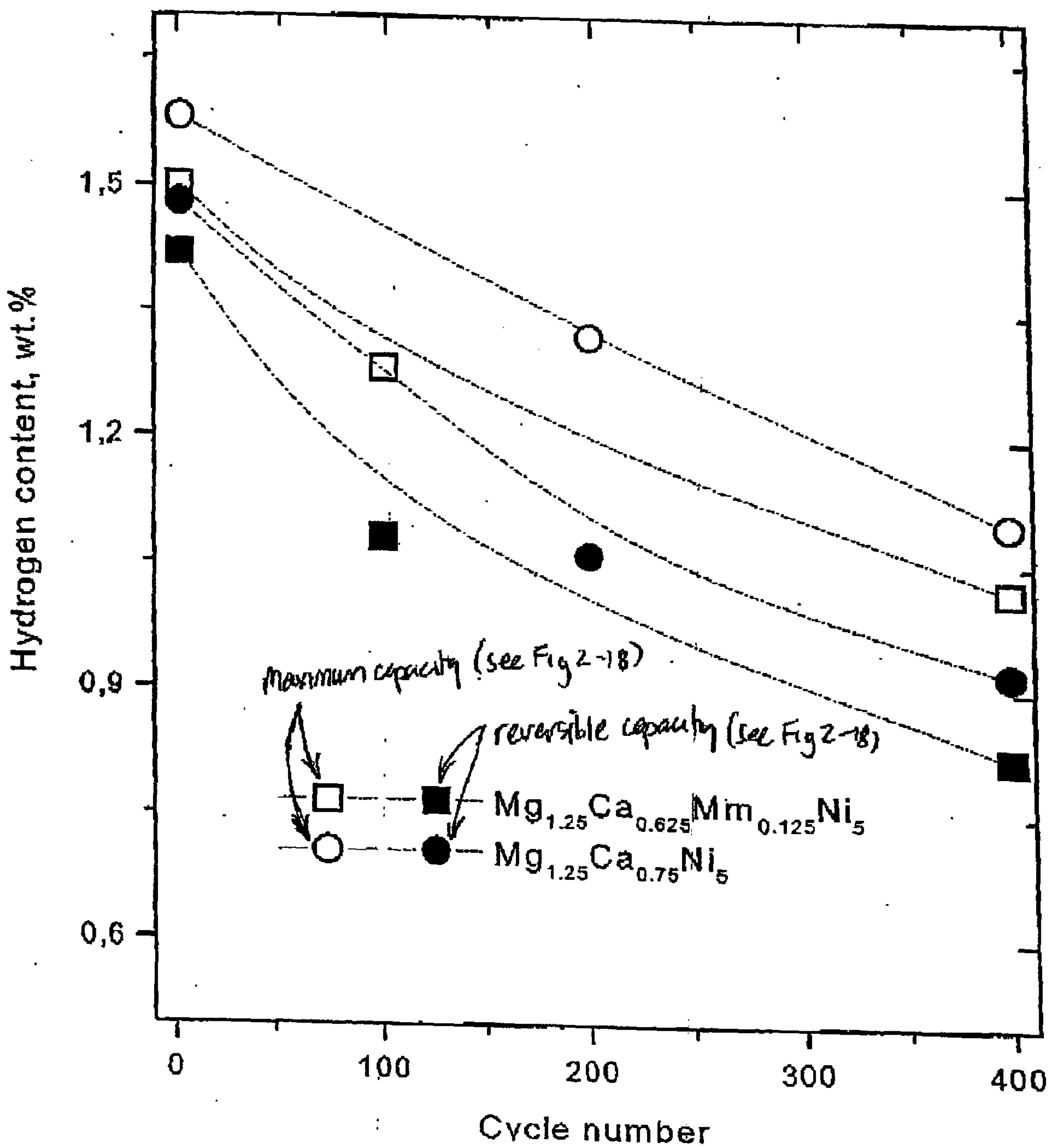
Hydrogen content, wt.%
1,5
1,2
0,9
0,6
0
100
200
300
400
Cycle number
maximum capacity (see Fig 2-18)
reversible capacity (see Fig 2-18)
$Mg_{1.25}Ca_{0.625}Mm_{0.125}Ni_5$
$Mg_{1.25}Ca_{0.75}Ni_5$

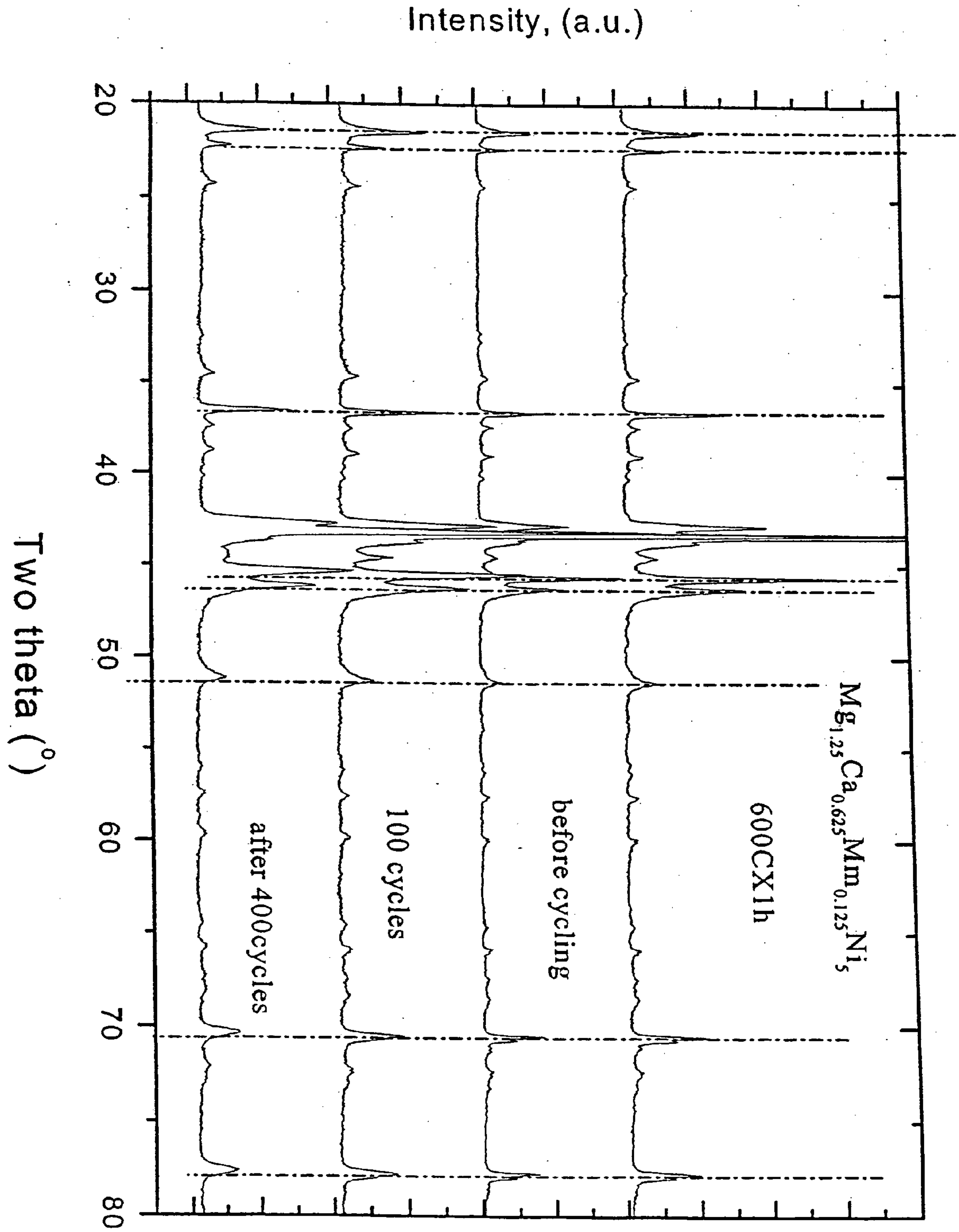
Intensity, (a.u.)
Two theta (°)
20
30
40
50
60
70
80
$Mg_{1.25}Ca_{0.625}Mm_{0.125}Ni_5$
600CX1h
before cycling
100 cycles
after 400cycles

FIG. 2-17

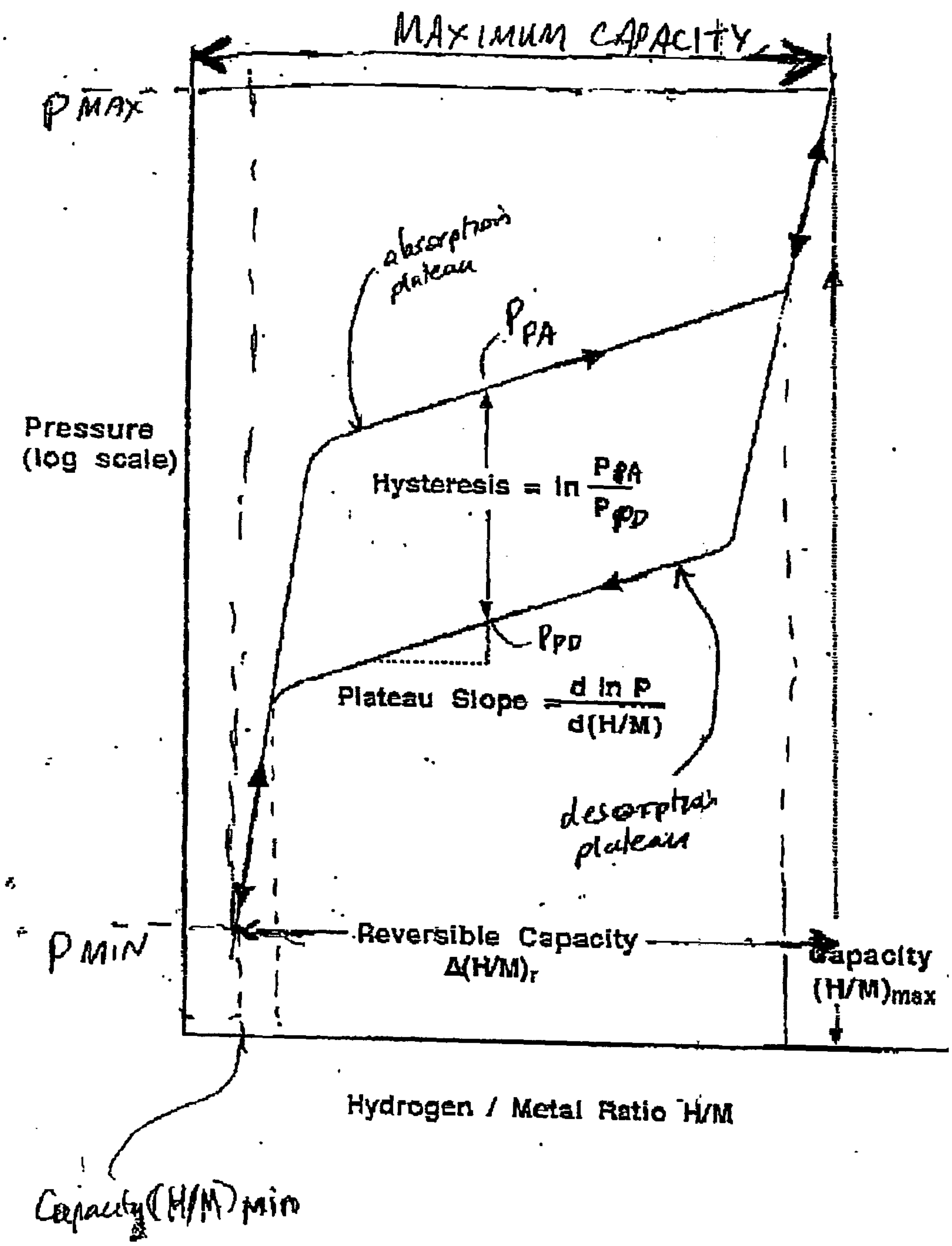
MAXIMUM CAPACITY
P MAX
absorption plateau
$P_{PA}$
Pressure (log scale)
Hysteresis = ln $\frac{P_{PA}}{P_{PD}}$
$P_{PD}$
Plateau Slope = $\frac{d \ln P}{d(H/M)}$
desorption plateau
P MIN
Reversible Capacity $\Delta(H/M)_r$
Capacity $(H/M)_{max}$
Hydrogen / Metal Ratio H/M
Capacity (H/M) min

FIG 2-18

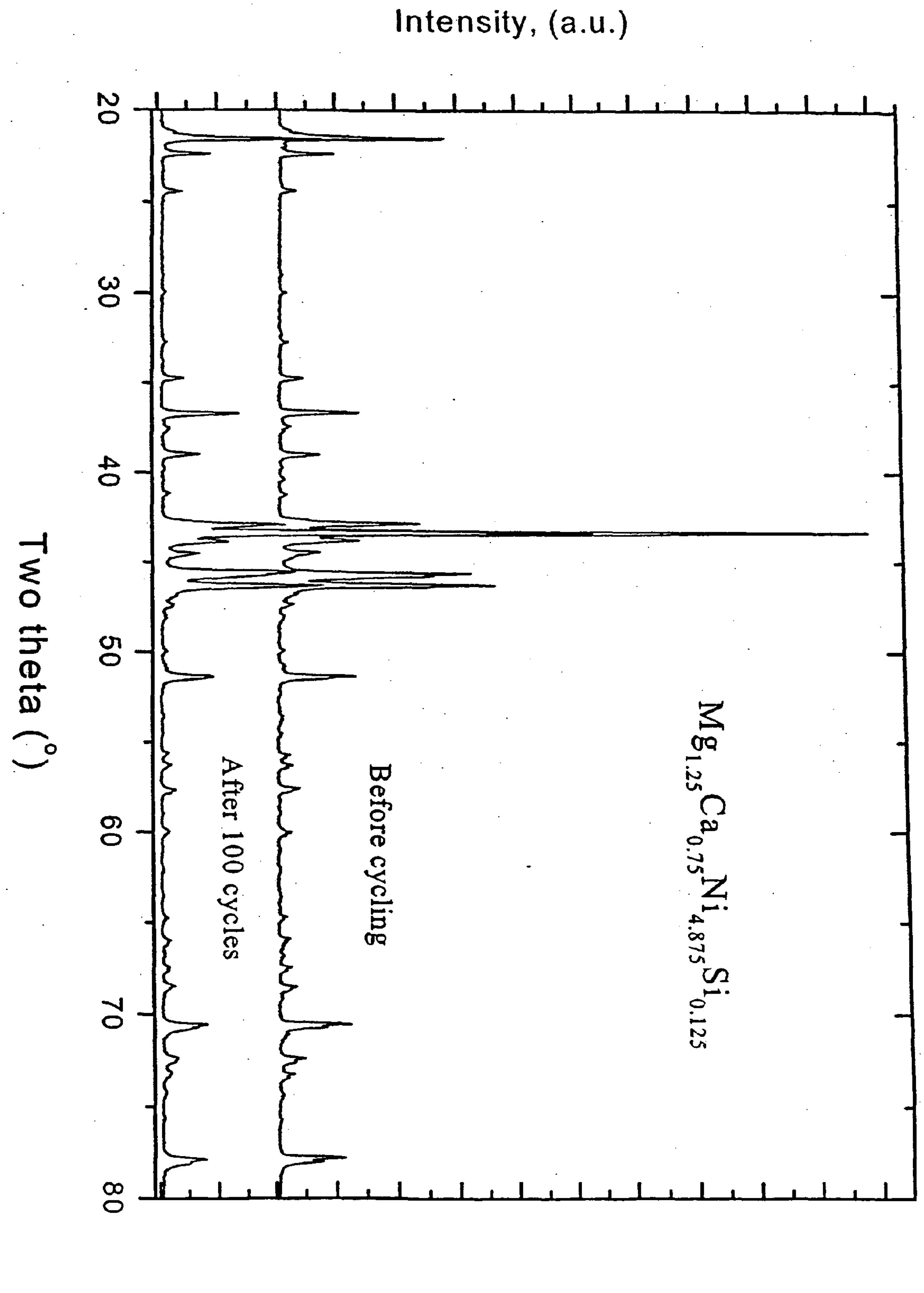
Intensity, (a.u.)
Two theta (°)
20
30
40
50
60
70
80
$Mg_{1.25}Ca_{0.75}Ni_{4.875}Si_{0.125}$
Before cycling
After 100 cycles

FIG 2-19

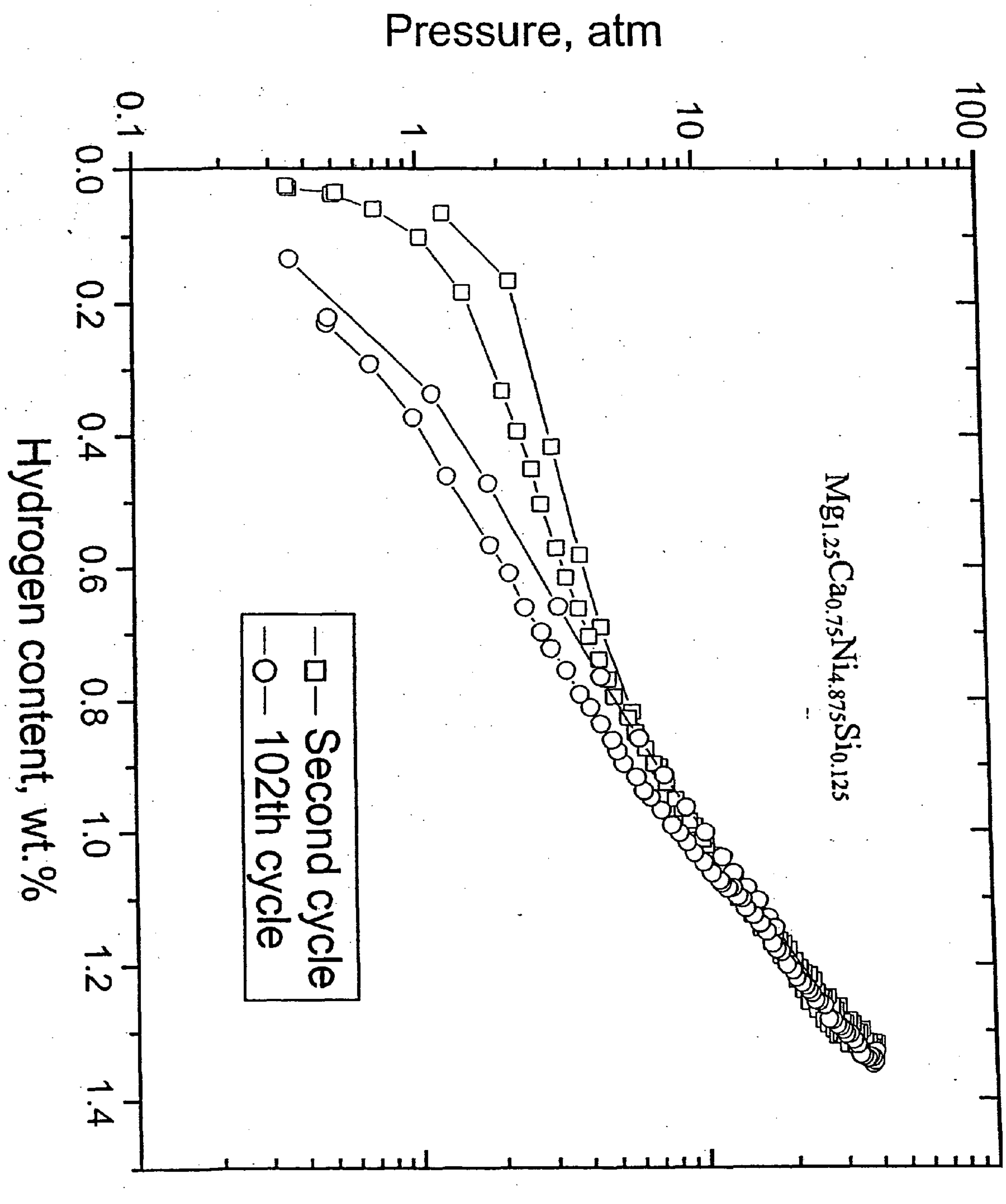

Pressure, atm
0.1
1
10
100
0.0
0.2
0.4
0.6
0.8
1.0
1.2
1.4
Hydrogen content, wt.%
$Mg_{1.25}Ca_{0.75}Ni_{4.875}Si_{0.125}$
Second cycle
102th cycle


FIG 2-20

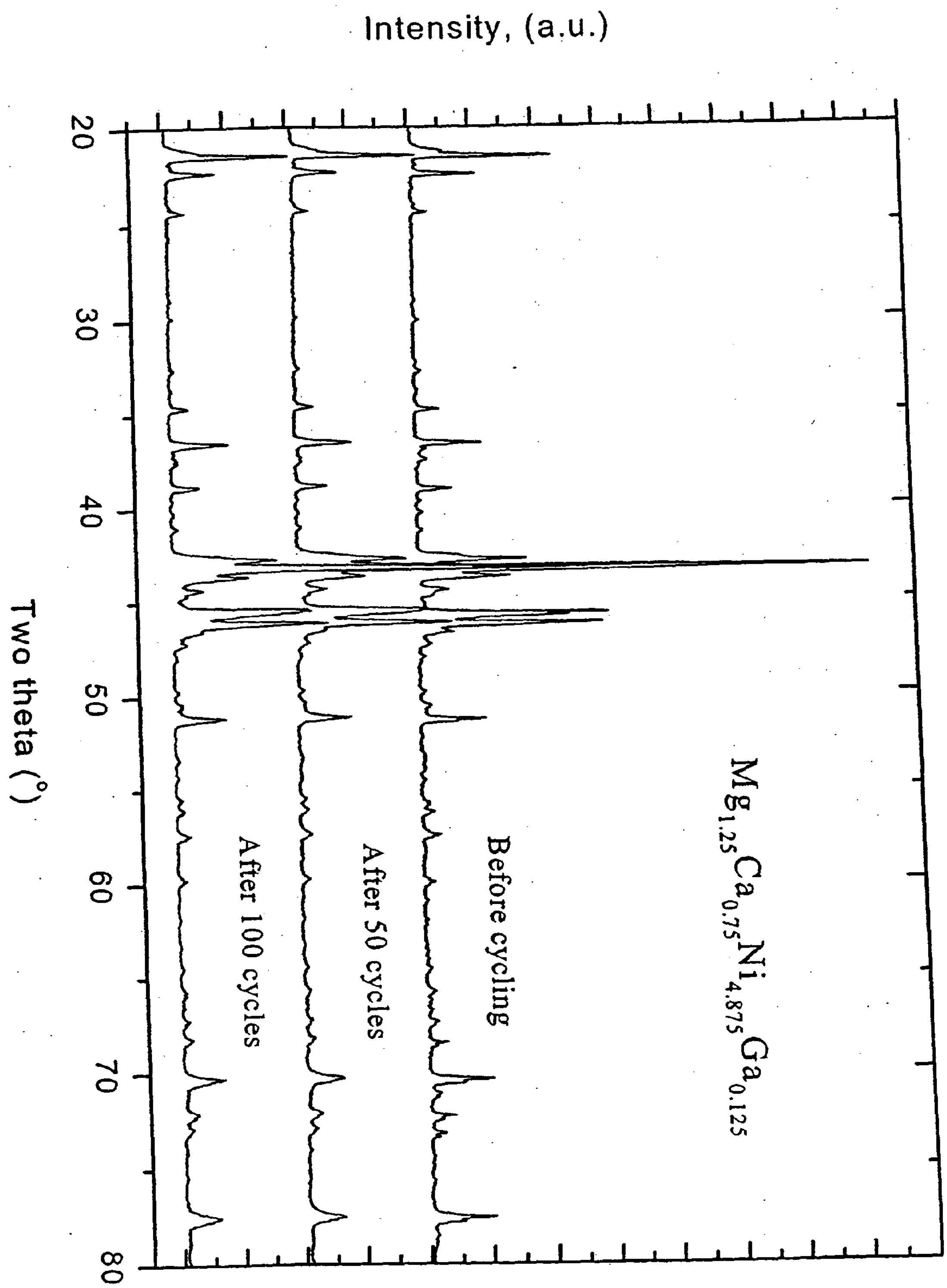
Intensity, (a.u.)
Two theta (°)
20
30
40
50
60
70
80
$Mg_{1.25}Ca_{0.75}Ni_{4.875}Ga_{0.125}$
Before cycling
After 50 cycles
After 100 cycles

FIG 2-21

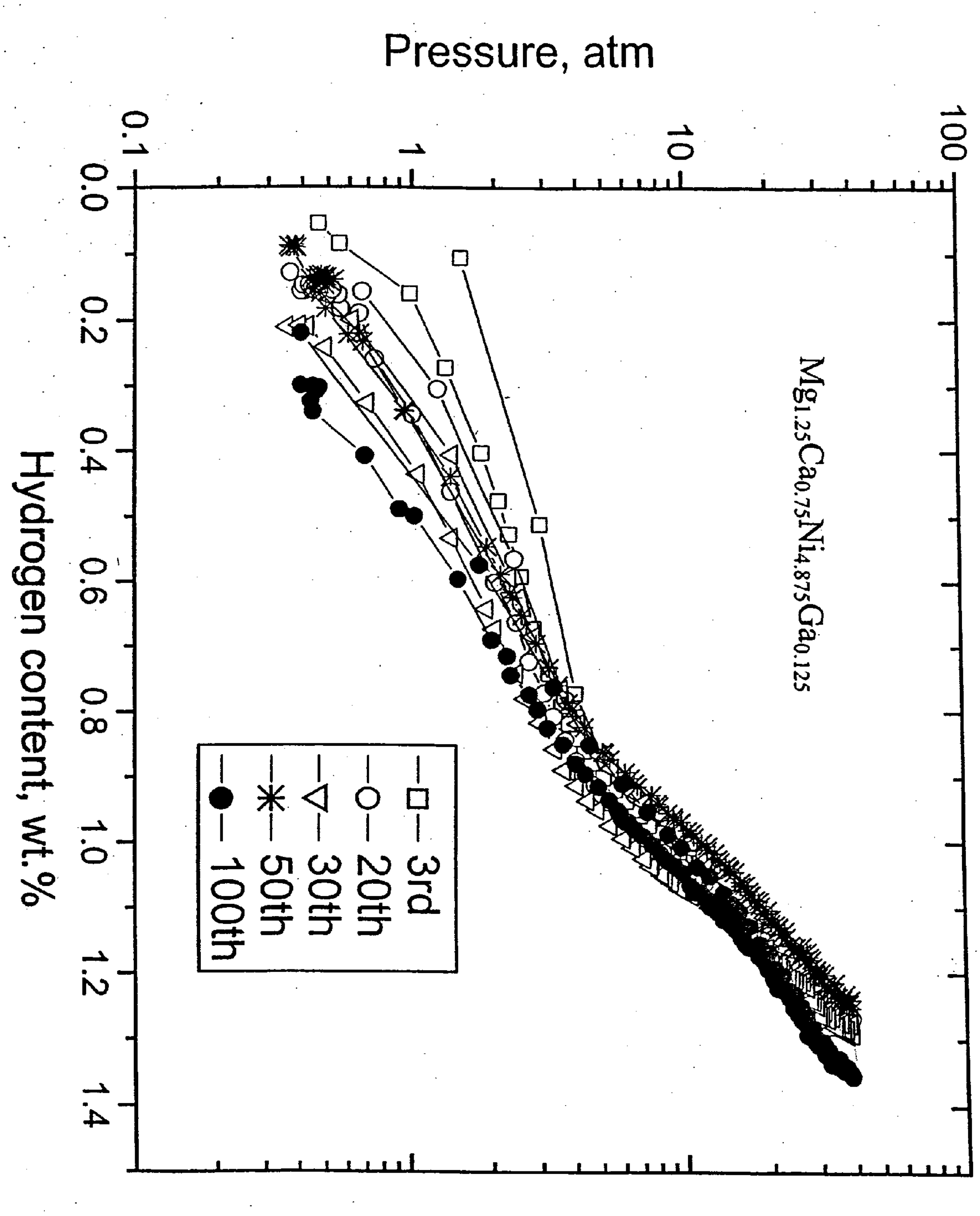
Pressure, atm
0.1
1
10
100
0.0
0.2
0.4
0.6
0.8
1.0
1.2
1.4
Hydrogen content, wt.%
$Mg_{1.25}Ca_{0.75}Ni_{4.875}Ga_{0.125}$
3rd
20th
30th
50th
100th

FIG 2-22

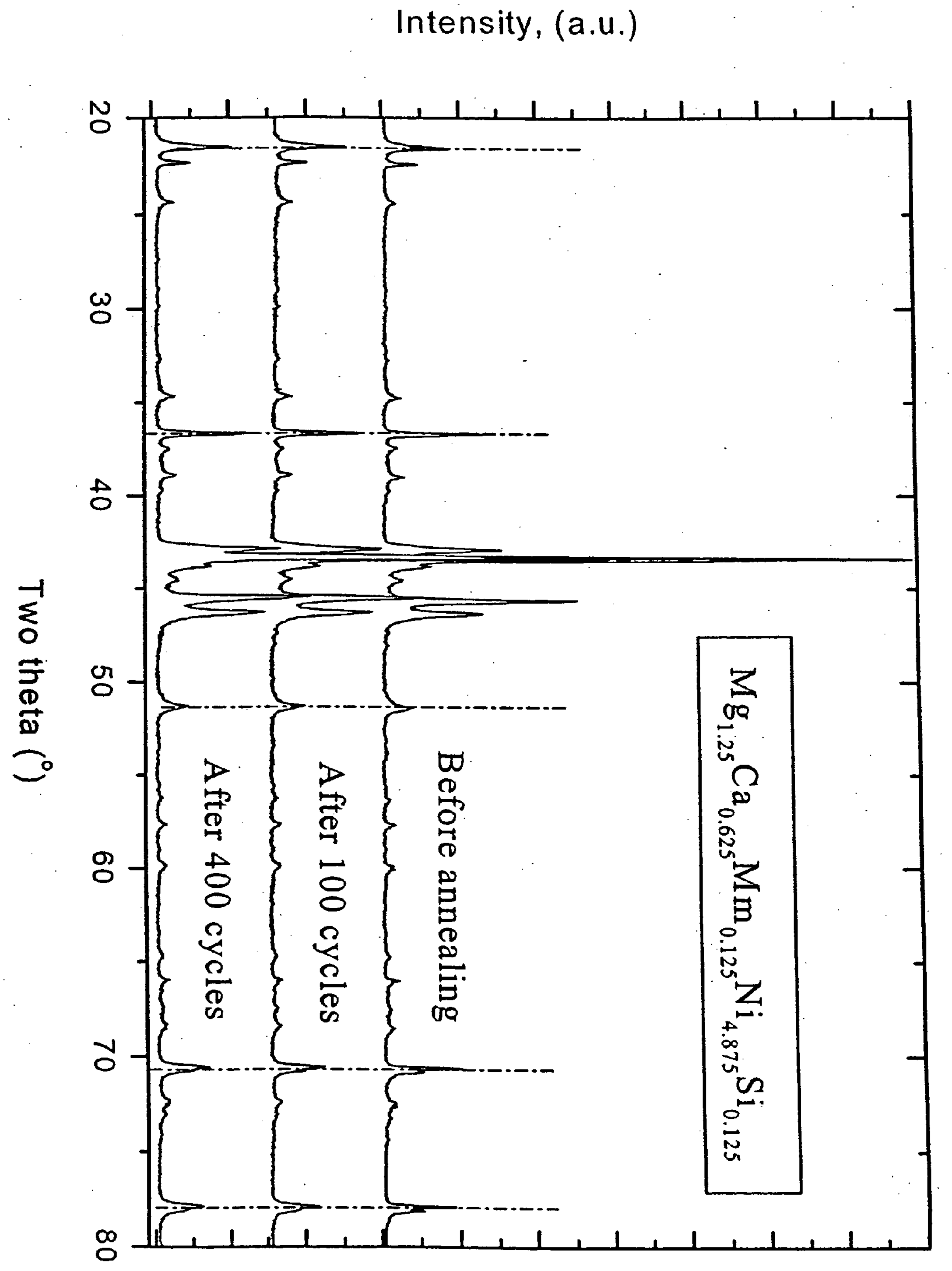
Intensity, (a.u.)
Two theta (°)
20
30
40
50
60
70
80
$Mg_{1.25}Ca_{0.625}Mm_{0.125}Ni_{4.875}Si_{0.125}$
Before annealing
After 100 cycles
After 400 cycles

FIG 2-23

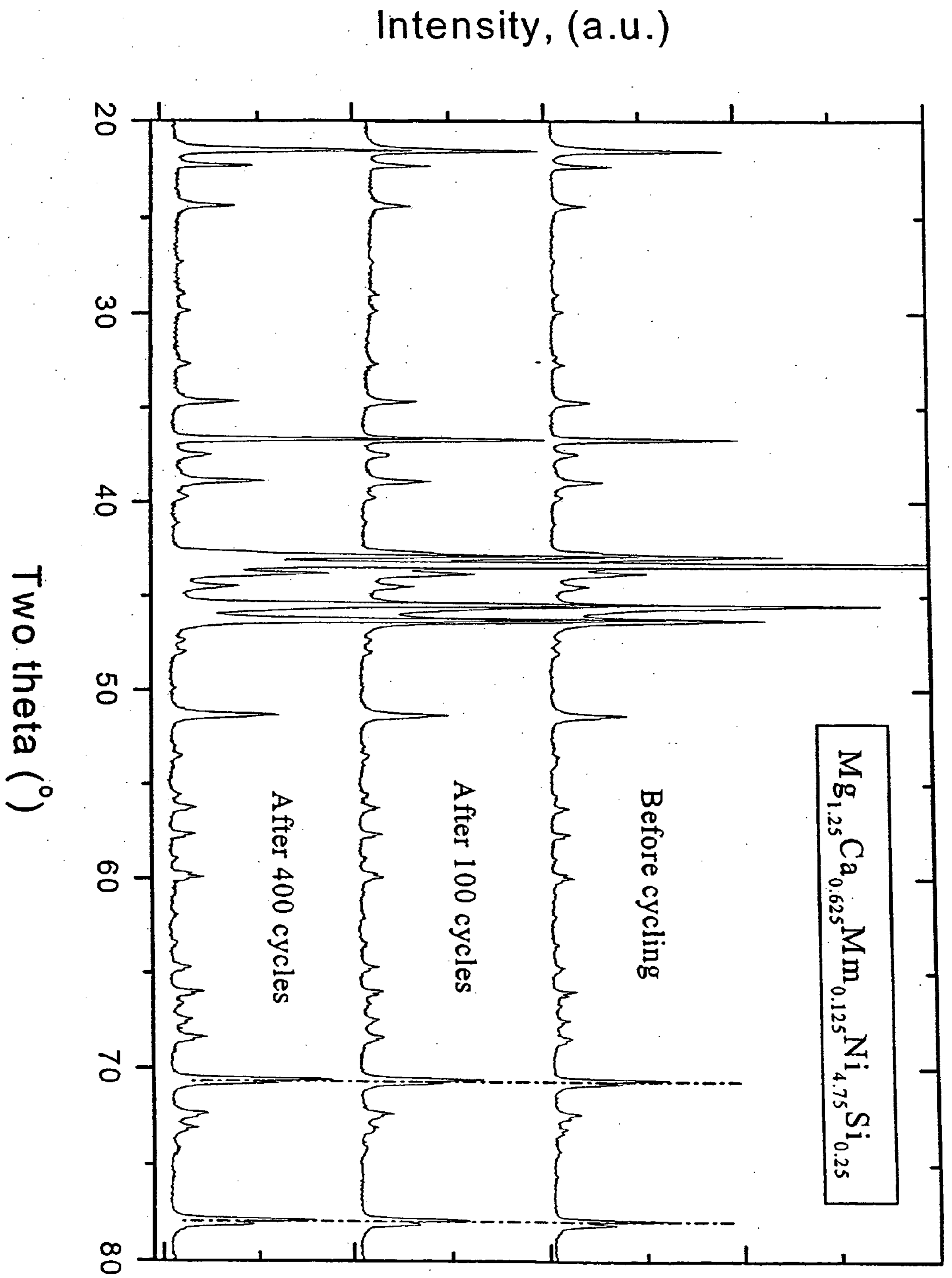
Intensity, (a.u.)
Two theta (°)
20
30
40
50
60
70
80
Before cycling
After 100 cycles
After 400 cycles
$Mg_{1.25}Ca_{0.625}Mm_{0.125}Ni_{4.75}Si_{0.25}$

FIG 2-24

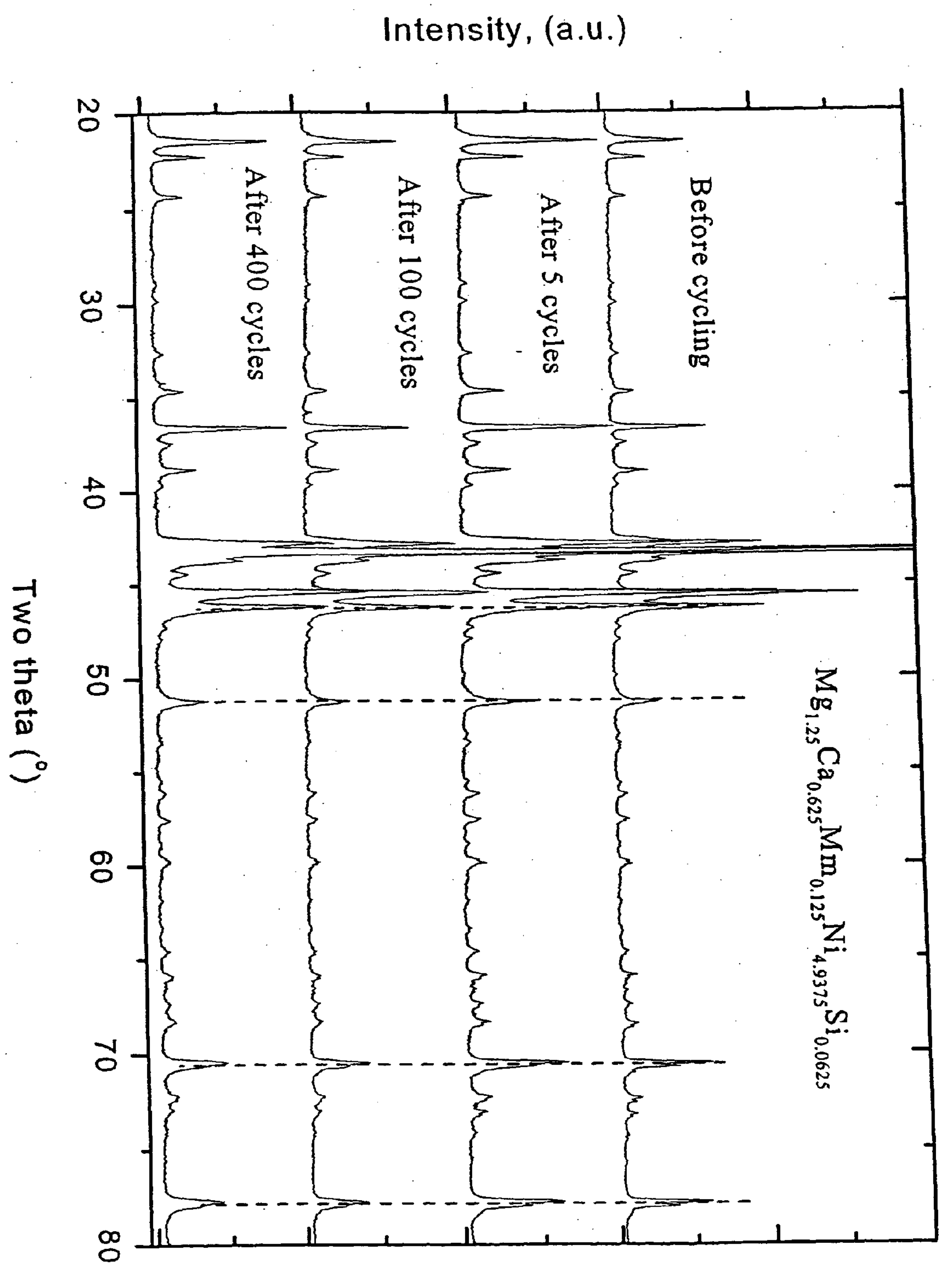
Intensity, (a.u.)
Two theta (°)
20
30
40
50
60
70
80
Before cycling
After 5 cycles
After 100 cycles
After 400 cycles
Mg1.25Ca0.625Mm0.125Ni4.9375Si0.0625

FIG 2-25

FIG 2-26

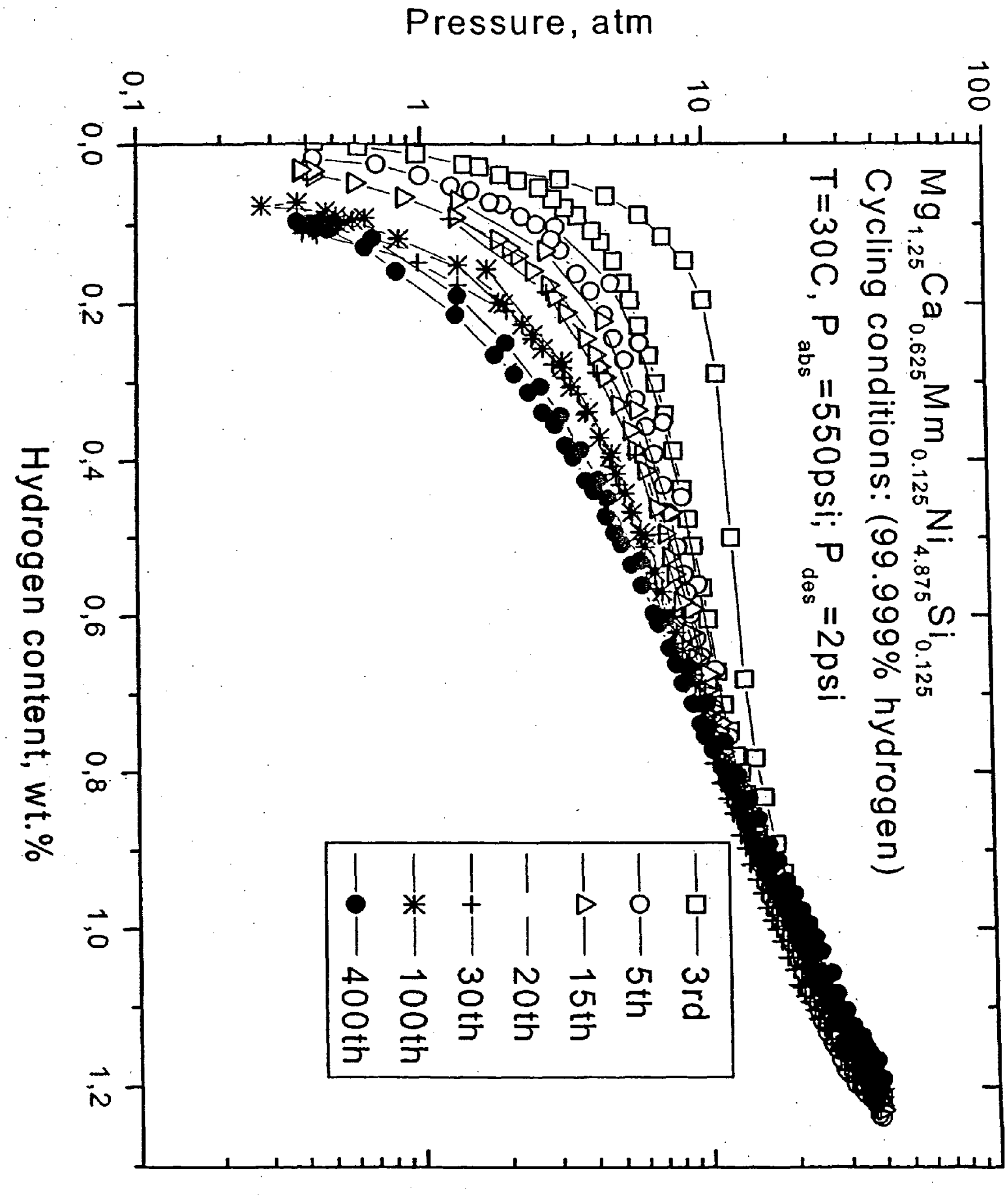

Pressure, atm
Hydrogen content, wt.%
$Mg_{1.25}Ca_{0.625}Mm_{0.125}Ni_{4.875}Si_{0.125}$
Cycling conditions: (99.999% hydrogen)
T=30C, $P_{abs}$=550psi; $P_{des}$=2psi
3rd
5th
15th
20th
30th
100th
400th
0,1
1
10
100
0,0
0,2
0,4
0,6
0,8
1,0
1,2

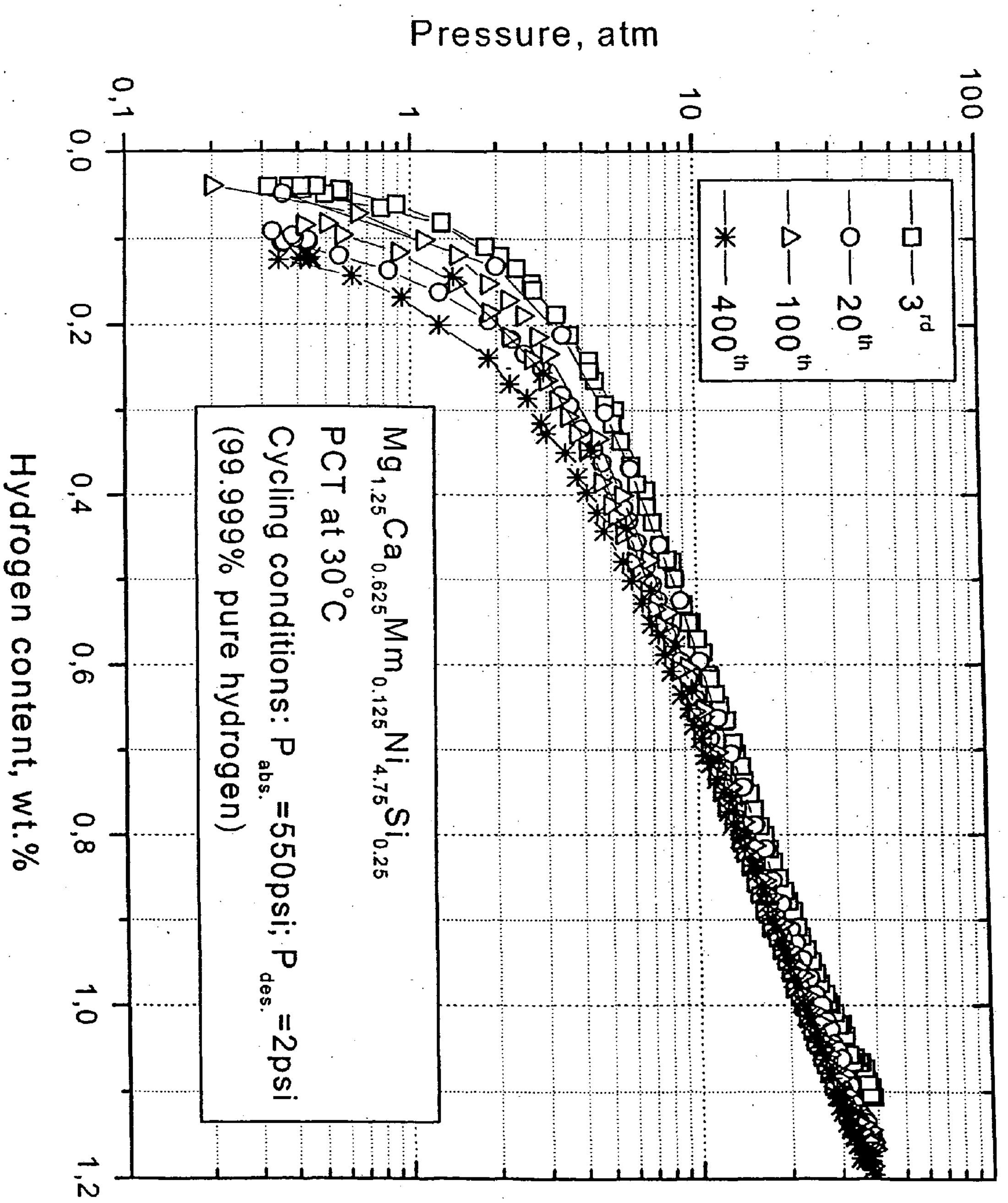
Pressure, atm
0,1
1
10
100
0,0
0,2
0,4
0,6
0,8
1,0
1,2
Hydrogen content, wt.%
3rd
20th
100th
400th
Mg1,25Ca0,625Mm0,125Ni4,75Si0,25
PCT at 30°C
Cycling conditions: Pabs.=550psi; Pdes.=2psi
(99.999% pure hydrogen)

FIG 2-27

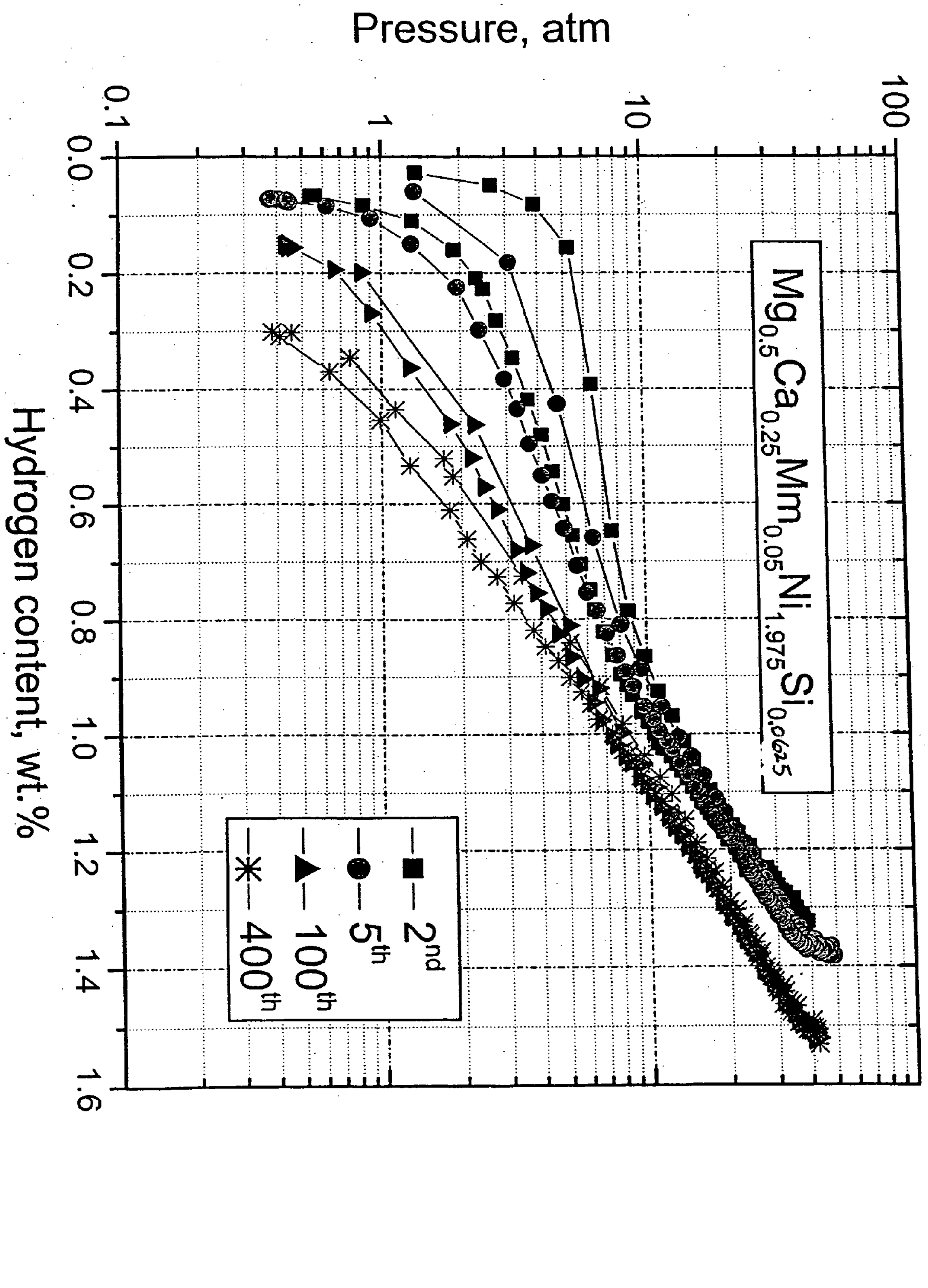
Pressure, atm
0.1
1
10
100
Hydrogen content, wt.%
0.0
0.2
0.4
0.6
0.8
1.0
1.2
1.4
1.6
$Mg_{0.5}Ca_{0.25}Mm_{0.05}Ni_{1.975}Si_{0.0625}$
2nd
5th
100th
400th

FIG 2-28

FIG 2-29

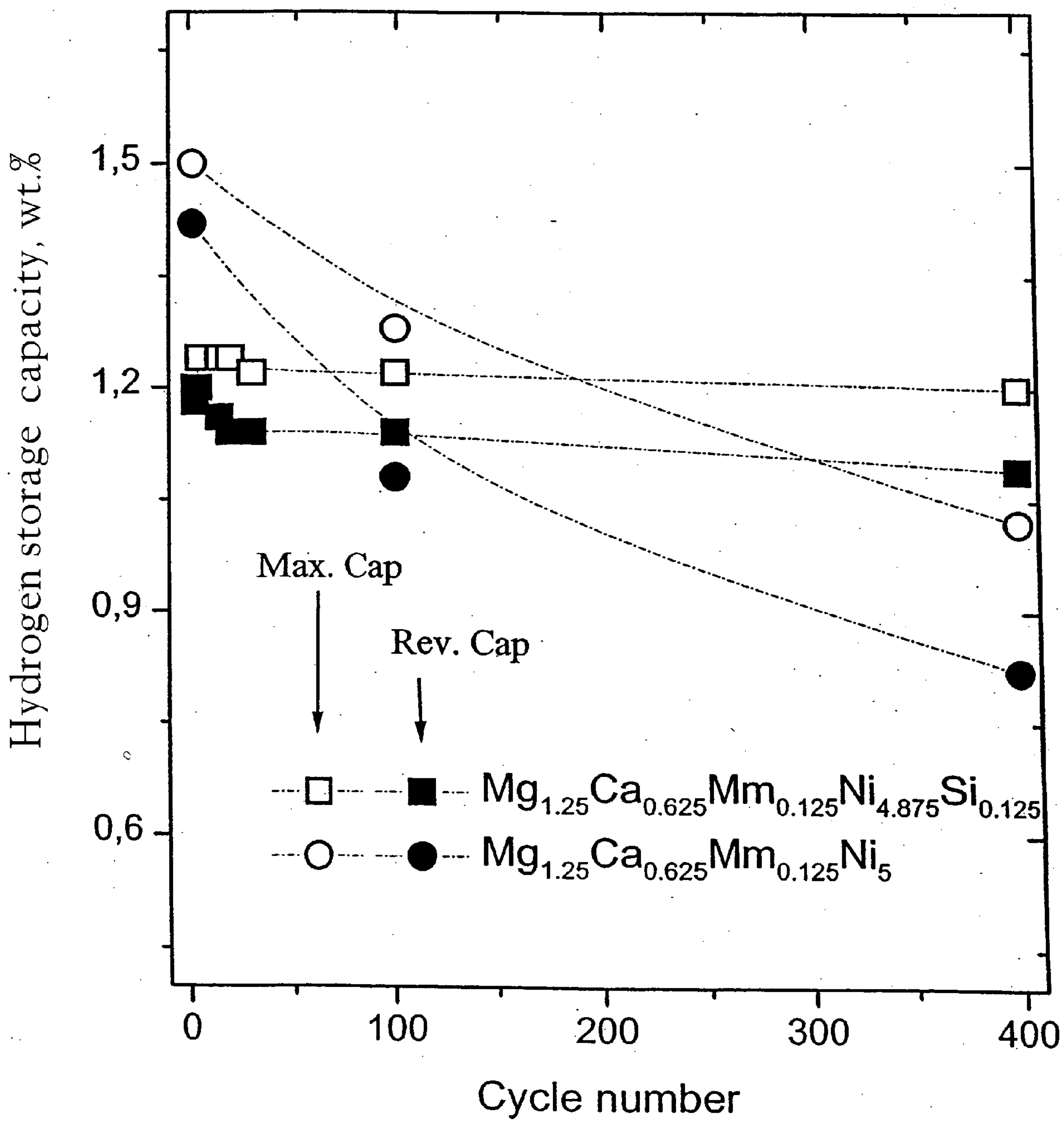
Hydrogen storage capacity, wt.%
1,5
1,2
0,9
0,6
0
100
200
300
400
Cycle number
Max. Cap
Rev. Cap
Mg1.25Ca0.625Mm0.125Ni4.875Si0.125
Mg1.25Ca0.625Mm0.125Ni5

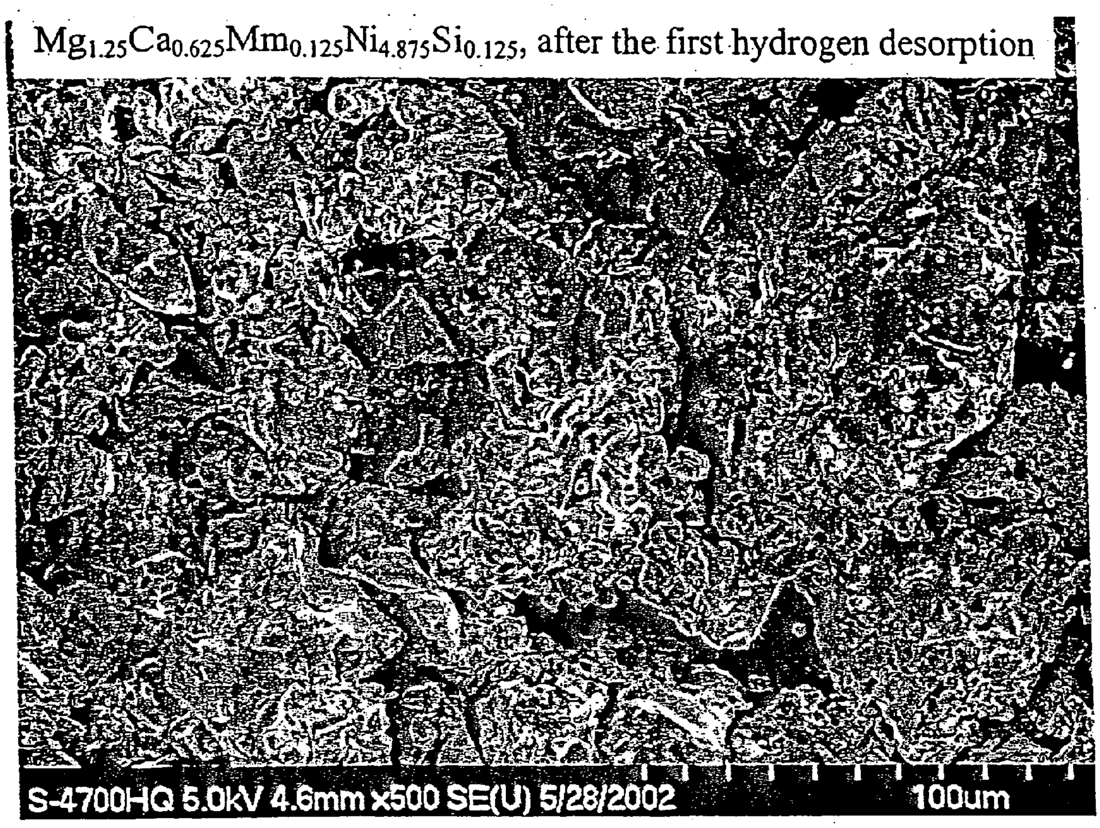
$Mg_{1.25}Ca_{0.625}Mm_{0.125}Ni_{4.875}Si_{0.125}$, after the first hydrogen desorption
S-4700HQ 5.0kV 4.6mm x500 SE(U) 5/28/2002
100um

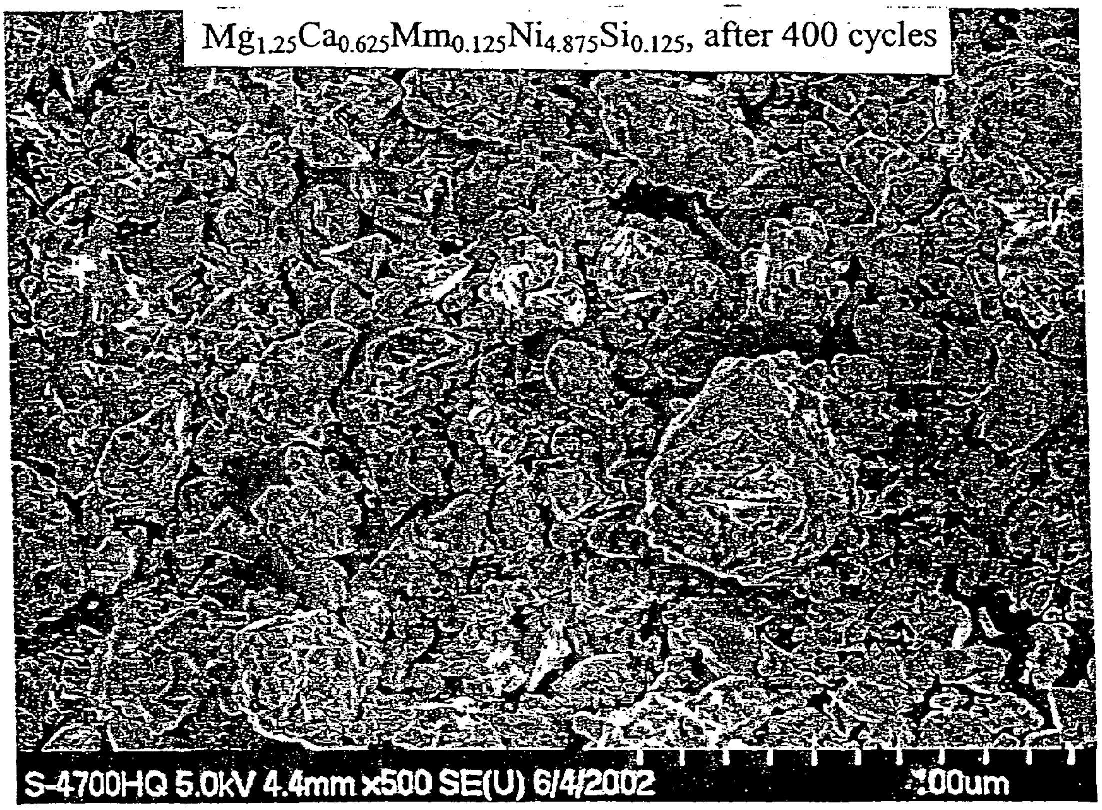
$Mg_{1.25}Ca_{0.625}Mm_{0.125}Ni_{4.875}Si_{0.125}$, after 400 cycles
S-4700HQ 5.0kV 4.4mm x500 SE(U) 6/4/2002
100um

FIG. 2-30

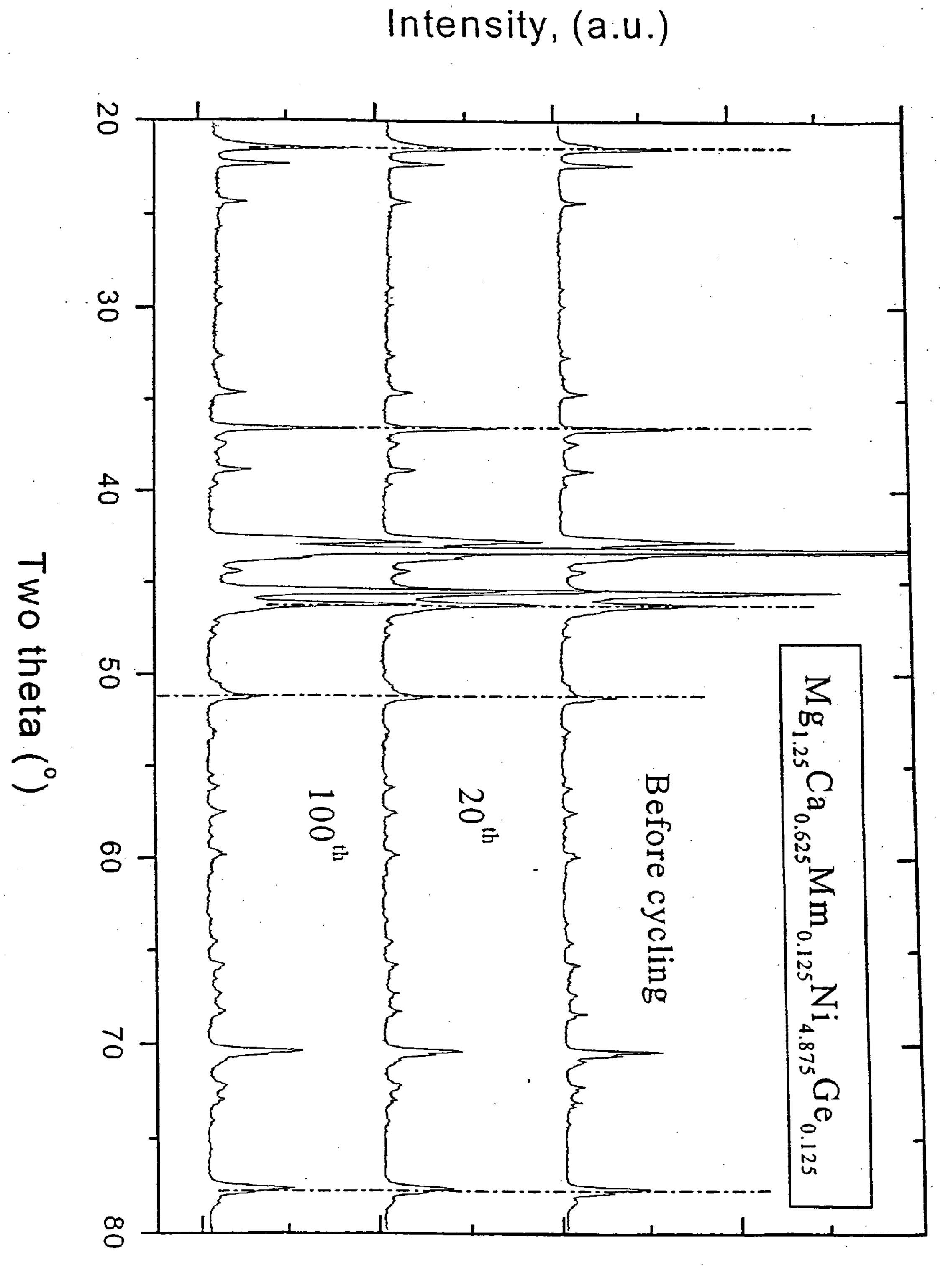
Intensity, (a.u.)
Two theta (°)
20
30
40
50
60
70
80
$Mg_{1.25}Ca_{0.625}Mm_{0.125}Ni_{4.875}Ge_{0.125}$
Before cycling
20th
100th

FIG 2.31

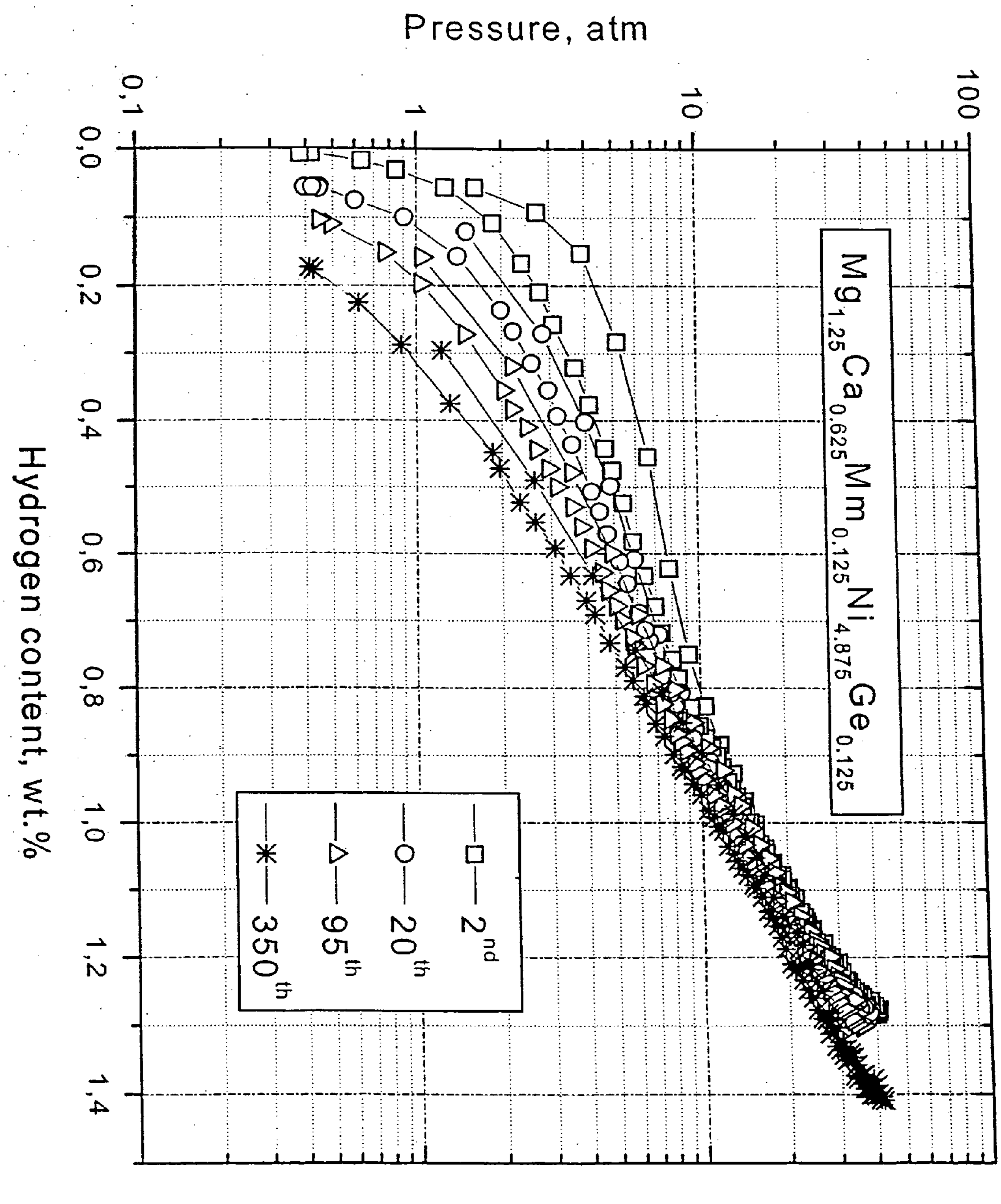
Pressure, atm
0,1
1
10
100
Hydrogen content, wt.%
0,0
0,2
0,4
0,6
0,8
1,0
1,2
1,4
Mg1,25Ca0,625Mm0,125Ni4,875Ge0,125
2nd
20th
95th
350th

FIG 2-32

FIG 2-33

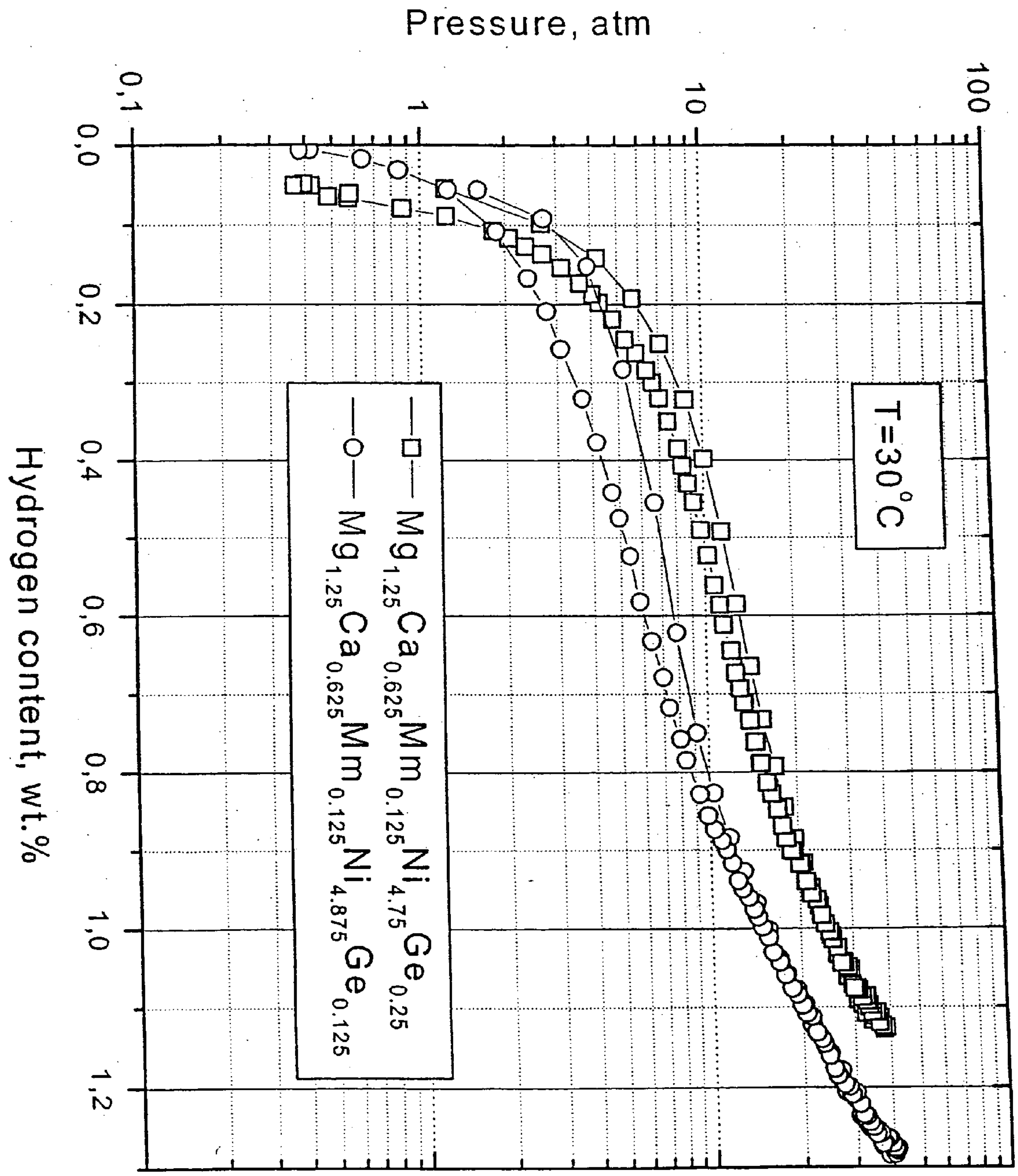

Pressure, atm
0,1
1
10
100
0,0
0,2
0,4
0,6
0,8
1,0
1,2
Hydrogen content, wt.%
T=30°C
$Mg_{1,25}Ca_{0,625}Mm_{0,125}Ni_{4,75}Ge_{0,25}$
$Mg_{1,25}Ca_{0,625}Mm_{0,125}Ni_{4,875}Ge_{0,125}$

Fig 2-34

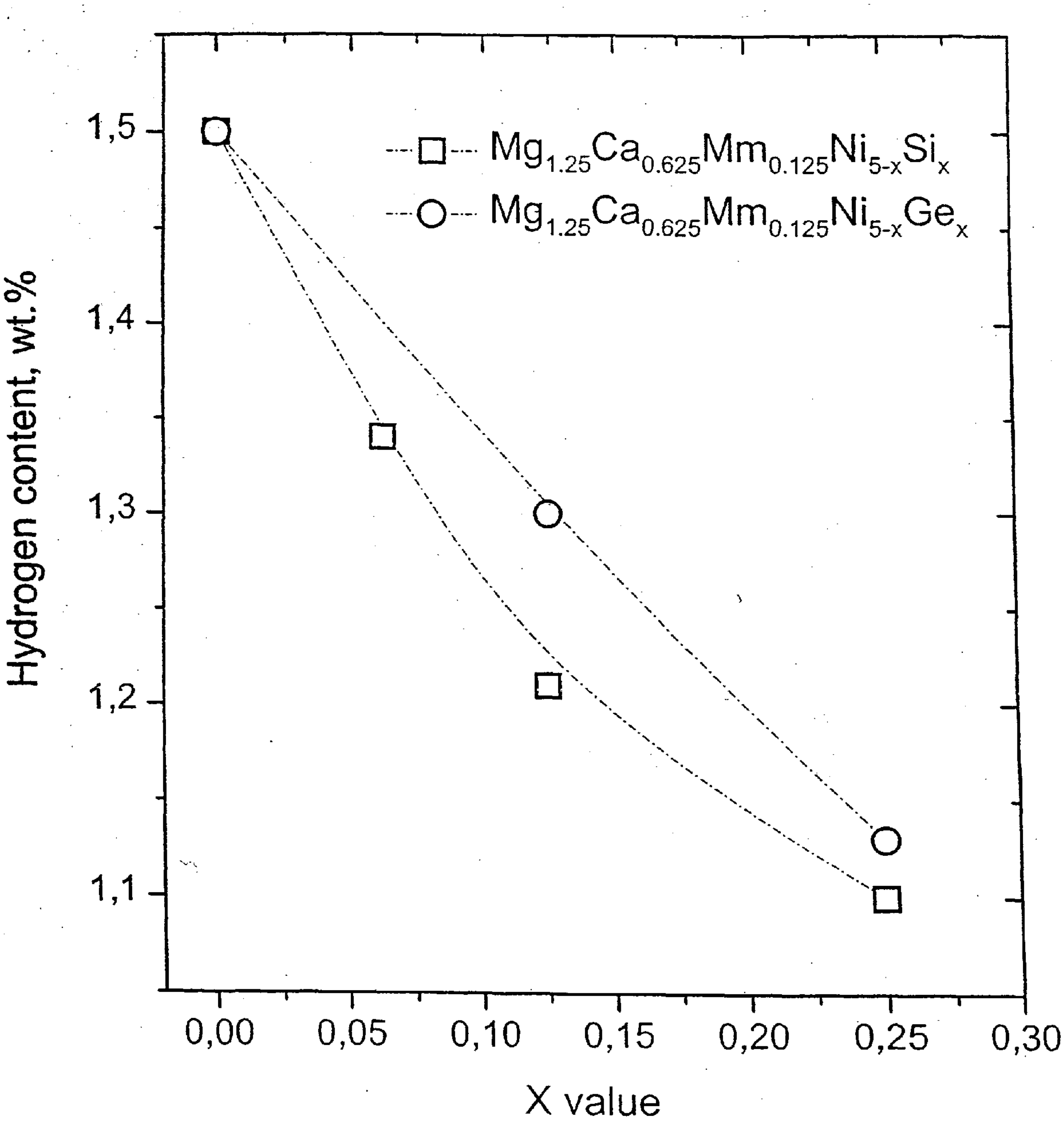

Mg1.25Ca0.625Mm0.125Ni5-xSix
Mg1.25Ca0.625Mm0.125Ni5-xGex
Hydrogen content, wt.%
1,5
1,4
1,3
1,2
1,1
0,00
0,05
0,10
0,15
0,20
0,25
0,30
X value

FIG 2-35

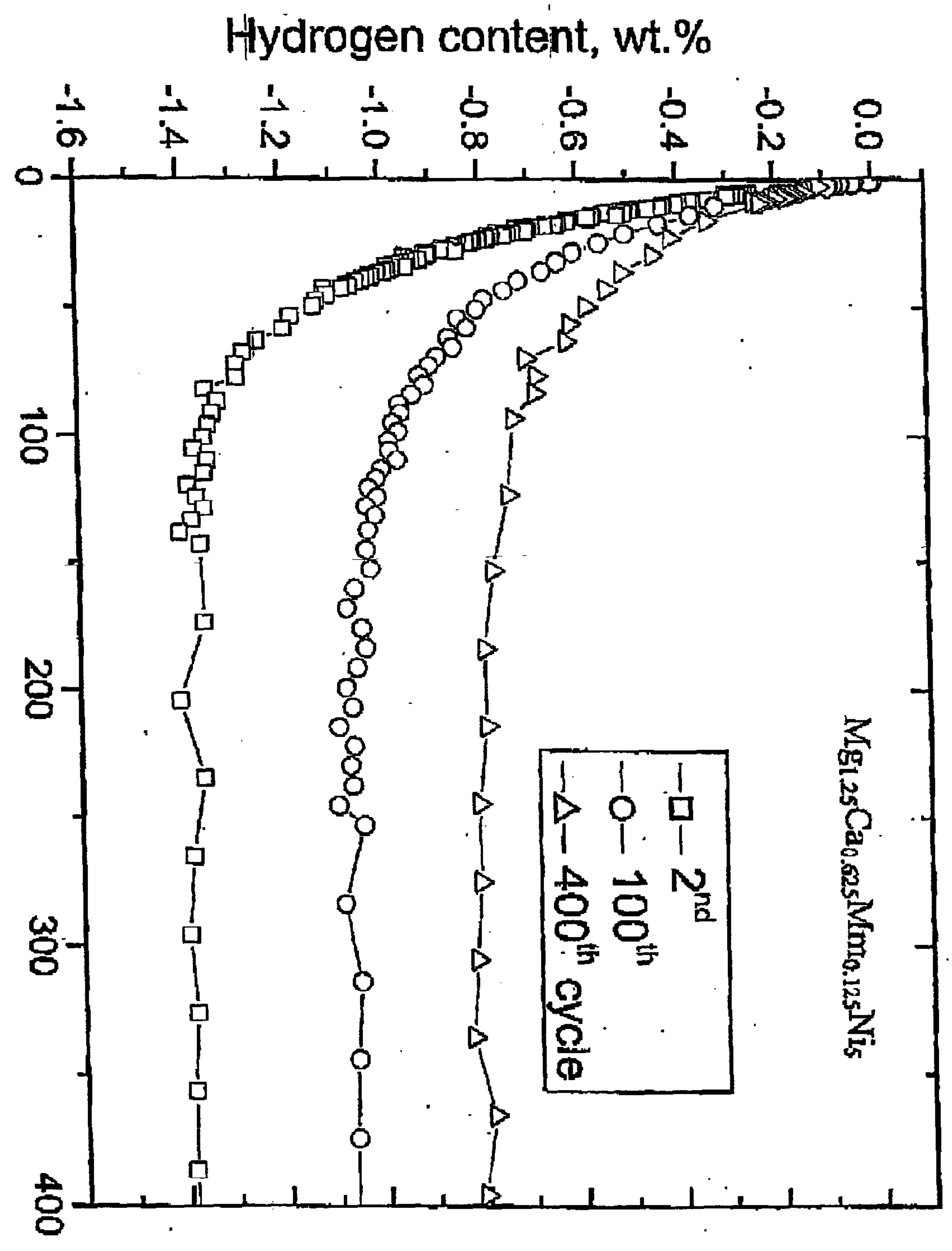
Hydrogen content, wt.%
0.0
-0.2
-0.4
-0.6
-0.8
-1.0
-1.2
-1.4
-1.6
0
100
200
300
400
Desorption time, sec
$Mg_{1.25}Ca_{0.625}Mm_{0.125}Ni_5$
2nd
100th
400th cycle

Fig 2-3b

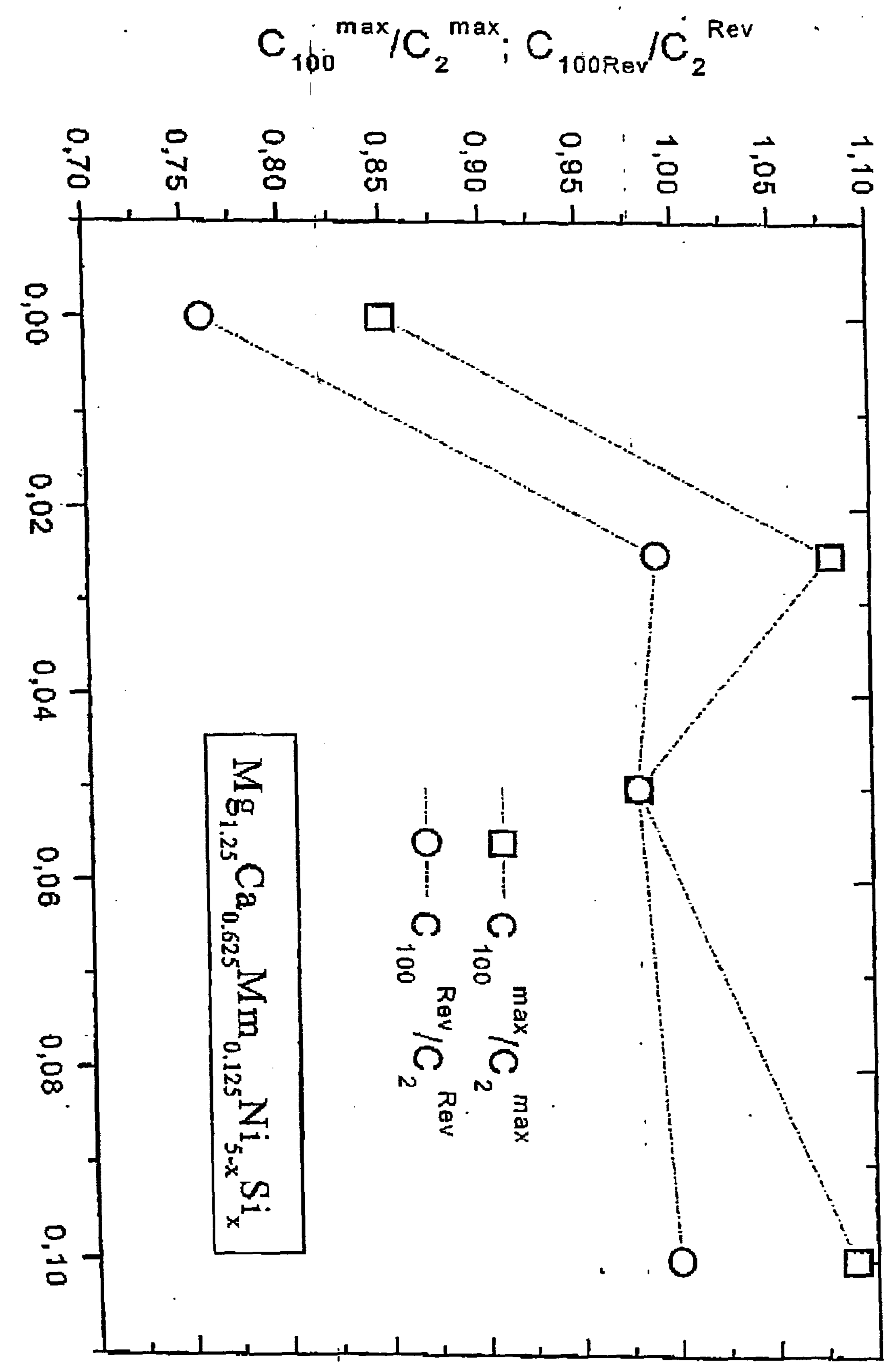
$C_{100}^{max}/C_2^{max}$; $C_{100Rev}/C_2^{Rev}$
0,70
0,75
0,80
0,85
0,90
0,95
1,00
1,05
1,10
0,00
0,02
0,04
0,06
0,08
0,10
x value
$C_{100}^{max}/C_2^{max}$
$C_{100}^{Rev}/C_2^{Rev}$
$Mg_{1,25}Ca_{0,625}Mm_{0,125}Ni_{5-x}Si_x$

FIG. 2-37

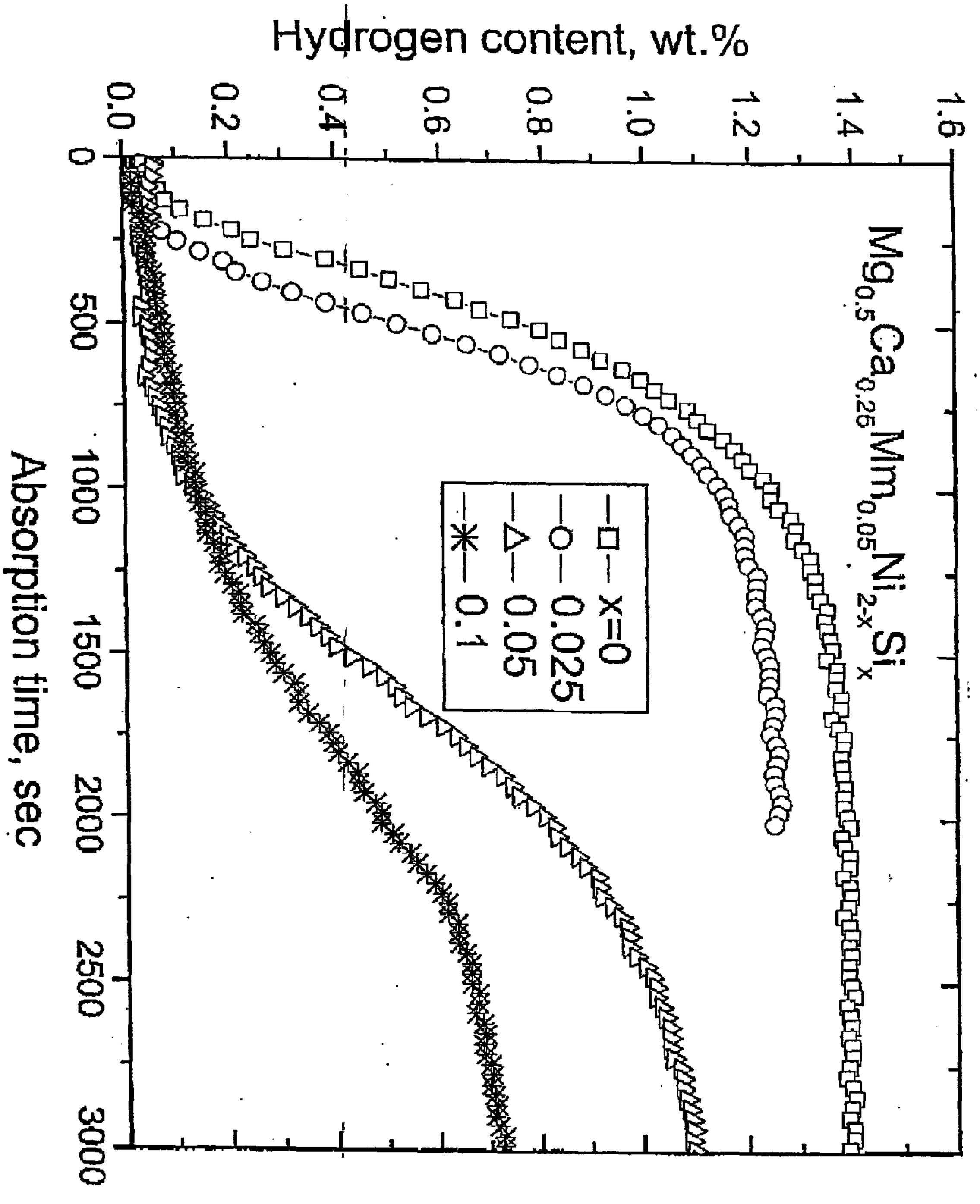
Hydrogen content, wt.%
Absorption time, sec
$Mg_{0.5}Ca_{0.25}Mm_{0.05}Ni_{2-x}Si_x$
x=0
0.025
0.05
0.1
0.0
0.2
0.4
0.6
0.8
1.0
1.2
1.4
1.6
0
500
1000
1500
2000
2500
3000

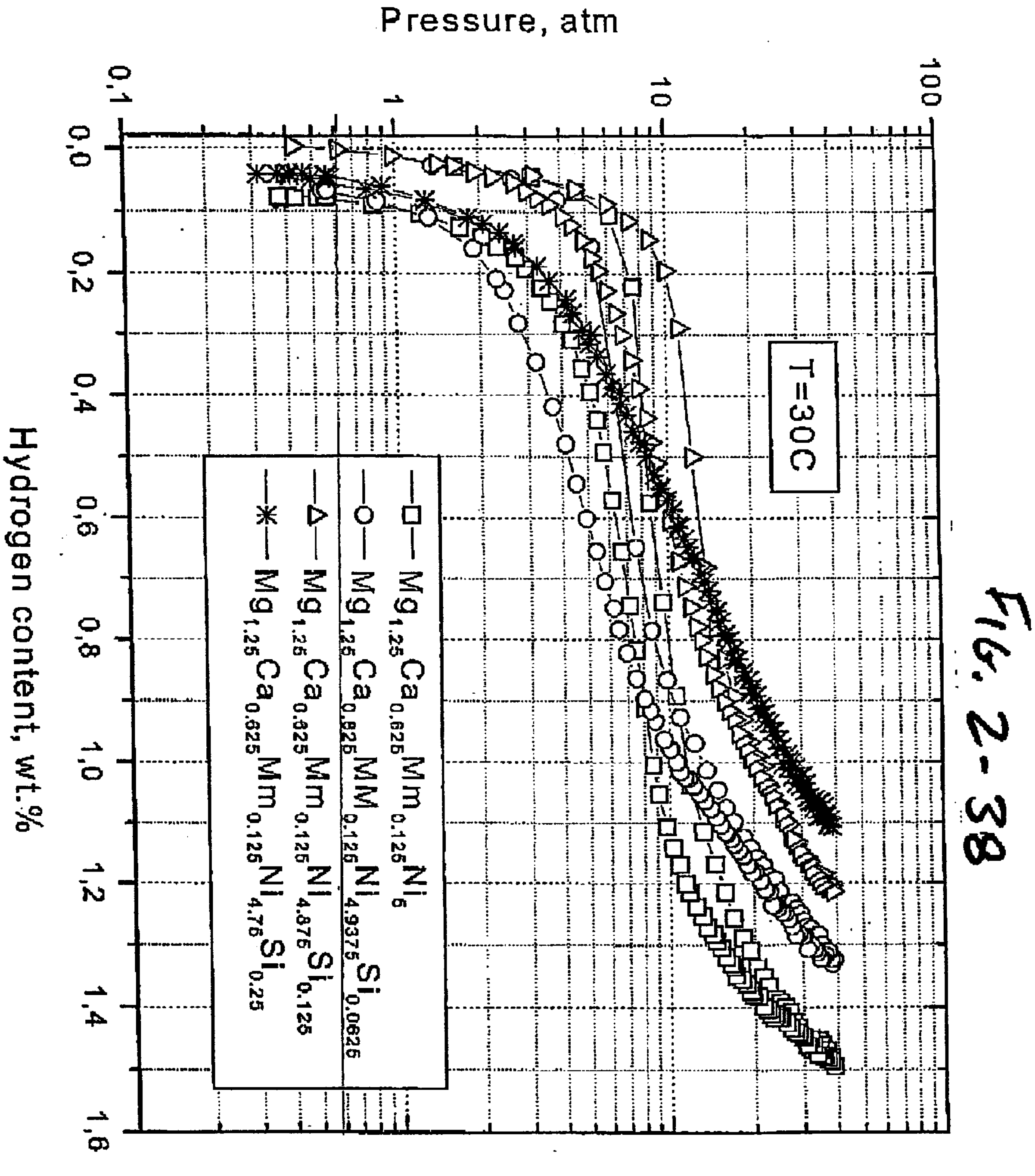
Pressure, atm
0,1
1
10
100
0,0
0,2
0,4
0,6
0,8
1,0
1,2
1,4
1,6
Hydrogen content, wt.%
T=30C
Mg1,25Ca0,625Mm0,125Ni5
Mg1,25Ca0,625MM0,125Ni4,9375Si0,0626
Mg1,25Ca0,625Mm0,125Ni4,875Si0,125
Mg1,25Ca0,625Mm0,125Ni4,75Si0,25

FIG. 2-38

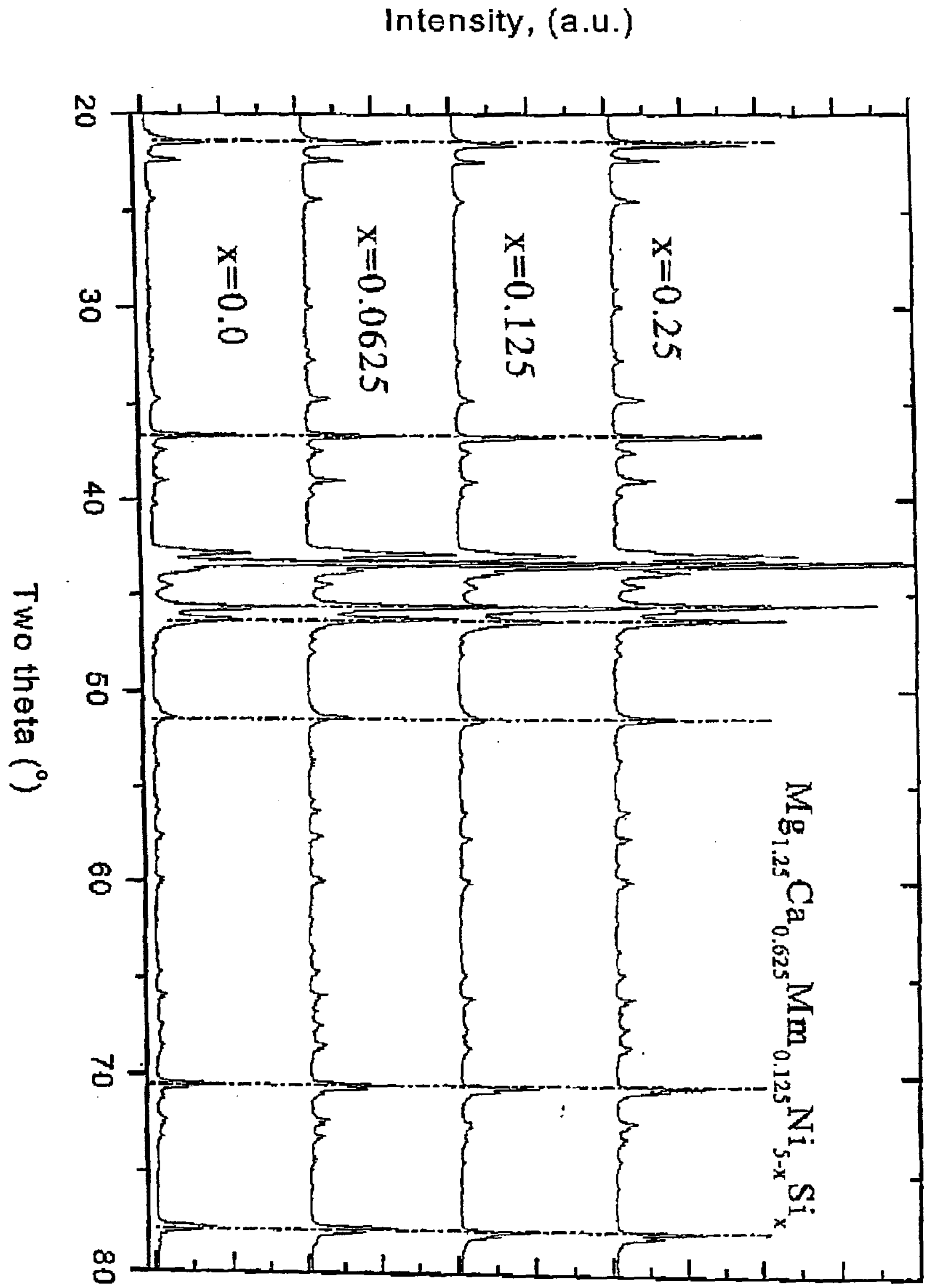
Intensity, (a.u.)
Two theta (°)
20
30
40
50
60
70
80
x=0.0
x=0.0625
x=0.125
x=0.25
$Mg_{1.25}Ca_{0.625}Mm_{0.125}Ni_{5-x}Si_x$

FIG. 2-39

Fig. 3-1

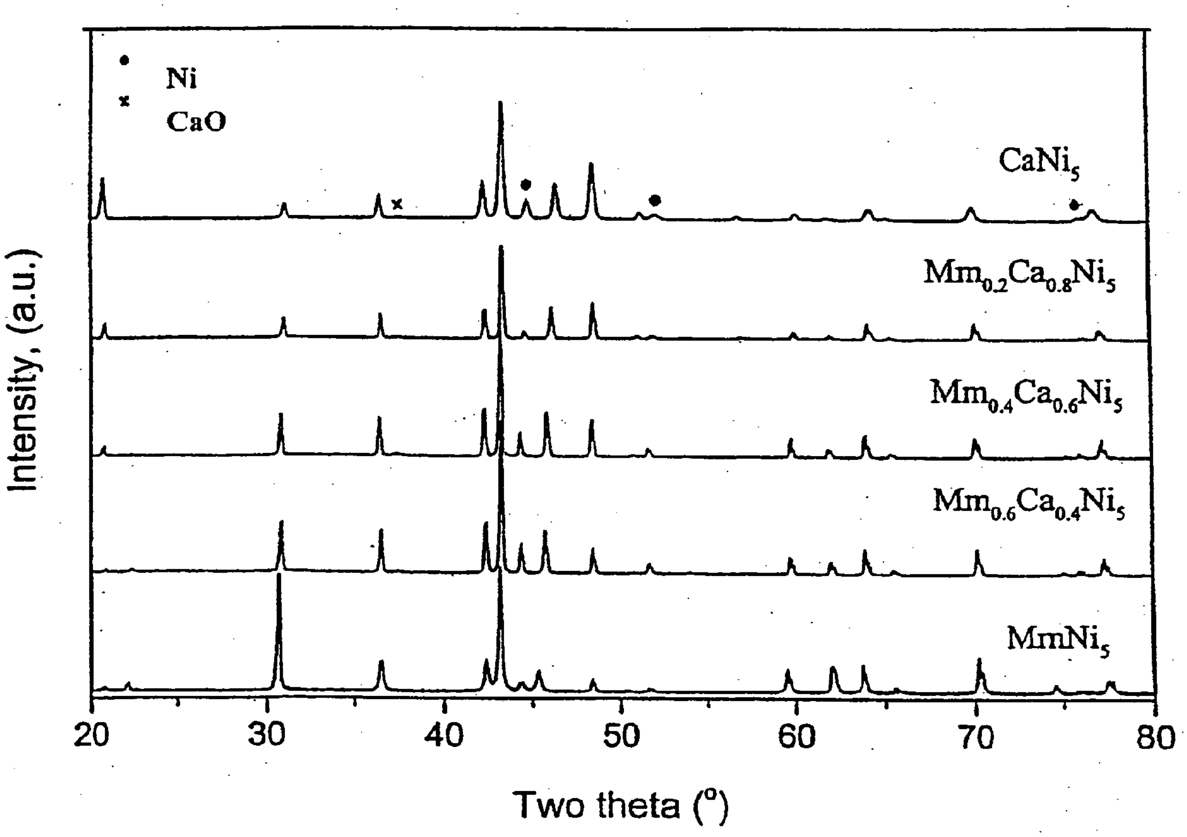
Ni
CaO
CaNi5
Mm0.2Ca0.8Ni5
Mm0.4Ca0.6Ni5
Mm0.6Ca0.4Ni5
MmNi5
Intensity, (a.u.)
20
30
40
50
60
70
80
Two theta (°)

Fig. 3-2

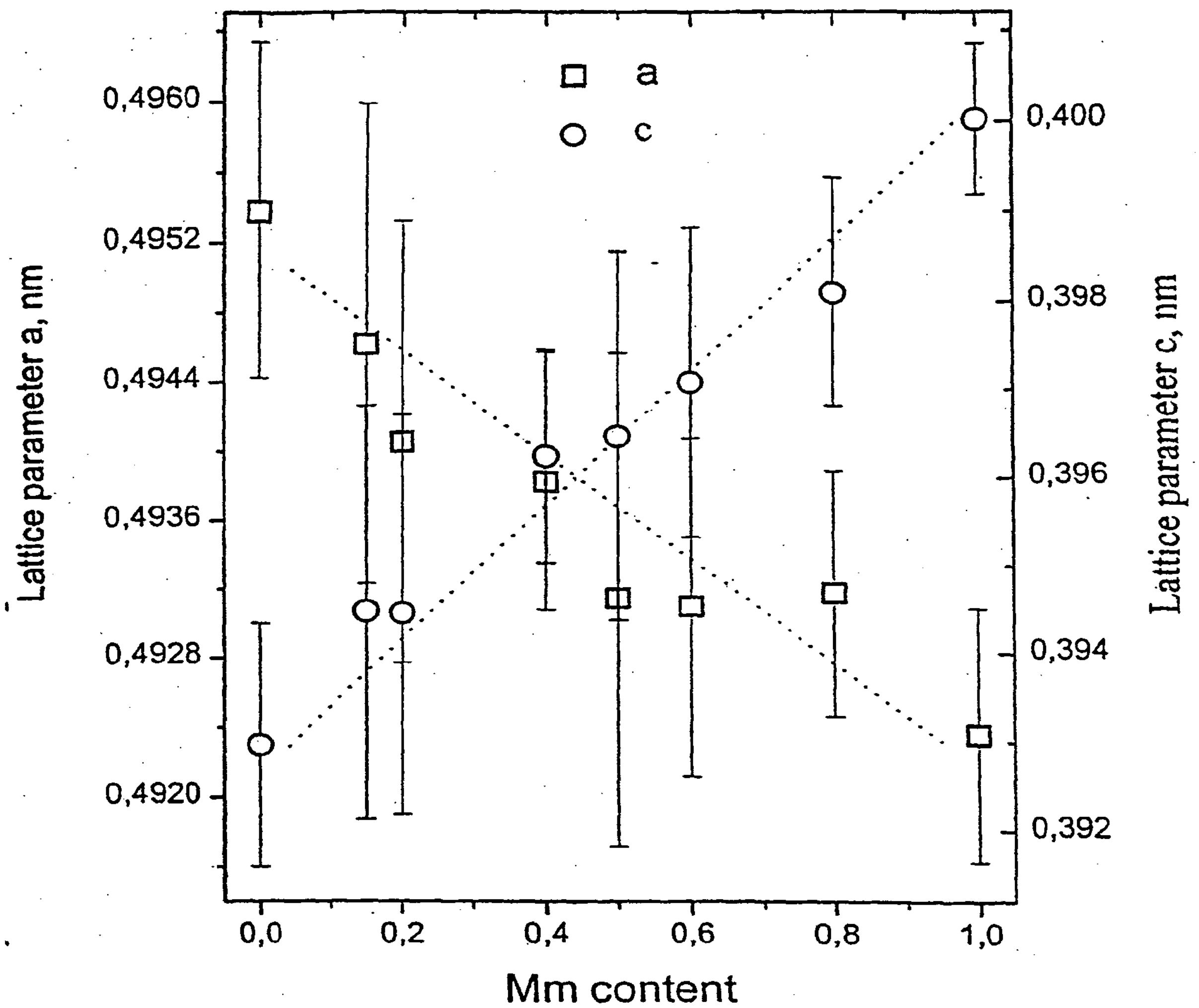
a
c
0,4960
0,4952
0,4944
0,4936
0,4928
0,4920
Lattice parameter a, nm
0,400
0,398
0,396
0,394
0,392
Lattice parameter c, nm
0,0
0,2
0,4
0,6
0,8
1,0
Mm content

Fig. 3-3

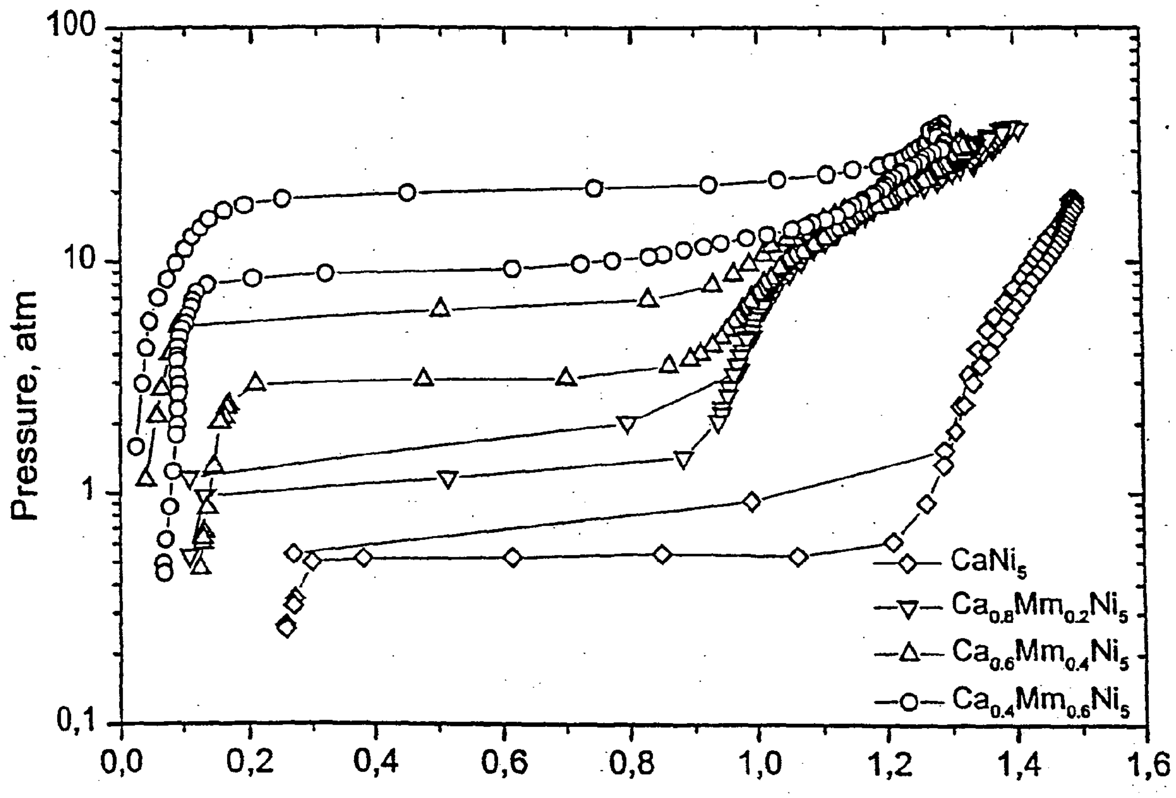
Pressure, atm
100
10
1
0,1
0,0
0,2
0,4
0,6
0,8
1,0
1,2
1,4
1,6
Hydrogen content, wt.%
CaNi5
Ca0.8Mm0.2Ni5
Ca0.6Mm0.4Ni5
Ca0.4Mm0.6Ni5

Fig. 3-4a

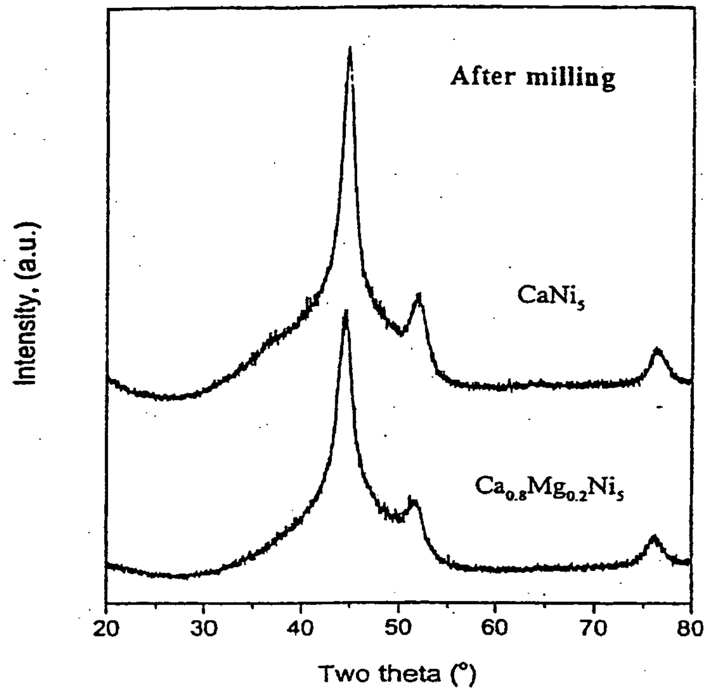


Fig. 3-4b

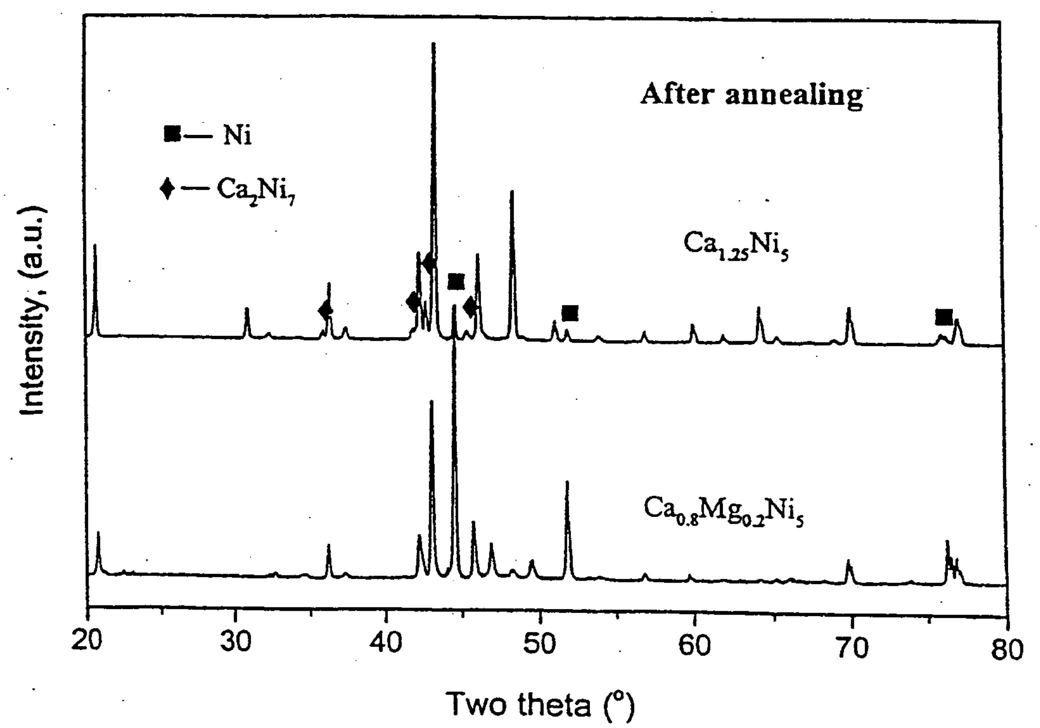

Fig. 3-5a

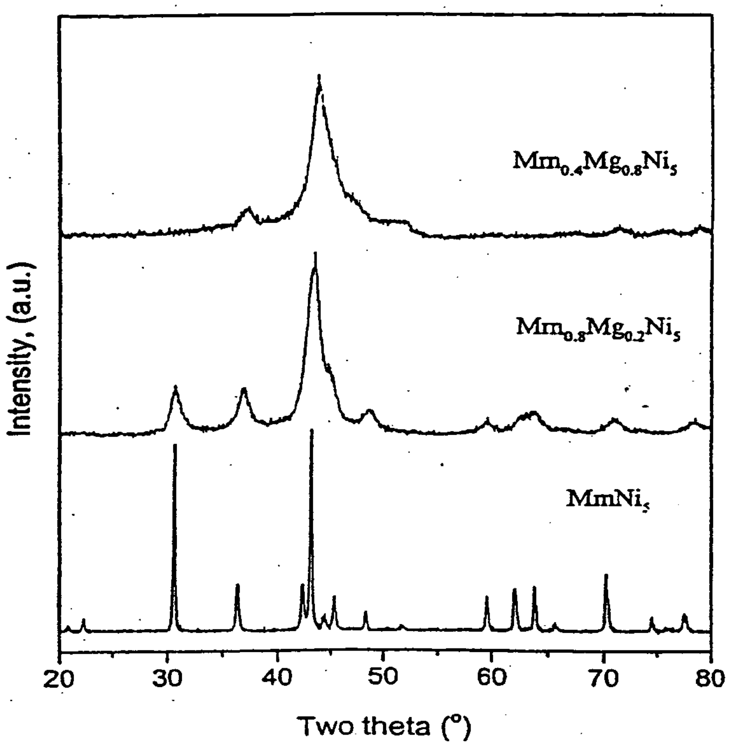


Fig. 3-5b

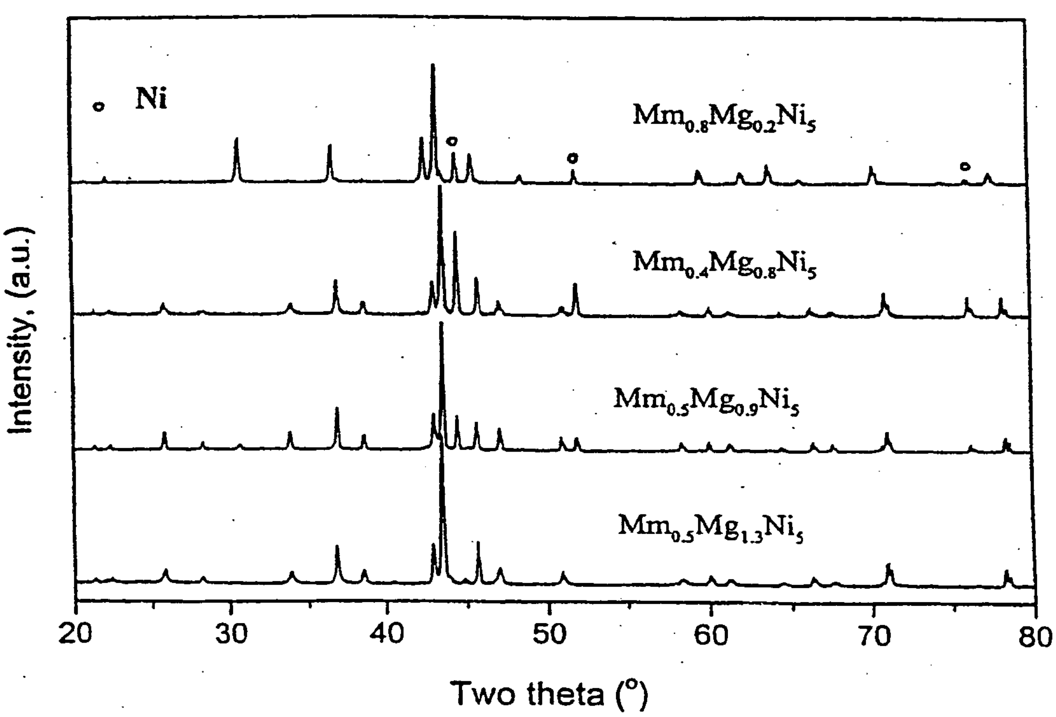

Fig. 3-6

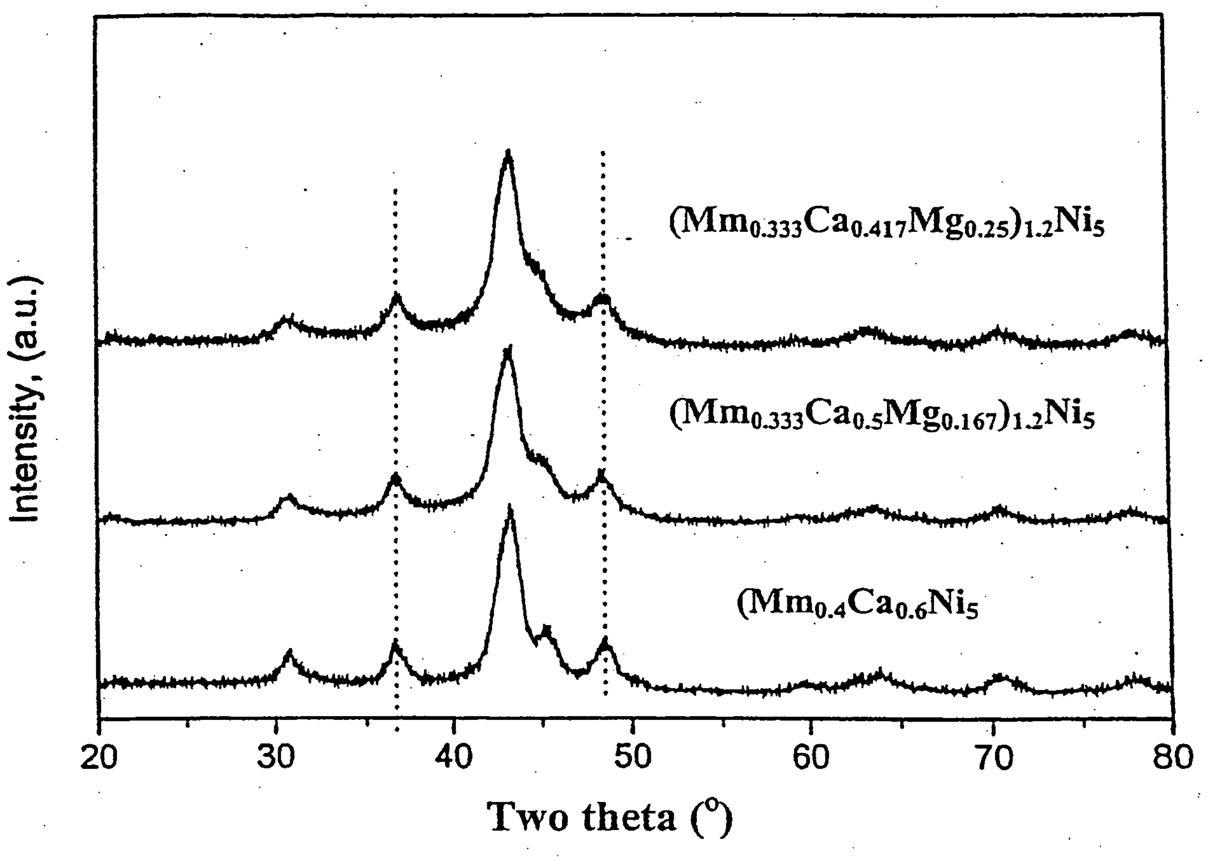
$(Mm_{0.333}Ca_{0.417}Mg_{0.25})_{1.2}Ni_5$
$(Mm_{0.333}Ca_{0.5}Mg_{0.167})_{1.2}Ni_5$
$(Mm_{0.4}Ca_{0.6}Ni_5$
Intensity, (a.u.)
20
30
40
50
60
70
80
Two theta (°)

Fig. 3-7

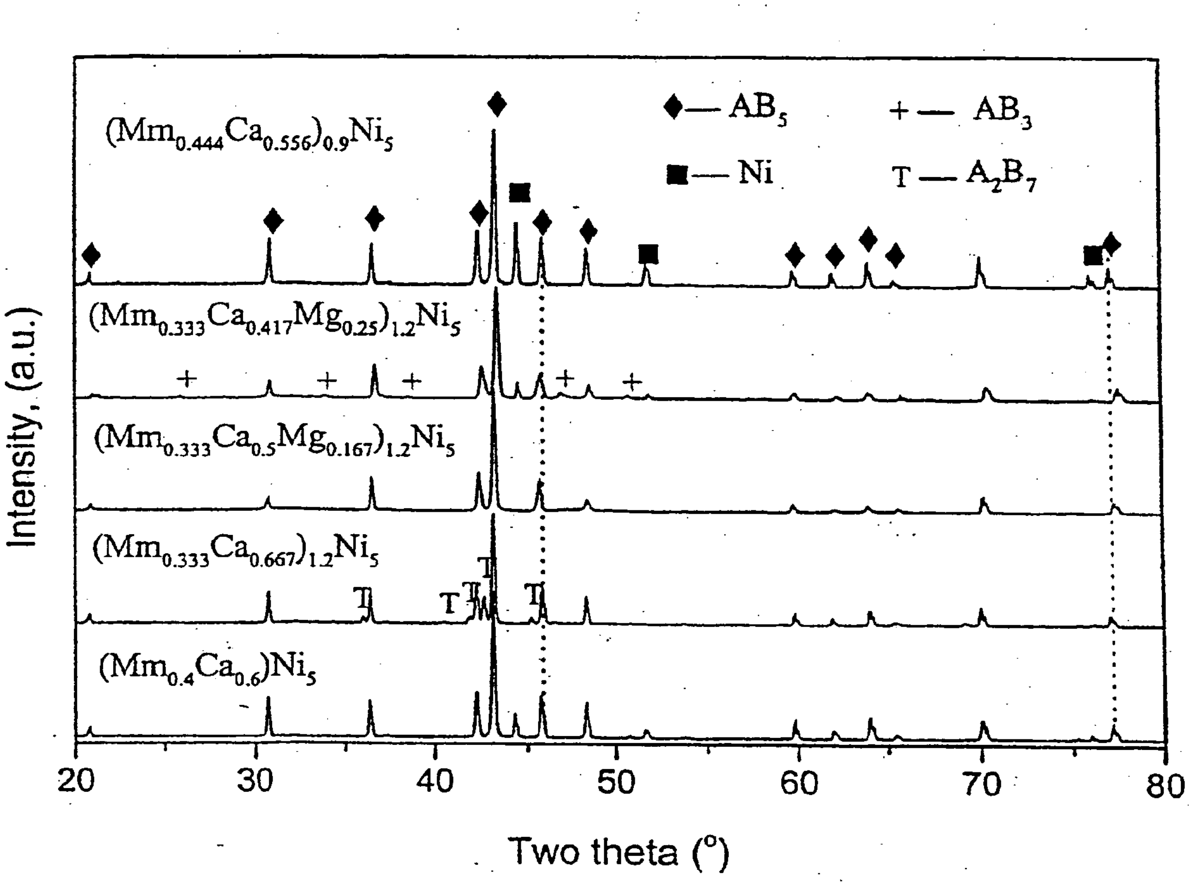
(Mm0.444Ca0.556)0.9Ni5
(Mm0.333Ca0.417Mg0.25)1.2Ni5
(Mm0.333Ca0.5Mg0.167)1.2Ni5
(Mm0.333Ca0.667)1.2Ni5
(Mm0.4Ca0.6)Ni5
♦— AB5
+— AB3
■— Ni
T— A2B7
Intensity, (a.u.)
Two theta (°)
20
30
40
50
60
70
80

Fig. 3-8

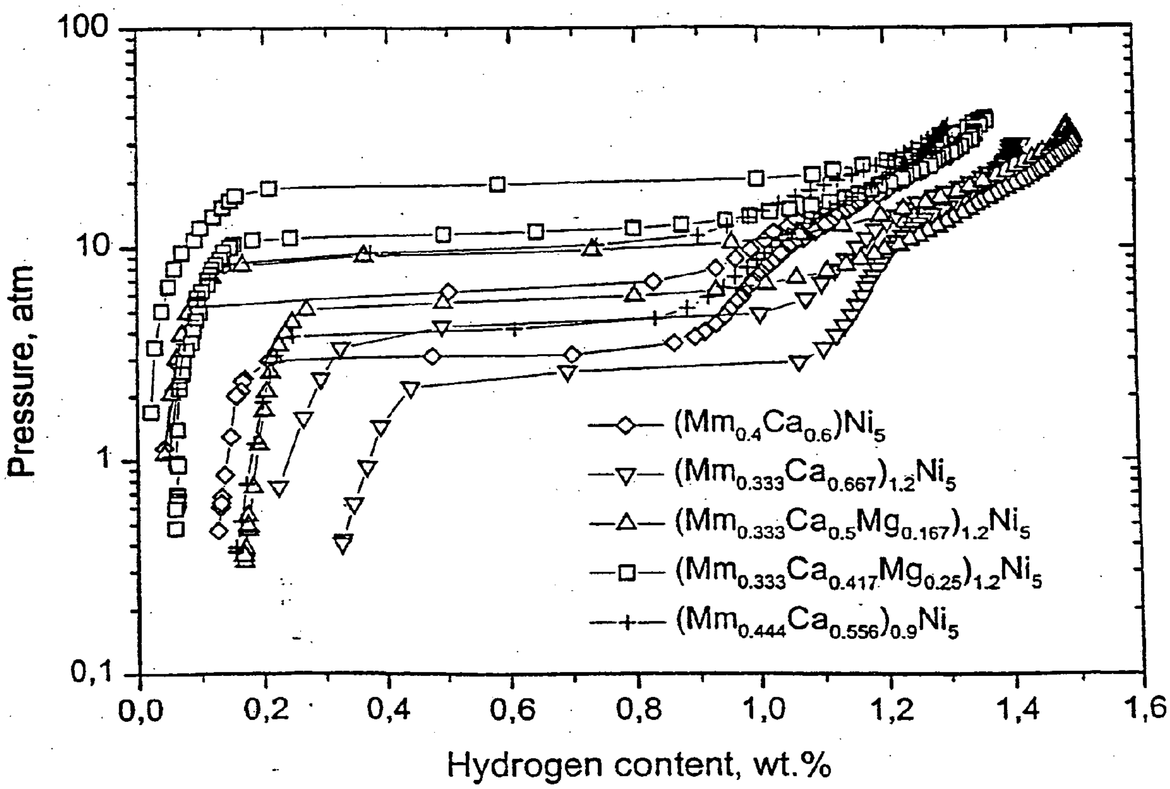
100
10
1
0,1
Pressure, atm
0,0
0,2
0,4
0,6
0,8
1,0
1,2
1,4
1,6
Hydrogen content, wt.%
(Mm0.4Ca0.6)Ni5
(Mm0.333Ca0.667)1.2Ni5
(Mm0.333Ca0.5Mg0.167)1.2Ni5
(Mm0.333Ca0.417Mg0.25)1.2Ni5
(Mm0.444Ca0.556)0.9Ni5

Fig. 3-9a

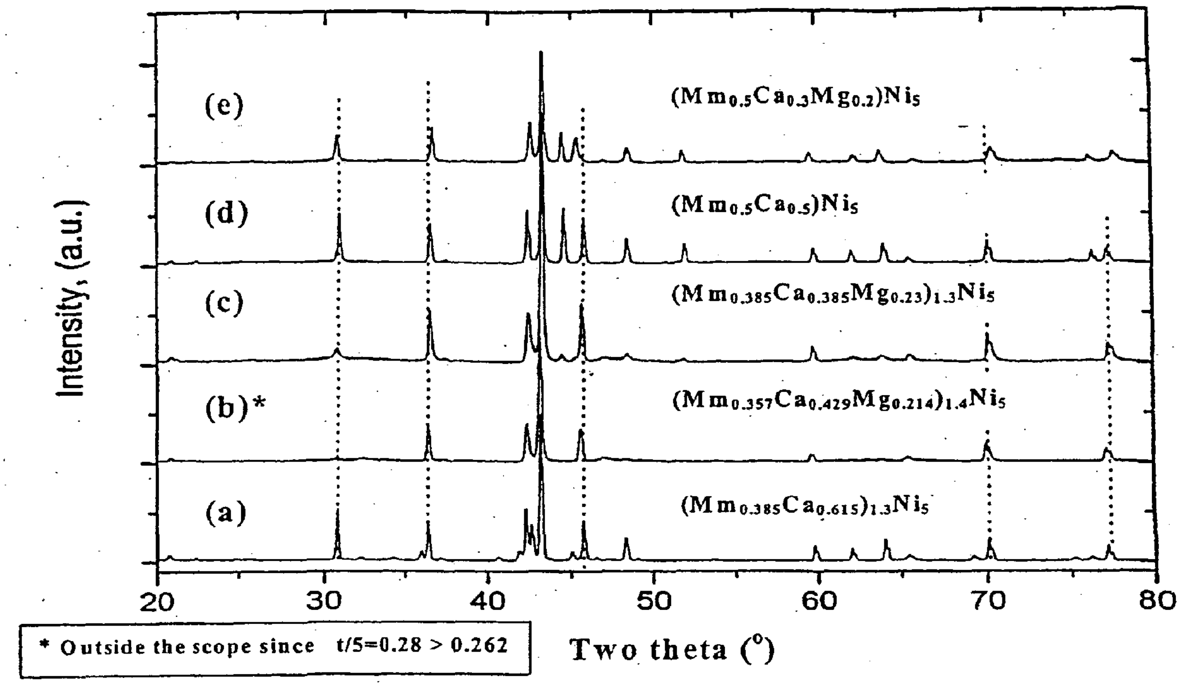


* Outside the scope since t/5=0.28 > 0.262

Fig. 3-9b

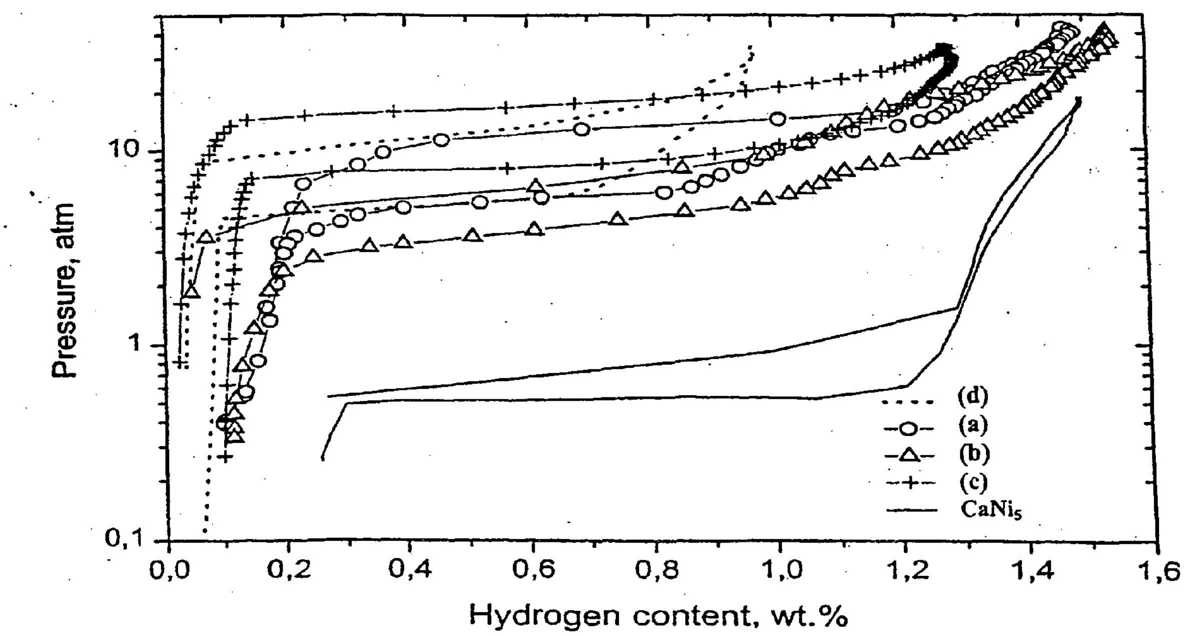

Fig. 3-10a

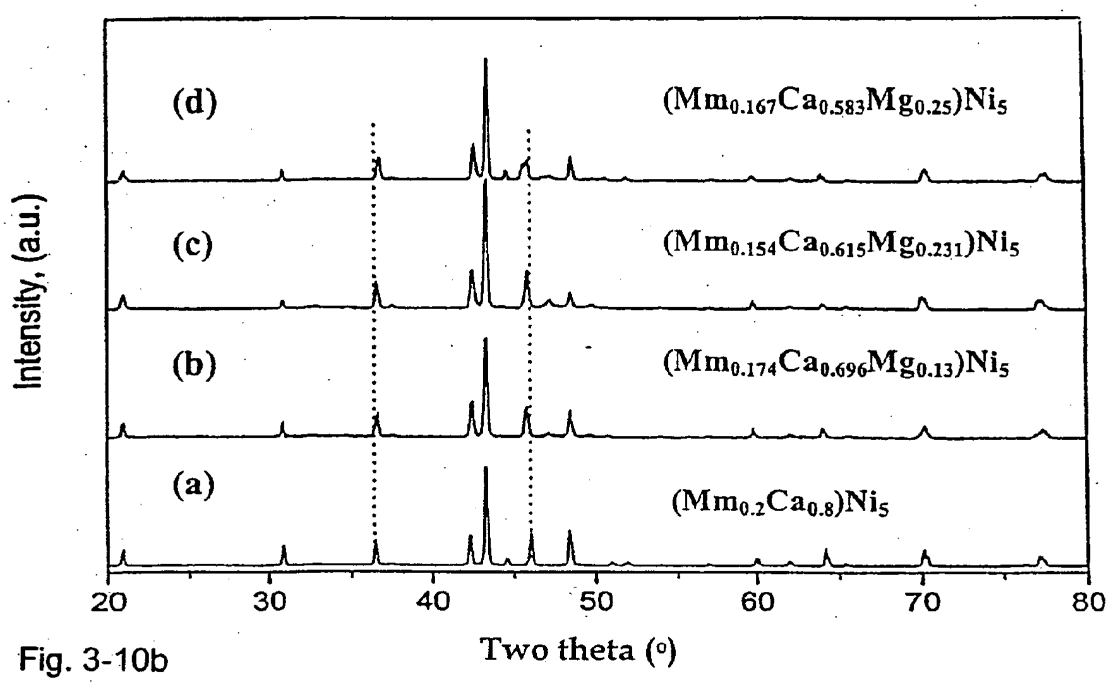


Fig. 3-10b

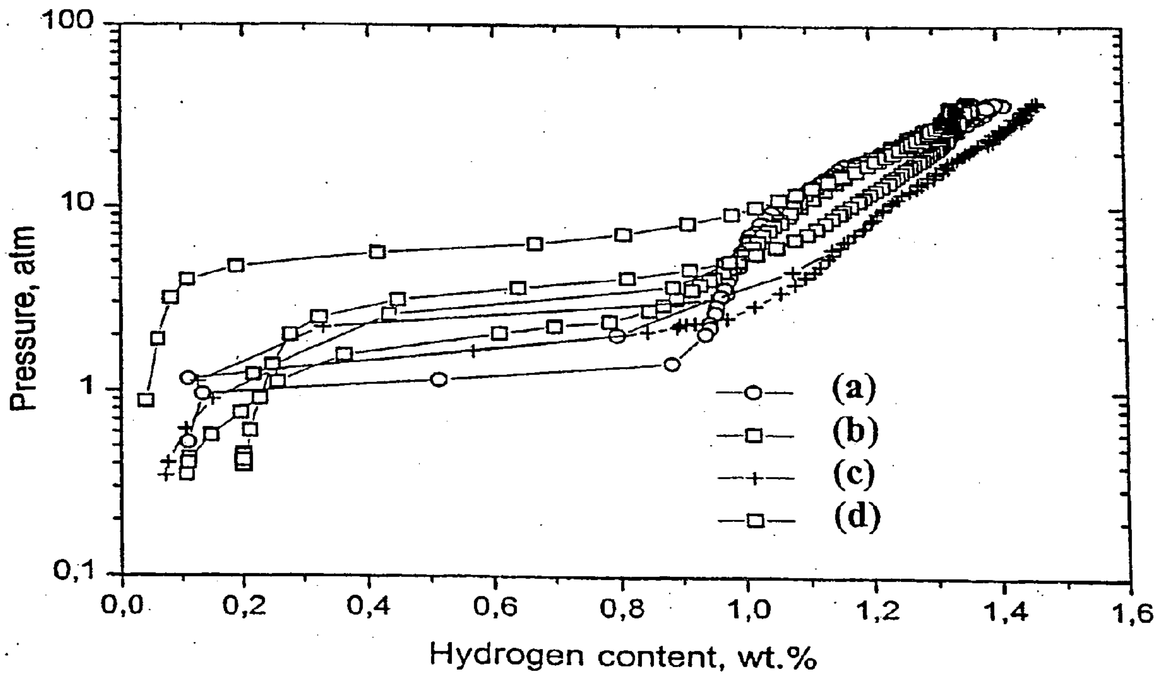

Fig. 3-11

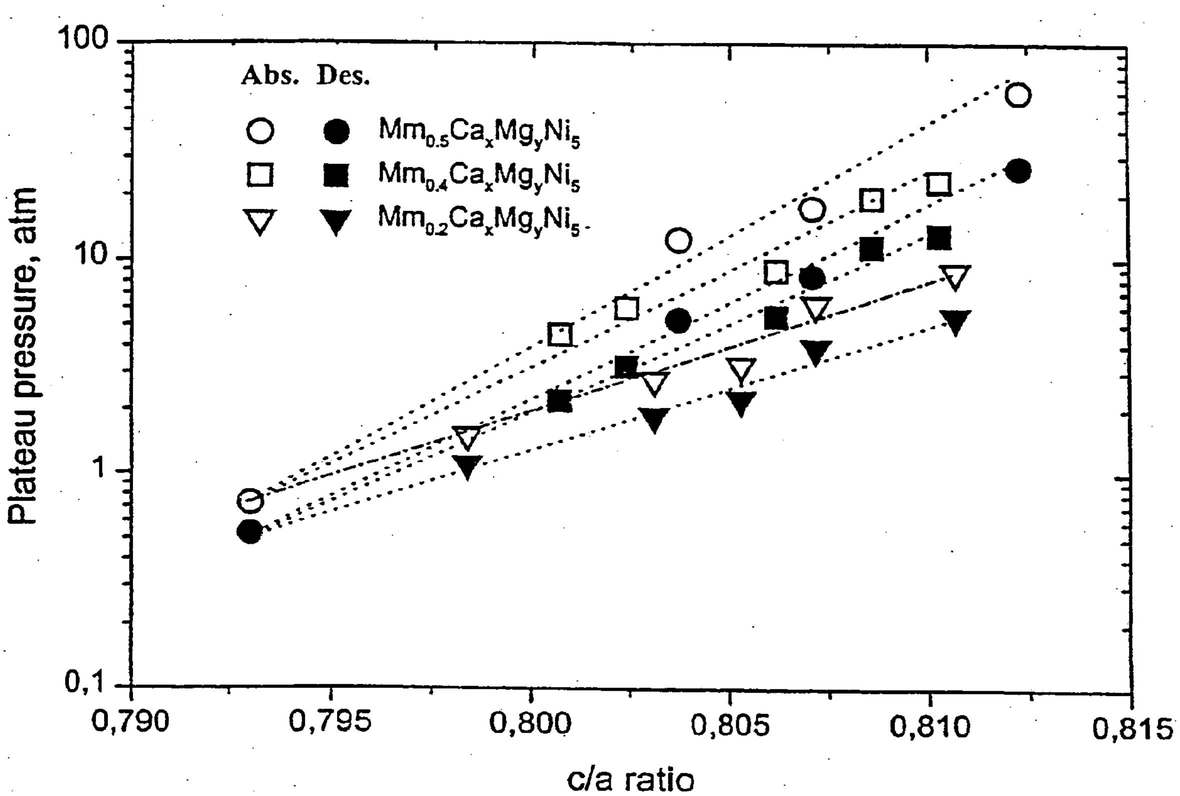
Abs. Des.
Mm0.5CaxMgyNi5
Mm0.4CaxMgyNi5
Mm0.2CaxMgyNi5
100
10
1
0,1
Plateau pressure, atm
0,790
0,795
0,800
0,805
0,810
0,815
c/a ratio

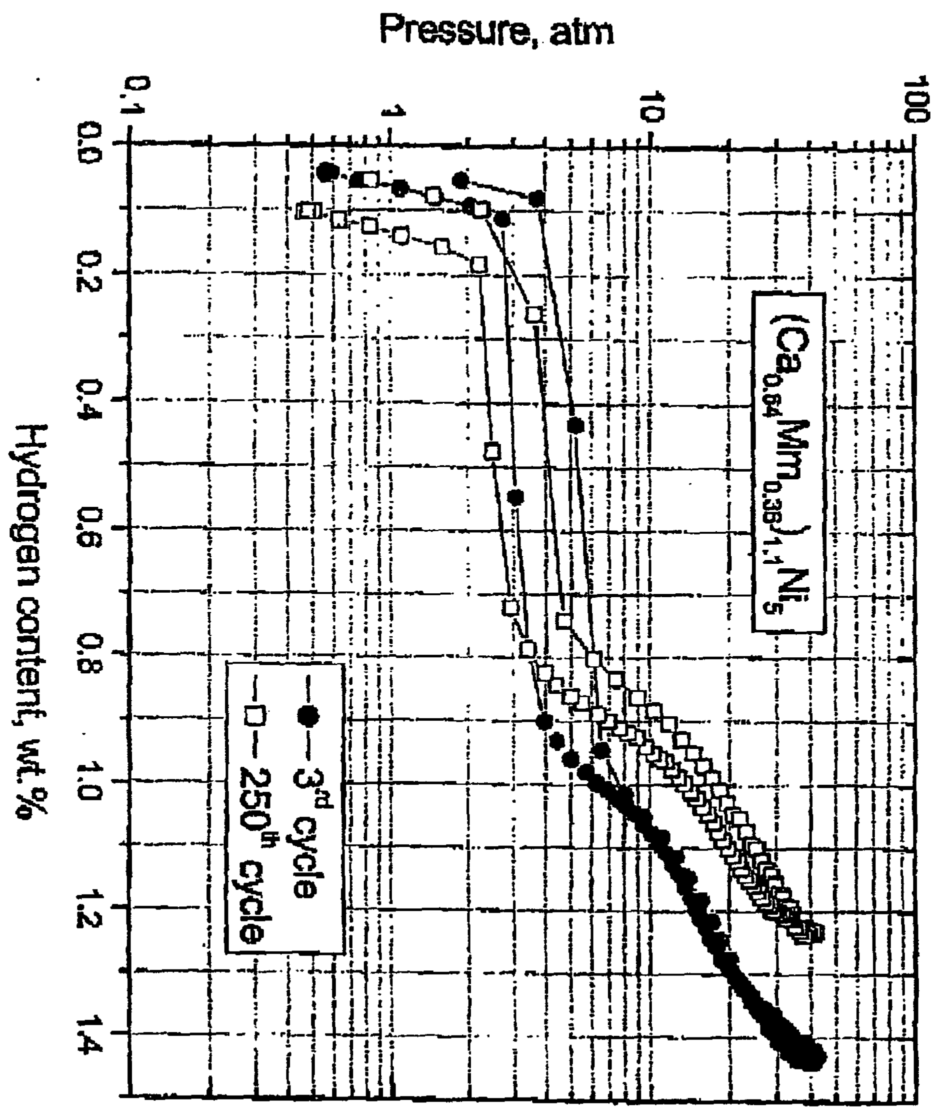

Pressure, atm
0.1
1
10
100
0.0
0.2
0.4
0.6
0.8
1.0
1.2
1.4
Hydrogen content, wt.%
$(Ca_{0.64}Mm_{0.36})_{1.1}Ni_5$
3rd cycle
250th cycle


FIG. 3-12

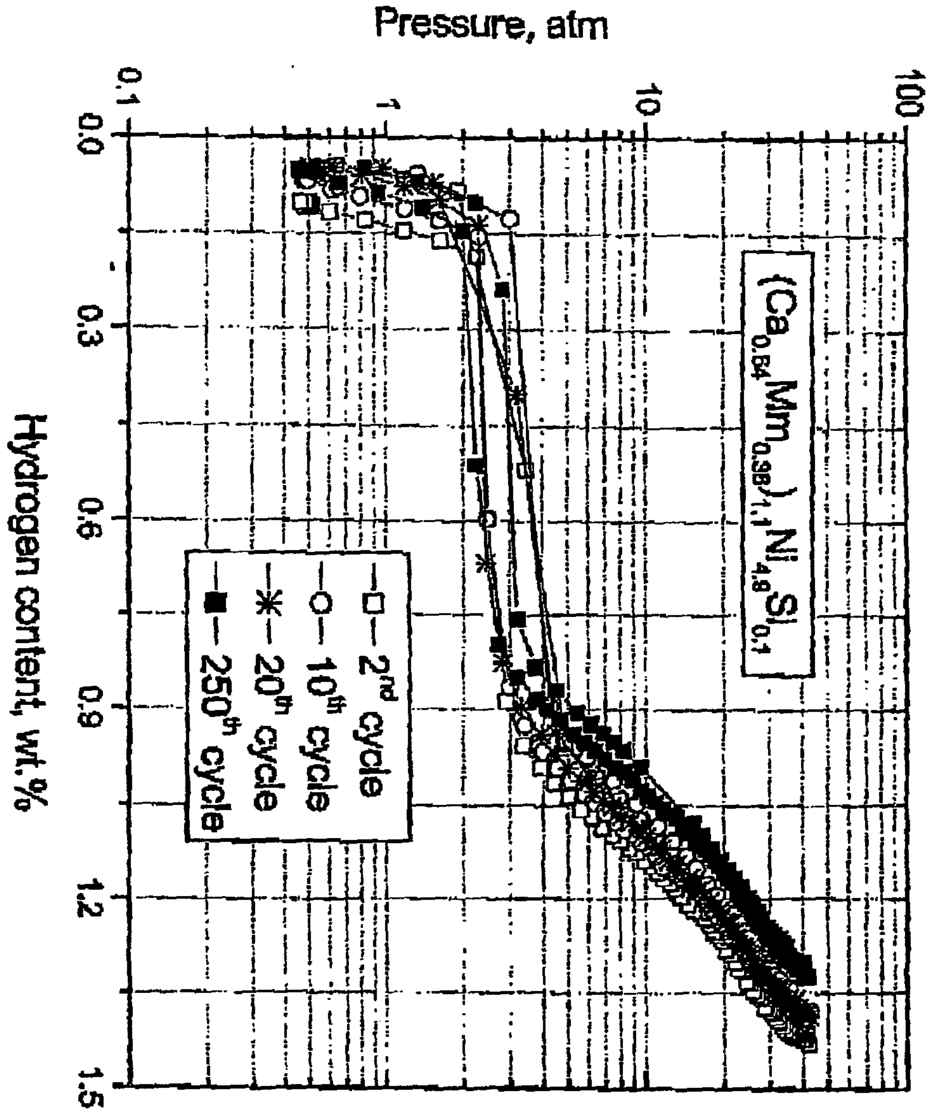
Pressure, atm
0.1
1
10
100
(Ca0.64Mm0.36)1.1Ni4.9Si0.1
0.0
0.3
0.6
0.9
1.2
1.5
Hydrogen content, wt.%
2nd cycle
10th cycle
20th cycle
250th cycle

FIG. 3-13

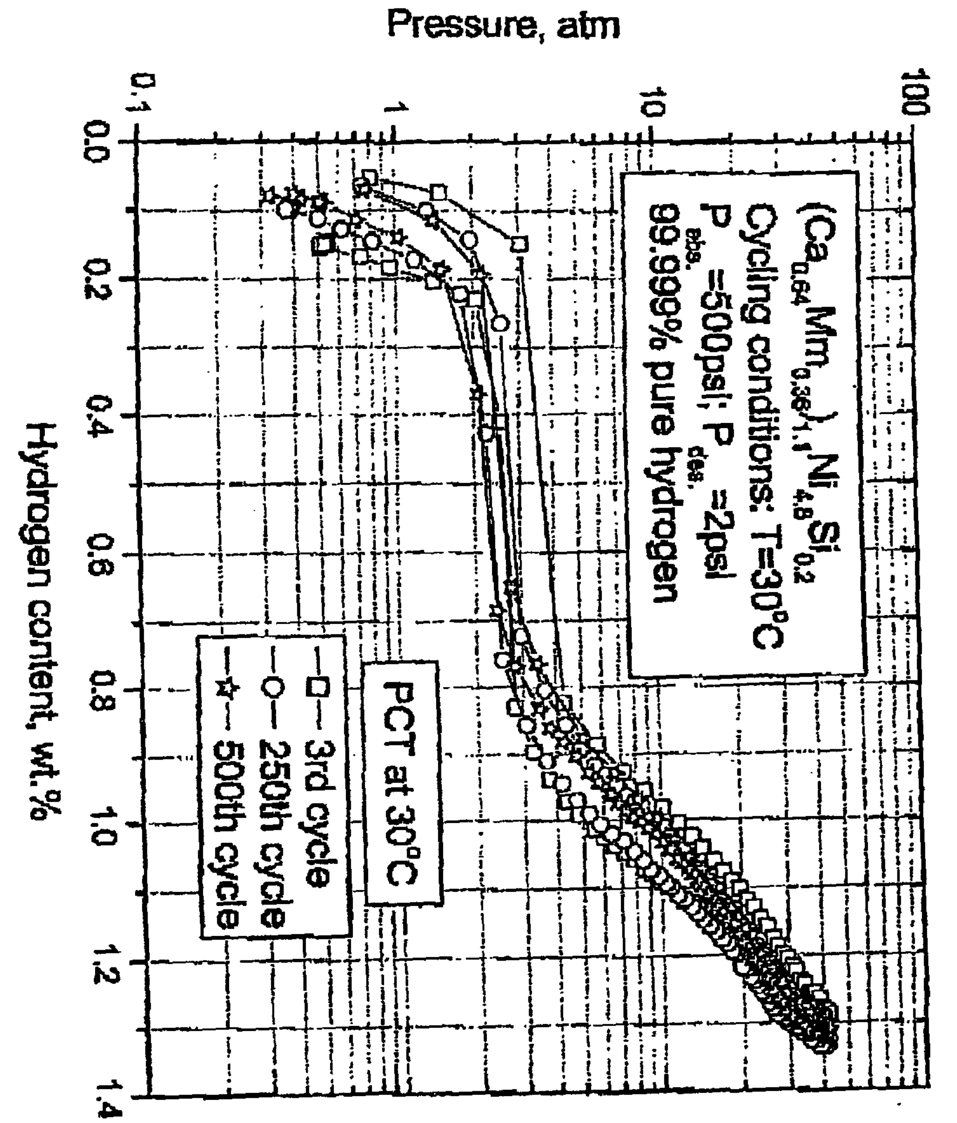
Pressure, atm
0.1
1
10
100
(Ca0.64Mm0.36)1.1Ni4.8Si0.2
Cycling conditions: T=30°C
Pabs.=500psi; Pdes.=2psi
99.999% pure hydrogen
PCT at 30°C
3rd cycle
250th cycle
500th cycle
0.0
0.2
0.4
0.6
0.8
1.0
1.2
1.4
Hydrogen content, wt.%

FIG. 3-14

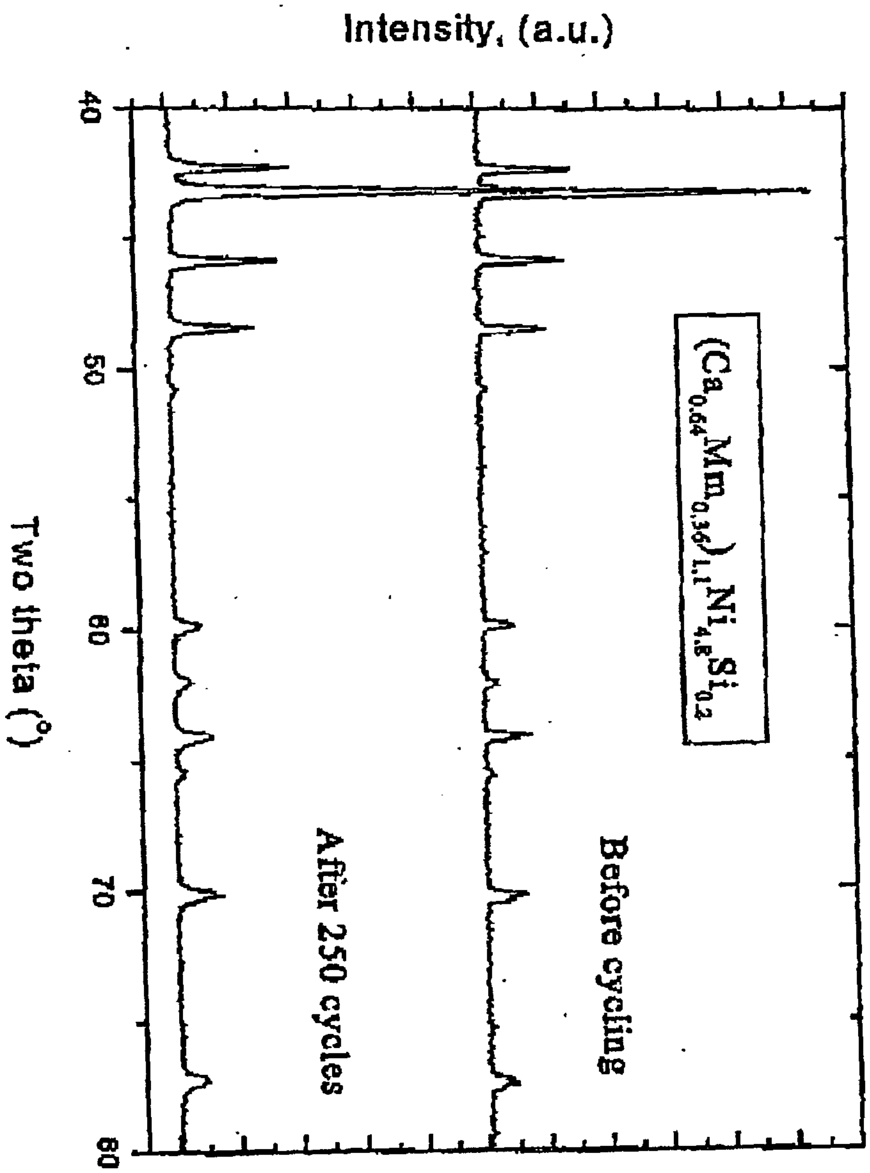
Intensity, (a.u.)
Two theta (°)
40
50
60
70
80
$(Ca_{0.64}Mm_{0.36})_{1.1}Ni_{4.8}Si_{0.2}$
Before cycling
After 250 cycles

FIG. 3-15

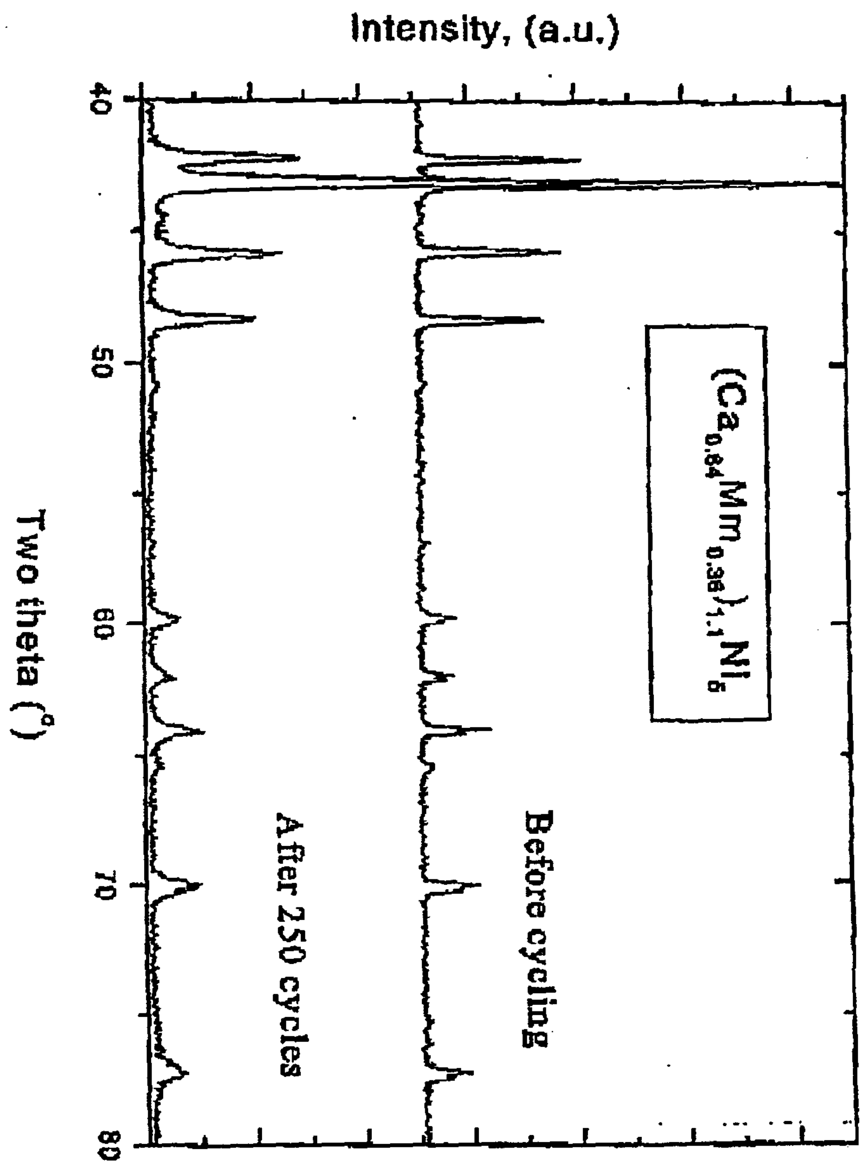
Intensity, (a.u.)
Two theta (°)
40
50
60
70
80
$(Ca_{0.64}Mm_{0.36})_{1.1}Ni_5$
Before cycling
After 250 cycles

FIG 3-16

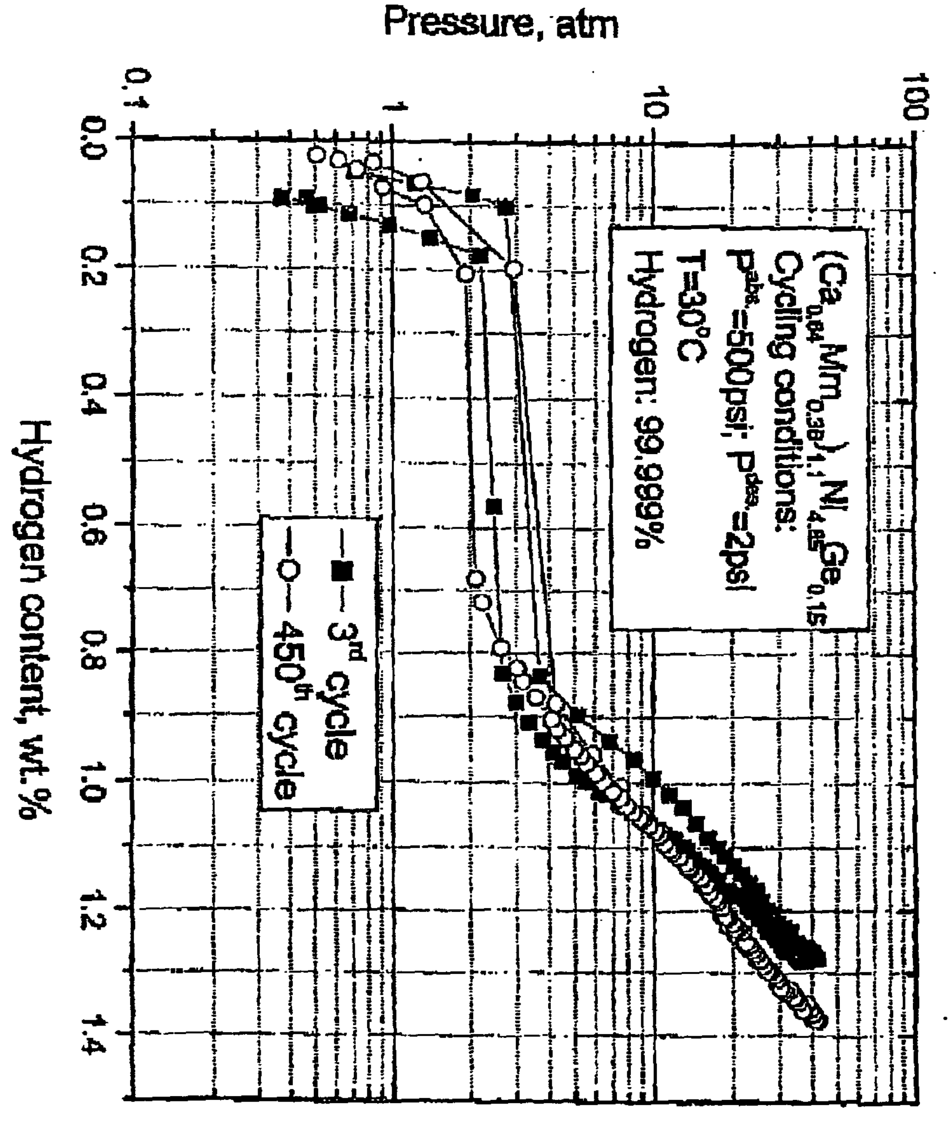
Pressure, atm
0.1
1
10
100
0.0
0.2
0.4
0.6
0.8
1.0
1.2
1.4
Hydrogen content, wt.%
$(Ca_{0.64}Mm_{0.36})_{1.1}Ni_{4.85}Ge_{0.15}$
Cycling conditions:
$P^{abs}$=500psi; $P^{des}$=2psi
T=30°C
Hydrogen: 99.999%
—■— 3rd cycle
—○— 450th cycle

FIG. 3-17

European Patent Office

# EUROPEAN SEARCH REPORT

Application Number
EP 04 25 5126

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | WO 03/072838 A (HERA HYDROGEN STORAGE SYSTEMS ; LIANG GUOXIAN (CA); SCHULZ ROBERT (CA)) 4 September 2003 (2003-09-04) * claim 1 * | 1-44 | H01M4/38 |
| P,X | CA 2 456 823 A (HERA HYDROGEN STORAGE SYSTEMS) 4 August 2004 (2004-08-04) * claim 1 * | 1-44 | |
| X | PATENT ABSTRACTS OF JAPAN vol. 2002, no. 02, 2 April 2002 (2002-04-02) -& JP 2001 303160 A (SUMITOMO METAL IND LTD), 31 October 2001 (2001-10-31) * abstract * | 1-44 | |
| X | EP 0 892 451 A (TOKYO SHIBAURA ELECTRIC CO) 20 January 1999 (1999-01-20) * example 146 * | 1-44 | |
| | | | TECHNICAL FIELDS SEARCHED (Int.Cl.7) |
| | | | H01M |

The present search report has been drawn up for all claims

| Place of search | Date of completion of the search | Examiner |
|---|---|---|
| The Hague | 21 December 2004 | Gregg, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 25 5126

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2004

| Patent document cited in search report | | Publication date | Patent family member(s) | | | Publication date |
|---|---|---|---|---|---|---|
| WO 03072838 | A | 04-09-2003 | CA | 2373553 | A1 | 27-08-2003 |
| | | | WO | 03072838 | A1 | 04-09-2003 |
| | | | EP | 1478787 | A1 | 24-11-2004 |
| CA 2456823 | A | 04-08-2004 | CA | 2418332 | A1 | 04-08-2004 |
| | | | CA | 2456823 | A1 | 04-08-2004 |
| | | | US | 2004247481 | A1 | 09-12-2004 |
| JP 2001303160 | A | 31-10-2001 | NONE | | | |
| EP 0892451 | A | 20-01-1999 | CN | 1207590 | A ,B | 10-02-1999 |
| | | | EP | 0892451 | A2 | 20-01-1999 |
| | | | JP | 11323469 | A | 26-11-1999 |
| | | | KR | 276016 | B1 | 15-12-2000 |
| | | | US | 6130006 | A | 10-10-2000 |

EPO FORM P0459

For more details about this annex : see Official Journal of the European Patent Office, No. 12/82